# EUROPEAN PATENT APPLICATION

(11) **EP 4 832 235 A1**
(43) Date of publication of application: **28.10.2026**
(21) Application number: 26167696.9
(22) Date of filing: 25.03.2026
(51) Int. Cl.: H01M 50/533, H01M 50/536, H01M 50/538, H01M 50/54, H01M 50/528

(54) **SECONDARY BATTERY**

(30) Priority: 22.04.2025 KR 20250052610; 26.11.2025 KR 20250182411; 26.12.2025 KR 20250210849; 12.02.2026 KR 20260028381; 24.03.2026 KR 20260052537
(71) Applicant: LG Energy Solution, Ltd., Seoul 07335 (KR)
(72) Inventor: LEE, Hyun Hee, 34122 Daejeon (KR); PARK, Sang Joon, 34122 Daejeon (KR); SUH, Hyun Jung, 34122 Daejeon (KR)
(74) Representative: Goddar, Heinz J.

(57) **Abstract**

The present disclosure relates to a secondary battery capable of reducing a risk of damage to a separator. The secondary battery according to the present disclosure includes an electrode assembly and a current collector. The current collector includes a current collecting unit and a pole unit. According to the present disclosure, an assembly process of the secondary battery may be simplified.

## Description

### CROSS-REFERENCE TO RELATED APPLICATION

This application claims priority to Korean Patent Application No. 10-2025-0052610, 10-2025-0182411^{,} 10-2025-0210849, 10-2026-0028381 and 10-2026-0052537.

### TECHNICAL FIELD

The present disclosure relates to a secondary battery, and more particularly, to a secondary battery capable of reducing a risk of damage to a separator.

### RELATED ART

Recently, as the demand for portable electronic devices has rapidly increased and the development of electric vehicles, energy storage batteries, robots, satellites, and the like has become more active, intensive research has been conducted on high-performance secondary batteries capable of repeated charging and discharging.

Secondary batteries may be classified, according to the shape of a battery case, into a can-type secondary battery, in which an electrode assembly is embedded in a metal can, and a pouch-type secondary battery, in which an electrode assembly is embedded in a pouch formed of an aluminum laminate sheet. The can-type secondary battery may also be classified into a cylindrical secondary battery and a prismatic secondary battery according to the shape of the metal can.

In a secondary battery, an electrode tab of an electrode assembly and a current collector are coupled to each other by welding. When the electrode tab is coupled to the current collector, the electrode tab is bent in a bending direction to increase a contact area between the electrode tab and the current collector, after which the current collector is seated on and welded to an upper portion of the electrode tab.

However, in this case, there is a risk that a separator may be damaged during a process of welding a current collector to an electrode tab disposed under the current collector. In addition, as a secondary battery increases in capacity, the number of electrode tabs that are required to be welded at one time increases, and thus, there is a risk that electrode tabs spaced apart from the current collector may not be properly welded.

Accordingly, there is a need to develop a secondary battery capable of reducing a risk of damage to the separator and stably welding a large number of electrode tabs to a current collector. In addition, there is a need to develop a secondary battery capable of simplifying an assembly process.

### SUMMARY

The present invention is defined according to the appended independent claim(s).

There is provided a secondary battery. The secondary battery may comprise an electrode assembly. The electrode assembly may comprise electrode tabs protruding outwardly. The secondary battery may comprise a current collector disposed on the electrode assembly. A first electrode tab and/or a second electrode tab of the electrode tabs may be coupled to the current collector. The first electrode tab and the second electrode tab may be spaced apart from each other on the current collector. The secondary battery may comprise a pole unit in physical contact with the current collector. The pole unit may extend so as to conduct electric current in a direction that is different from a direction of electric current flowing along a path between the electrode tabs and the pole unit.

The claimed subject matter may provide the following technical effects. The secondary battery as disclosed herein may allow for manufacturing with a reduced risk for damaging the electrode assembly while welding electrode tabs to the current collector. Moreover, the secondary battery as described herein may allow for welding a large number of electrode tabs to the current collector in a stable and compact manner. Furthermore, the secondary battery as described herein may increase stability and robustness of the electrical connection to the current collector and to the electrode assembly. Furthermore, the secondary battery as described herein facilitates the manufacturing.

In addition, according to the claimed subject matter, redirecting electric current from the electrode assembly through a housing of the secondary battery may be facilitated. In particular, the claimed subject matter allows for reduction of space requirements, particularly by using a component that allows for redirecting electric current from the electrode tabs to an outside of the secondary battery through the pole unit. An increased compactness of the secondary battery as disclosed herein also allows for increasing energy density in a device employing such a secondary battery. With the first and second electrode tabs being coupled to the current collector, which is in physical contact with the pole unit, a cross-section for an electric current from and to the electrode assembly may be increased, thus decreasing electrical resistance of the secondary battery. Hence, the secondary battery as disclosed herein may provide an increased safety for use. Furthermore, due to its compactness and the component for redirecting electric current from the electrode assembly to the outside, the secondary battery allows for implementation in (or of) a battery cell that has an enlarged thickness in comparison to conventional battery cells, while satisfying high safety standards and high energy density demands (i.e., with decreased space requirements).

The secondary battery as used herein may refer to a battery cell, a subunit of a battery cell or any other suitable unit for organizing one or more battery cells. The secondary battery may refer to any one of a pouch-type battery, a cylindrical battery and a prismatic battery, or any other suitable type of battery. While specific examples are described below with reference to drawings that show prismatic battery cells, the present invention is not limited thereto. Nonetheless, the electrode assembly may comprise any one, some or all of the features of the electrode assembly as described below with reference to the drawings, unless technically inappropriate or indicated otherwise.

The electrode assembly may comprise a stack one or more layers of positive electrode, one or more layers of negative electrode, and one or more layers of separator. Each layer of separator may be interposed between a layer of positive negative electrode and an adjacent layer of negative electrode. The electrode assembly may be dimensioned and shaped so as to fit into an accommodation space of the given battery cell, e.g., into (an accommodation portion of) a pouch of a pouch-type battery cell, into a cylindrical housing (e.g., case or can) of a cylindrical battery cell, or into a prismatic housing (e.g., case or can) of a prismatic battery cell. The electrode assembly may comprise one positive electrode or a plurality of positive electrodes. The electrode assembly may comprise one negative electrode or a plurality of negative electrodes.

The electrode assembly may be provided by laying said layers upon one another in a specific order (for example, a first layer of separator, a layer of negative electrode, a second layer of separator and a layer of positive electrode) and winding said layers altogether around a winding axis (in a winding direction). Accordingly, the electrode assembly may have a spiral-like structure, which approximates a cylindrical symmetry. The electrode assembly may comprise one or more such wound rolls of positive and negative electrodes and separator(s). In a wound structure, a thickness or a thickness direction of the electrode assembly may be determined in a radial direction with respect to a cylindrical symmetry where the winding axis forms the axial direction.

The electrode assembly may be provided by laying the aforementioned layers upon one another in a specific order (for example, a first layer of separator, a layer of negative electrode, a second layer of separator and a layer of positive electrode) and winding said layers altogether around either two winding axes (cores) that are spaced apart from each other, or around a plate-shaped core. Accordingly, the electrode assembly may have a structure of an oblate wound roll. The electrode assembly may comprise one or more such wound rolls of positive and negative electrodes and separator(s). In a wound structure, a thickness or a thickness direction of the electrode assembly may be determined in a direction that is perpendicular to a plane that spans between the two winding axes, or perpendicular to a major surface of the plate-shaped core.

Herein, the term major surface may be used to indicate a surface having a larger areal extent than other surfaces of the same component, such as the current collector. The major surface may be used to refer a surface defining a predominant areal extent of a component, such as the current collector. Specifically, the major surface may indicate herein one of opposite surfaces defining the predominant areal extent of a component, such as the current collector.

The electrode assembly may be provided by laying multiple layers of negative electrode, multiple layers of positive electrode and multiple layers of separator upon one another in a specific order (e.g., repeatedly stacking a layer of separator, a layer of negative electrode and a layer of positive electrode in this order upon one another) up to a required thickness (in a stacking direction) of the electrode assembly. Optionally, the electrode assembly may comprise a continuous layer of separator, and one or more layers of positive electrode and one or more layers of negative layers may be laid at respective positions (on respective sides) onto the continuous layer of separator, which is folded, for example in a meandering manner (which may be referred to as z-folding), so as to form a stack with the positive and negative electrodes arranged therein. The electrode assembly may comprise one or more stacks of positive and negative electrodes and separator(s). In a stacked structure, a thickness of the electrode assembly may be determined in a stacking direction of the electrodes and separator(s).

The electrode assembly may comprise two, three or more sets of electrodes and separator(s). The electrodes and separator(s) of each of the sets may be either stacked in a predetermined manner as described above and known in the art, or laid upon one another in a specific order and wound to form a wound roll as described above and known in the art. The sets of electrodes and separator(s) may be collectively referred to as electrode assembly. Each of the sets of electrodes and separator(s) may be provided with electrode tabs for each polarity. In some examples, each of the sets of electrodes and separator(s) may be referred to as an electrode portion.

Herein, an electrode portion as used herein may refer to a portion of the electrode assembly including a plurality of electrodes, electrode members (and/or electrode elements) of both polarities and separators interposed therebetween. The electrode may be formed as a stacked structure of a plurality of electrodes, electrode members (and/or electrode elements) of both polarities and separators interposed therebetween. Alternatively, the electrode may be formed as a wound structure of a plurality of electrodes, electrode members (and/or electrode elements) of both polarities and separators interposed therebetween.

The electrode assembly may comprise electrode tabs protruding outwardly. The electrode tabs may be each provided as an electrically conductive body configured to provide an electric current path to and from the electrode assembly. Any one, some or each of the electrode tabs may be provided as a thin elongated strip made of an electrically conductive material. The electrode tabs may be made of a metal, such as copper, aluminum or steel. The electrode tabs may comprise any one, some or all of the features of the electrode tabs as described below with reference to the drawings.

The electrode tabs may be electrically and/or physically connected to one of the positive and negative electrodes of the electrode assembly. Any one, some or each of the electrode tabs may be formed integrally with (i.e., be an integral part of) the respective one of the positive and negative electrodes. For example, any one, some or each of the electrode tabs may be formed integrally (i.e., as a single piece) with an electrically conductive substrate of the respective electrode (i.e., one among the positive and negative electrodes). Alternatively or additionally, any one, some or each of the electrode tabs may be provided separately (i.e., as a separate and individual piece) from the electrodes and attached to (i.e., physically connected to) the respective one of the positive and negative electrodes. For example, an electrode (i.e., one among the positive and negative electrodes) may be provided with an uncoated portion in which an electrically conductive substrate is exposed without being coated with an electrode active material, and one of the electrode tabs may be attached, for example by welding, to said uncoated portion of the electrode.

The electrode tabs may be arranged, shaped and dimensioned so as to protrude outwardly. Here, the electrode tabs protrude outwardly may mean that the electrode tabs extend from (out of) a remaining body of the electrode assembly. Accordingly, the electrode tabs may extend outward from (a remainder, a body part or a bulk part, or an electrode portion of) the electrode assembly. The electrode tabs may protrude outwardly in an upward direction. The upward direction may be parallel to the winding axis of the electrode assembly. The upward direction may be perpendicular to the thickness direction of the electrode assembly. The upward direction may be a direction from the electrode assembly toward the current collector, the current collector being arranged on, or on top of or above, the electrode assembly.

The number and shapes of the electrode tabs may be determined by the size, shape and type of the secondary battery (e.g., pouch-type, cylindrical or prismatic battery cell, or a battery cell of another type). Any one, some or each of the negative electrodes of the electrode assembly may be provided with a respective electrode tab or a respective plurality of electrode tabs. Any one, some or each of the positive electrodes of the electrode assembly may be provided with a respective electrode tab or a respective plurality of electrode tabs. Here, it is understood that the electrode assembly may comprise one positive electrode or a plurality of positive electrodes; the electrode assembly may comprise one negative electrode or a plurality of negative electrodes.

The secondary battery may comprise a current collector disposed on the electrode assembly. The current collector may be arranged, shaped and dimensioned so as to provide an electric current path from and to the electrode assembly. In particular, the current collector may be configured so as to provide an electric current path between the electrode assembly and the pole unit as described in detail below. The current collector may comprise any one, some or all of the features of the current collector as described below with reference to the drawings, unless technically inappropriate or indicated otherwise.

The current collector may be made of an electrically conductive material. The current collector may be made of, or contain, metal. The metal may include, for example, copper, aluminum or steel. The current collector may be provided as a plate that extends between two opposite major surfaces. The major surfaces of the current collector may be substantially parallel to each other. The current collector may be shaped so that any one of the major surfaces of the current collector in one particular portion is inclined and/or curved with respect to another portion adjacent thereto.

The current collector may comprise a current collecting unit. The current collecting unit may be used herein to indicate a part of the current collector onto which the electrode tabs are welded. The current collecting unit may comprise any one, some or all of the features of the current collecting unit as described below with reference to the drawings, unless technically inappropriate or indicated otherwise.

The current collector may comprise a connection portion. The connection portion may be used herein to indicate a part of the current collector that includes the opening and is coupled to (directly or physically connected to) the pole unit. The connection portion may comprise any one, some or all of the features of the connection portion as described below with reference to the drawings, unless technically inappropriate or indicated otherwise.

A first electrode tab and/or a second electrode tab of the electrode tabs may be coupled to the current collector. At least two different electrode tabs, the first electrode tab and the second electrode tab, may be coupled to the current collector in a manner to provide electrical and physical connection to the current collector. The first electrode tab and/or the second electrode tab may be directly connected to the current collector. In other words, the first electrode tab and/or the second electrode tab may be physically attached to the current collector. The first electrode tab and the second electrode tab may be connected to the same electrode or to electrodes of the same polarity (i.e., either to positive electrodes or to negative electrodes) of the electrode assembly.

More generally, a part or all of the electrode tabs may be coupled to the current collector. As described in detail with reference to the drawings below, the electrode tabs may be combined into one or more bundles, and the one or more bundles may be coupled to (directly connected to, physically attached to) the current collector. In such a case, the term first electrode tab may be used to designate one of the bundles coupled to the current collector, and the term second electrode tab may be used to designate another one of the bundles coupled to the current collector. The first electrode tab and the second electrode tab may each implement any one, some or each of the features of the electrode tabs disclosed herein and in particular as described below with reference to the drawings, unless indicated otherwise or technically inappropriate.

The electrode assembly may be configured so that the electrode tabs connected to electrodes of a first polarity protrude from one side of the electrode assembly, and the electrode tabs connected to electrodes of a second polarity, that is different from (opposite to) the first polarity, protrude from another side that is opposite to the one side of the electrode assembly. In such an example, one current collector may be provided on the one side of the electrode assembly, and another current collector may be provided on the opposite side of the electrode assembly. The current collector provided on either side of the electrode assembly may comprise any one, some or all of the features of the current collector as disclosed herein, in particular as described below with reference to the drawings.

Alternatively, the electrode assembly may be configured so that the electrode tabs connected to electrodes of a first polarity protrude from one side of the electrode assembly, and the electrode tabs connected to electrodes of a second polarity, that is different from (opposite to) the first polarity, protrude from the same side of the electrode assembly. In such an example, two current collectors may be provided on said one side of the electrode assembly in a manner spaced apart from each other. Any one of the current collectors in such an example may comprise any one, some or all of the features of the current collector as disclosed herein, in particular as described below with reference to the drawings.

Furthermore, it is understood that the electrode tabs of both polarities may protrude from two opposite sides of the electrode assembly at the same time, so that each of said two opposite sides of the electrode assembly may be suited to be provided with current collectors of both polarities.

The first electrode tab and the second electrode tab may be spaced apart from each other on the current collector. Accordingly, the first electrode and the second electrode are coupled to different portions of the current collector that are spaced apart from each other. In other words, the first electrode tab and the second electrode tab may be coupled to (physically attached to, directly connected to) the current collector at separate positions. As mentioned, the first electrode tab and the second electrode tab may each represent a bundle of electrode tabs. Accordingly, the secondary battery as disclosed herein may allow for increasing a contact area between the electrodes and the current collector and thus increasing the effective cross-section for electric current. Also, said structure allows for a large number of electrode tabs to be coupled to the current collector without loss of compactness.

The first and second electrode tabs may be disposed spaced apart from each other by a predetermined distance on the current collector. A separation distance between the first and second electrode tabs may be 5 to 15% of a size of the current collector in a direction in which the separation distance is measured. If the separation distance between the plurality of first and second electrode tabs is smaller than 5% of the said size of the current collector, burrs from welding the first and second electrode tabs to the current collector may accumulate between the electrode tabs, so that the weld result may become bulky and non-uniform. If the separation distance between the first and second electrode tabs exceeds 15% of said size of the current collector, there may not be enough room left for reasonably arranging the pole unit and the electrode tabs on the current collector.

The secondary battery may comprise a pole unit in physical contact with the current collector. As detailed below, the pole unit may be provided as a separate piece and attached to the current collector, in particular in a manner as described below with reference to the drawings. However, the disclosure is not limited thereto, and the pole unit may be provided integrally with the current collector (while organizationally considered not to be a part of the current collector). Furthermore, where the pole unit is provided as a separate piece from the current collector, the pole unit may be attached to the current collector in any manner contemplated by the present disclosure. The pole unit may comprise any one, some or all of the features of the pole unit as described below with reference to the drawings, unless technically inappropriate or indicated otherwise.

The pole unit may extend so as to conduct electric current in a direction that is different from a direction of electric current flowing along a path between the electrode tabs and the pole unit. The pole unit may extend so as to conduct electric current and change the direction of the same with respect to electric current flowing between the electrode tabs and the pole unit. The pole unit may extend so as to change a direction of the electric current that flows from or to the electrode tabs along the current collector. In particular, the electric current flowing along a path between the electrode tabs and the pole unit may refer to electric current within a plane that lies in the current collector, e.g., along one of the major surfaces of the current collector.

The pole unit may be arranged, shaped, and dimensioned so as to extend over a major surface of the current collector and conduct electric current away from the current collector. In a specific example, the pole unit may extend in a direction perpendicular to one of the major surfaces of the current collector. The pole unit may extend so as to change a direction of the electric current to be substantially perpendicular to a plane along which electric current flows to and from the electrode tabs in the current collector.

As described in detail below, the pole unit may comprise a protrusion and, optionally, a support portion. The protrusion of the pole unit may be referred to herein as a current collecting protrusion. The protrusion may have a shape elongated in a direction that is out of plane of the current collector. In particular, the protrusion may extend in a direction perpendicular to the major surface of the current collector. The support portion of the pole unit may be integrally formed with the protrusion and may provide a base to be physically attached to, and optionally to be fixed to, the current collector. Furthermore, the support portion may provide an outward extension to be received in a recess formed in the current collector. The protrusion and support portion may comprise any one, some or all of the features of the current collecting protrusion and support portion, respectively, as described below with reference to the drawings, unless technically inappropriate or indicated otherwise.

According to an example, the current collector may comprise a first current collecting portion, a second current collecting portion and an opening. The first electrode tab may be welded onto the first current collecting portion. The second electrode tab may be welded onto the second current collecting portion. The first and second current collecting portions may be spaced apart from each other. The pole unit may extend through the opening. A distance from the first current collecting portion to the pole unit may be different from a distance from the second current collecting portion to the pole unit.

The pole unit and the first and second electrode tabs may be arranged in different ways. For example, the pole unit may be arranged between the first electrode tab(s) and the second electrode tab(s) on the current collector. Alternatively, the current collector may have an elongated shape between two lateral ends, and the pole unit may be arranged close to one lateral end of the current collector, a first one(s) of the first and second electrode tabs may be arranged close to the other lateral end of the current collector, and the remaining one(s) of the first and second electrode tabs may be arranged between the pole unit and said first one(s) of the first and second electrode tabs. In even further alternative arrangement, the current collector may have U-shape with two or more leg portions extending substantially in parallel from a base, whereby the pole unit is arranged on the base and the first and electrode tabs are coupled to the leg portions; for example, the first electrode tab(s) may be coupled to a first leg portion, and the second electrode tab(s) may be coupled to a second leg portion that is spaced apart from the first leg portion and extend substantially in parallel to the first leg portion.

The current collector may comprise an opening. The opening may be a through-hole extending between opposite sides of the current collector. Accordingly, the opening may allow for a passage through the current collector on both sides. The pole unit may be provided separately from the current collector, and may be arranged so as to pass through the opening formed in the current collector. Accordingly, the opening may be shaped and dimensioned so as to allow the pole unit to extend therethrough. In this example, the pole unit may be shaped and dimensioned so as to extend through the opening formed in the current collector. In this manner, the pole unit may provide a path for electric current that extends out of a plane that lies in the current collector. The opening of the current collector may comprise any one, some or all of the features of the opening as described below with reference to the drawings, unless technically inappropriate or indicated otherwise.

In specific example, a diameter of the current collecting protrusion may be equal to an inner diameter of the opening (e.g., of the stopper, see below). A diameter of the support portion may be equal to a diameter of the recessed region of the current collector. In such examples, when the pole unit engages with the current collector, the pole unit (its current collecting protrusion) may fit into the opening, and the support portion may fit into the recessed region.

The current collector may comprise a first current collecting portion onto which the first electrode tab is welded. The current collector may comprise a second current collecting portion onto which the second electrode tab is welded. Accordingly, the positions on the current collector at which the first and second electrode tabs are welded, respectively, are referred to herein as the first and second current collecting portions. As mentioned, each of the first and second electrode tabs may be a single electrode tab or a bundle of electrode tabs. As the first and second electrode tabs are spaced from each other on the current collector, the first and second current collecting portions may be spaced apart from each other as well. The first current collecting portion and the second current collecting portion may comprise any one, some or all of the features of the first current collecting portion and the second current collecting portion, respectively, as described below with reference to the drawings, unless technically inappropriate or indicated otherwise.

A distance from the first current collecting portion to the pole unit may be different from a distance from the second current collecting portion to the pole unit. Accordingly, the first electrode tab and the second electrode tab may be coupled to the current collector at different distances from the pole unit. Consequently, the first electrode tab and the second electrode tab may be arranged asymmetrically on the current collector with respect to the pole unit.

According to an example, the pole unit may comprise a current collecting protrusion that extends in a direction away from the current collector and a support portion that extends outwardly. The current collector may comprise a recessed region formed in a lower surface thereof around the opening, the recessed region being configured to receive the support portion of the pole unit.

For example, the current collecting protrusion may extend in a direction perpendicular to a major surface of the current collector and/or a plane that lies in the current collector. The current collecting protrusion may be arranged, shaped and dimensioned so as to conduct electric current in a direction that is different from a direction of electric current flowing along a path between the electrode tabs and the pole unit. In other words, the current collecting protrusion may be configured to conduct electric current away from the current collector, for example, in a direction perpendicular to a major surface of the current collector and/or a plane that lies in the current collector.

The current collecting protrusion may be provided as a pole linearly elongating (i.e., without changing the shape or dimension of the base) from a base. The base may have a circular, annular, oval or polygonal shape (e.g., rectangular, pentagonal, hexagonal, octagonal etc.) or a combination thereof. The support portion extending outward may mean that the support portion extends outwardly from the base of the current collecting protrusion. For example, the current collecting protrusion may have a circular base and thus a cylindrical shape, and the support portion may extend radially outward.

The current collector may comprise a recessed region formed in a lower surface thereof around the opening. The recessed region may be configured to receive the support portion of the pole unit. Accordingly, the current collecting protrusion may extend through the opening, while the support portion may be accommodated in the recessed region. The support portion may extends outwardly to an extent that it cannot pass through the opening, thereby retaining the pole unit on the current collector.

The recessed region may be arranged, shaped and dimensioned so as to accommodate the support portion of the pole unit while allowing the current collecting protrusion to extend through the opening. In a plan view, the recessed region may have a geometrical shape that corresponds to that of the base of the support portion of the pole unit. In particular, the recessed region may extend symmetrically with respect to a center of the opening of the current collector in a plan view. In a plan view, the recessed region may have a size that is equal to or greater than the size of the support portion of the pole unit. The recessed region may comprise any one, some or all of the features of the recessed region as described below with reference to the drawings, unless technically inappropriate or indicated otherwise.

The lower surface of the current collector may refer to a major surface of the current collector facing the electrode assembly. The plan view as used herein may refer to a viewing direction that is parallel to the winding axis of the electrode assembly and/or perpendicular to one of the major surfaces of the current collector. The plan view as used herein may refer to a viewing a direction parallel to a direction in which the pole unit extends through the opening.

According to an example, the support portion may have a polygonal, oval or circular outline, when viewed in a direction parallel to said direction in which the pole unit extends through the opening. Using such symmetrical shapes may facilitate the manufacturing of the secondary battery. Such symmetrical shapes may be further helpful to uniformly distribute electrical and mechanical stress acting on the pole unit.

According to an example, the current collector may further comprise a stopper provided around the opening so as to surround the pole unit protruding from the opening. In this manner, the pole unit and the current collector may be provided so that the support portion is restricted from passing through the opening, while the current collecting protrusion extends through the opening, thereby securing the pole unit to the current collector.

The stopper may be formed on an upper surface of the current collector. The stopper may be provided as an annular shoulder extending from an upper surface of the current collector. The stopper may be arranged, shaped and dimensioned so as to surround the current collecting protrusion on an upper surface of the current collector. Additionally or alternatively, a lower surface of the stopper may be recessed so as to receive and/or accommodate the support portion of the pole unit. The stopper may comprise any one, some or all of the features of the stopper as described below with reference to the drawings, unless technically inappropriate or indicated otherwise.

According to an example, an upper surface of the stopper is flush with an upper surface of the support portion. In other words, the stopper may be shaped and dimensioned, and arranged with respect to the opening of the current collector so that the support portion may be received (and accommodated) on a lower surface of the stopper at and/or through a lower surface of the current collector. The upper surface of the support portion and the lower surface of the stopper may be substantially flat surfaces to be arranged flush with each other.

According to an example, the stopper may be integrally formed with the current collector. Accordingly, the stopper may be provided as a shoulder-like extension protruding from the upper surface of the current collector. In other examples, the stopper may be provided as a bearing surrounding the pole unit around the opening.

According to an example, a height of the stopper may range from 30% to 50% of a thickness of the current collector. Alternatively or additionally, a height of the stopper may range from 1% to 5% of a thickness of the electrode assembly. In other examples, a height of the stopper may be 15% to 35%, or 20% to 30%, or 25% ±2%, of a height of the current collecting protrusion of the pole unit.

The height (h2) of the stopper may be determined by the following equation:
$h 2 = A \times 0.005 \times B / C .$

Here, A is the thickness of the electrode assembly, B is the length of the electrode tabs, and C is the number of groups of electrode tabs connected to electrodes of a same polarity, wherein electrode tabs at the same position are aligned with one another in each of the groups.

According to the present invention, a large number of electrode tabs may be welded onto the current collector while forming a plurality of groups, and as the number of same-polarity electrode-tab groups (i.e., the number of groups of electrode tabs connected to electrodes of a same polarity, wherein electrode tabs at the same position are aligned with one another in each of the groups) increases, the height of the stopper may decrease.

The thickness of the current collector as used herein may be determined in a height direction, i.e., a direction that is parallel to the winding direction of the electrode assembly or perpendicular to a major surface of the current collector. Also, in a case that the thickness of the current collector varies along its extension in a horizontal direction (i.e., perpendicular to the height direction), the thickness of the current collector as used herein may be determined with reference to a thickness at one of lateral ends of the current collector, between which the current collector is elongated. If the current collector is provided in a not elongated shape, a thickness at a geometrical center of the current collector may be used as the thickness of the current collector.

The thickness of the electrode assembly may be determined herein, as mentioned above, in a stacking direction of the electrodes and the separator(s), or in a direction perpendicular to a plane that spans between the two winding axes, or perpendicular to a major surface of the plate-shaped core.

The height of the stopper as referred to herein may indicate a size of the stopper in the height direction, which is a direction that is parallel to the winding direction of the electrode assembly or perpendicular to a major surface of the current collector. The above-indicated range for the height of the stopper may be an optimized range in terms of a mechanical fixation strength for the pole unit on the current collector, the requirements for manufacturing, and the additional space occupied by the stopper.

According to an example, a cross-sectional area of the recessed region may be smaller than a cross-sectional area of the stopper. Accordingly, the stopper may have a lower surface area that is large enough to accommodate the recessed region for receiving (and accommodating) the support portion of the pole unit.

According to an example, an outer circumferential surface of the support portion of the pole unit and an inner circumferential surface of the recessed region may be spaced apart from each other by a predetermined distance. Accordingly, there may be a non-zero (radial) clearance between the support portion of the pole unit and the recess region provided on the lower surface of the current collector, thereby facilitating the insertion and receiving of the support portion in the recessed region.

According to an example, the pole unit may further comprise a flange formed between the current collecting protrusion and the support portion and extending further outward than the support portion. The flange may be provided as an outward extending part of the pole unit, that extends even farther outward than the support portion. The flange may be configured to rest on the upper surface of the current collector or on the lower surface of the current collector, for example inside the recessed portion. Accordingly, the flange may be provided with a flat surface at least on a side that faces upward or downward. Accordingly, the pole unit may be inserted into the opening either from above or from below with respect to the current collector, depending on whether the flange is formed above or below the support portion. The flange may comprise any one, some or all of the features of the flange as described below with reference to the drawings, unless technically inappropriate or indicated otherwise.

According to an example, the flange may have a square plate shape, a rectangular plate shape, or a disc shape. Using such symmetrical shapes may facilitate the manufacturing of the secondary battery. Such symmetrical shapes may be further helpful to uniformly distribute electrical and mechanical stress acting on the pole unit.

According to an example, the current collecting protrusion, the support portion, and the flange may be made of the same material or integrally formed. Accordingly, the manufacturing of the pole unit and thus the secondary battery may be further facilitated. Furthermore, using the same material may decrease a mechanical stress between the parts in response to temperature change.

According to an example, a height of the flange may range from 30% to 50% of a thickness of the current collector. Alternatively or additionally, the height of the flange may range from 1% to 5% of a thickness of the electrode assembly.

In specific examples, the area of the horizontal cross-section of the flange may be 5 to 15 times, or 10 times, the area of the horizontal cross-section of the current collecting protrusion of the pole unit. In examples where the flange has a cylindrical shape, the diameter of the current collecting protrusion may be 20 to 50%, preferably 30%, of the diameter of the flange.

In specific examples, the flange may protrude upward from the upper surface of the connection portion. A height of the flange may be equal to or greater than the thickness of the current collecting unit. Specifically, the height of the flange may be 100 to 120% of the thickness of the end portion of the current collector (or the current collecting unit), for example, the thickness of the end portion of the first or second current collecting portion. If the height of the flange exceeds 120% of the thickness of the connection portion, the distance between the component coupled to the current collecting protrusion and the connection portion may become too large, which may weaken airtightness.

Specifically, the height of the flange may be 30 to 50%, or 35% to 45%, or 40%, of the height of the current collecting protrusion. If the height of the flange is greater than 50% of the height of the current collecting protrusion, the height difference between the upper surface of the flange and the upper surfaces of the first and second current collecting portions may become too large, making it difficult to stably support the component.

The thickness of the current collector as used herein may be determined in a height direction, i.e., a direction that is parallel to the winding direction of the electrode assembly or perpendicular to a major surface of the current collector. Also, in a case that the thickness of the current collector varies along its extension in a horizontal direction (i.e., perpendicular to the height direction), the thickness of the current collector as used herein may be determined with reference to a thickness at one of lateral ends of the current collector, between which the current collector is elongated. If the current collector is provided in a not elongated shape, a thickness at a geometrical center of the current collector may be used as the thickness of the current collector.

The thickness of the electrode assembly may be determined herein, as mentioned above, in a stacking direction of the electrodes and the separator(s), or in a direction perpendicular to a plane that spans between the two winding axes, or perpendicular to a major surface of the plate-shaped core.

The height of the flange as referred to herein may indicate a size of the flange in the height direction, which is a direction that is parallel to the winding direction of the electrode assembly or perpendicular to a major surface of the current collector.

With the height of the flange being within the above-indicated range, an optimized size may be given for the flange of the pole unit in terms of a mechanical fixation strength for the pole unit on the current collector, the requirements for manufacturing, and the additional space occupied by the stopper.

According to an example, the support portion may be arranged in the opening. In such an example, the support portion itself may be arranged within the opening of the current collector, while the remaining part of the pole unit, particularly the current collecting protrusion if applicable, is arranged outside of the current collector. The support portion of the pole unit may be inserted into the opening of the current collector. The support portion and the opening may be shaped and dimensioned so as to provide a form fit, or have a clearance to facilitate the inserting of the support portion into the opening. The support portion may be provided with a larger cross-section than the current collecting protrusion of the pole unit. In an example where the pole unit further comprises a flange as described herein, the flange may rest on an upper surface or lower surface of the current collector so as to arrest movement of the pole unit. Accordingly, the pole unit may be secured to the current collector in a safe manner.

According to an example, the support portion may be arranged so that its lower surface is positioned above the lower surface of the current collector with respect to a thickness direction of the current collector. The lower surface of the support portion may correspond to a lowermost surface (and thus the lower surface) of the pole unit. In such an example, when the pole unit is arranged in the opening of the current collector, a lower surface of the pole unit may be offset from the lower surface of the current collector by a non-zero distance. This offset may be exploited for electric connection, to accommodate other parts or components of the secondary battery (such as a welding bead from welding the pole unit to the current collector), or to increase a distance between the pole unit, where a temperature increase due to ohmic heating may occur, and the electrode assembly, to protect the latter from heat.

According to an example, a welding region may be formed on a periphery of the lower surface of the support portion. Accordingly, the support portion may be welded from below to the current collector. Thus, a fixation strength between the pole unit and the current collector may be increased. Taking into account that a certain clearance is kept during welding, performing welding of the pole unit from a lower surface of the current collector may allow for a larger area on the upper surface of the current collector to remain available for connections and processing.

According to an example, a nickel plating layer may be formed on an upper end of the current collecting protrusion. Using the nickel plating, a welding strength of the pole unit to a further component, such as an electrode terminal, may be increased.

According to an example, a depth of the recessed region of the current collector may range from 30% to 50% of a thickness of the current collector. The depth of the recessed region may refer to an offset of a lower surface of the recessed region from a part of the lower surface of the current collector that surrounds the recessed region.

As mentioned above, the thickness of the current collector as used herein may be determined in a height direction, i.e., a direction that is parallel to the winding direction of the electrode assembly or perpendicular to a major surface of the current collector. Also, in a case that the thickness of the current collector varies along its extension in a horizontal direction (i.e., perpendicular to the height direction), the thickness of the current collector as used herein may be determined with reference to a thickness of one of two lateral ends of the current collector, between which the current collector is elongated. If the current collector is provided in a not elongated shape, a thickness at a geometrical center of the current collector may be used as the thickness of the current collector. With the depth of the recessed region in this range, a good balance may be achieved between an increased fixation strength of the pole unit to the current collector and accommodating space requirements.

Alternatively, the depth of the recessed region may be equal to a height of an end of the current collector. Accordingly, the lower surface of the recessed region may be on the same level as the upper surface of the current collector. Doing so, a space may be provided below the pole unit and at least partly surrounded by the lower surface of the current collector, which remains available for spacing, connections and further processing.

According to an example, the current collector may be provided as a plate having a first surface and a second surface that are opposite each other. The current collector may be arranged so that the second surface faces the electrode assembly. The first electrode tab and/or the second electrode tab may be coupled to the first surface of the current collector.

The first surface of the current collector may be the upper surface of the current collector. The second surface of the current collector may be the lower surface of the current collector. Any one, some or each of the electrode tabs may be coupled to (directly connected to, physically attached to) the first surface, i.e., the upper surface of the current collector. Accordingly, the electrode tabs extend from the electrode assembly and past the current collector before being coupled to the first surface of the current collector. Accordingly, a space occupied by the components of the secondary battery may be decreased. Hence, the secondary battery as disclosed may be able to accommodate demands for a reduction of size and an increase of energy density.

According to an example, the first electrode tab and the second electrode tab may be attached to the current collector on the same side with respect to the pole unit. In other words, in a plan view (as defined above), the first electrode tab and the second electrode tab may be located on a same side along the current collector. Accordingly, electric current may flow between the first and second electrode tabs and the pole unit within an angle, in a plan view as defined above, that is smaller than 180 degrees.

According to an example, a surface of the current collector facing the electrode assembly may be flush with a surface of the pole unit facing the electrode assembly. In other words, the lower surface of the current collector and the lower surface of (the support portion of) the pole unit are flush with each other. In this manner, the compactness of a combined component of the current collector and the pole unit may be increased.

According to an example, an outer circumferential surface of the pole unit and an inner circumferential surface of the opening of the current collector may be spaced apart from each other by a predetermined distance. Accordingly, a clearance may be given between the pole unit and the opening, thereby facilitating the insertion of the pole unit into the opening.

According to an example, the current collector and the pole unit may be made of the same material. With the current collector and the pole unit being made of the same material, the expenses for manufacturing may be decreased and the manufacturing may be facilitated. Also, electrical or mechanical stress occurring due to a difference in thermal properties may be avoided.

Alternatively, the current collector and the pole unit may be made of different materials. Accordingly, proper materials may be selected independently for the pole unit and the current collector, in particular in anticipation of thermal and mechanical stresses that act on the current collector and the pole unit during the operation of the secondary battery. For example, it may be considered likely that heat generation occurs on the pole unit rather than on the current collector, and the pole unit may be made of a material that is thermally more robust than the material of the current collector, thereby efficiently increasing the safety of the secondary battery in view of material costs.

According to an example, the current collector may comprise a seating region formed on an upper surface thereof. The pole unit may be arranged in and/or on the seating region.

The seating region may be provided on an upper surface of the current collector. The seating region may be provided as a recessed region on the upper surface of the current collector. For example, the upper surface of the current collector may be recessed, lowered, or depressed within a designated area, thereby forming the seating region. The seating region may be shaped and dimensioned so as to correspond to the pole unit, in particular the seating portion of the pole unit. The seating region may be shaped and dimensioned so as to receive and accommodate a lower surface of the pole unit. The seating region may comprise any one, some or all of the features of the seating region as described below with reference to the drawings, unless technically inappropriate or indicated otherwise.

Herein, the seating region may be considered as a blind hole, which is one kind of an opening as disclosed herein. Hence, the seating region may be considered as an opening and may implement any one, some or each of the features of the opening as described herein, particularly as described below with reference to the drawings, unless technically inappropriate or indicated otherwise.

Accordingly, the pole unit may be coupled to (directly connected to, physically attached to) the current collector by being seated in or on the seating region. This may facilitate the manufacturing of the secondary battery.

According to an example, the seating region may be recessed downward from a surface of the current collector which is opposite to the surface facing the electrode assembly, The surface of the current collector where the seating region is formed may be the upper surface of the current collector. Accordingly, the pole unit may be coupled to the current collector by being attached to the same in a downward direction from above.

According to an example, a depth of the seating region may range from 30% to 50% of a thickness of the current collector. The thickness of the current collector may be determined as described above. The depth of the seating region as referred to herein may indicate an offset of an upper surface of the seating region, which may be flat, from a part of the current collector that surrounds the seating region in the height direction as described above.

With the depth of the seating region being within the above-indicated range, an optimized size may be given for the seating region in terms of a mechanical fixation strength for the pole unit to the current collector, the requirements for manufacturing, and the additional space occupied by the stopper.

According to an example, the pole unit may comprise a current collecting protrusion that extends in a direction away from the current collector and a support portion that extends perpendicular to said direction in which the current collecting protrusion extends. The support portion is seated in the seating region.

Accordingly, a lower surface of the support portion, which may be provided flat, may rest on an upper surface of the seating region, which may be provided flat. The current collecting protrusion and the support portion may implement and comprise any one, some or all of the features of the current collecting protrusion and the support portion, respectively, as described herein, and in particular as described below with reference to the drawings, unless technically inappropriate or indicated otherwise.

According to an example, a height by which the support portion may protrude from said surface of the current collector ranges from 1% to 5% of a thickness of the electrode assembly. Accordingly, while being seated in or on the seating region of the current collector, the support portion of the pole unit may extend in the height direction so as to extend over the upper surface of the current collector. In other words, the height of the support portion may be larger than the depth of the seating region.

The thickness of the electrode assembly may be determined herein, as mentioned above, in a stacking direction of the electrodes and separator(s), or in a direction perpendicular to a plane that spans between the two winding axes, or perpendicular to a major surface of the plate-shaped core.

With the height by which the support portion may protrude from said surface of the current collector being within the above-indicated range, an optimum may be achieved in terms of a mechanical fixation strength for the pole unit on the current collector, the requirements for manufacturing, and the additional space occupied by the stopper.

According to an example, the current collector may comprise a body portion extending along a first plane and a connection portion extending along a second plane that is offset, optionally by 1% to 5% of a thickness of the electrode assembly, from the first plane in a direction away from the electrode assembly. The pole unit is attached to the connection portion.

Accordingly, the current collector may have at least two portions arranged in respective planes that are offset from each other in the height direction. Accordingly, the plane in which the body portion lies and the plane in which the connection portion lies may be parallel to each other. With the connection portion being further away from the electrode assembly than the body portion, a heat generated at the pole unit during an operation of the secondary battery may be kept further away from the electrode assembly.

The body portion may comprise any one, some or all of the features of the body portion as described herein, and in particular as described below with reference to the drawings, unless technically inappropriate or indicated otherwise.

The connection portion may implement and comprise any one, some or all of the features of the flange as described herein, and in particular as described below with reference to the drawings, unless technically inappropriate or indicated otherwise.

According to an example, the pole unit may be directly attached to the connection portion. Accordingly, there may be provided a physical connection between the pole unit and the current collector at the connection portion.

Herein, the expressions "directly coupled", "directly connected" and "directly attached" may be used interchangeably unless indicated otherwise. Further, the expressions "physically coupled", "physically connected" and "physically attached" may be used herein in an interchangeable manner unless indicated otherwise.

According to an example, at least one part of the current collector extending between the first plane and the second plane may extend inclined with respect to the first plane. The first plane may be the plane along which the body portion extends and the second plane may be a plane along which the connection portion extends. Alternatively, a part of the current collector extending between the first plane and the second plane may extend in a curved or stepped manner from the first plane to the second plane.

According to an example, a thickness of the current collector may be uniform. In particular, the current collector may have an elongated shape between two lateral ends and the thickness of the current collector may be uniform over the whole length of the current collector. The thickness of the current collector may be determined as described above.

According to an example, the pole unit is welded to the current collector from a side of the current collector facing the electrode assembly. Welding the pole unit to the current collector may provide a direct connection, or physical coupling, between the pole unit and the current collector.

According to an example, the pole unit is attached to a portion of the current collector that is provided on a first side of the first current collecting portion, and the second current collecting portion is provided on a second side of the first current collecting portion opposite to the first side. Accordingly, at least one of the electrode tabs may be connected to an upper surface of the current collector, while at least another one of the electrode tabs may be connected to a lower surface of the current collector.

According to an example, the pole unit may be attached to a portion of the current collector disposed between the first current collecting portion and the second current collecting portion. Accordingly, electric current may flow between the pole unit and the first electrode tabs on one side of the pole unit, while electric current may flow between the pole unit and the second electrode tabs on another side that is opposite to the one side of the pole unit.

According to an example, the current collector may have a substantially U-shape having two generally parallel leg portions connected by a base portion. The first electrode tab may be attached to one of the two leg portions and the second electrode tab may be attached to the other one of the two leg portions, and the pole unit is attached to the base portion.

The base portion may extend straight between the first and second leg portions. Alternatively, the base portion may extend along a curve or stepped line between the first and second leg portions. Accordingly, the secondary battery as disclosed herein may allow for the first and second electrodes to be connected on the current collector in a distributed manner. The pole unit for redirecting electric current in a direction away from a plane along which the current collector extends is arranged on the base portion of the current collector that is connected to both of the first and second leg portions.

The base portion may comprise any one, some or all of the features of the base portion as described below with reference to the drawings, unless technically inappropriate or indicated otherwise.

Each of the first and second leg portions may comprise any one, some or all of the features of the respective leg portions as described below with reference to the drawings, unless technically inappropriate or indicated otherwise.

According to an example, the secondary battery may further comprise a case and a cap assembly. The electrode assembly may be accommodated in the case. The cap assembly may include a terminal exposed to the outside. A through-hole may extend through the terminal. The pole unit may be inserted into the through-hole.

The case may be open at one end. The case may be open at two opposite ends. The case may comprise any one, some or all of the feature as described herein, particularly as described below with reference to the drawings, unless indicated otherwise or technically inappropriate. In particular, the case may be a prismatic battery case. The case may be made of metal. The case may have two opposite major surfaces and two opposite lateral surfaces each extending between the two major surfaces. One of the remaining two surfaces may be open. Alternatively, both of the remaining two surfaces may be open.

The cap assembly may be a component of the secondary battery that provides closure and sealing of (one of) the open ends of the case. Accordingly, the cap assembly may be configured (i.e., shaped, dimensioned and arranged) so as to close and/or seal the open end or one of the open ends of the case. The cap assembly may comprise any one, some or all of the features of the cap assembly as described below with reference to the drawings, unless technically inappropriate or indicated otherwise.

The cap assembly may comprise a cap plate that may be made of metal or an insulator. Additionally or alternatively, the cap plate may comprise a laminate of multiple layers including, for example, an insulating layer. The cap plate may be configured to provide structure and support for closing (and sealing) the open end of the case. The cap plate may comprise any one, some or all of the features of the cap plate as described below with reference to the drawings, unless technically inappropriate or indicated otherwise.

The cap assembly may include a terminal exposed to the outside. The terminal may be a component of the secondary battery configured to provide an electrically conductive area to be physically contacted by an external electric contact, such as a load, a battery recharger, a test equipment, etc. The terminal may provide a flat area that is exposed to the outside (of the secondary battery) and is electrically conductive. The terminal may comprise any one, some or all of the features of the terminal as described below with reference to the drawings, unless technically inappropriate or indicated otherwise. Furthermore, the term terminal may be used herein in accordance with the terminology that is common in the field of battery manufacturing.

The through-hole may be as described herein. The through-hole extends through the terminal, thereby providing a hollow passage through the terminal and being open on both ends, that are formed on two opposite surfaces of the terminal. The terminal may have a basic shape of a plate with two opposite (and parallel) major surfaces. The through-hole may extend perpendicular to (one of) the major surfaces.

The pole unit is inserted into the through-hole. Accordingly, the through-hole may be shaped and dimensioned so as to allow the pole unit to at least partly pass therethrough. A cross-section of the through-hole may be shaped and dimensioned to accommodate a cross-section of the pole unit. In particular, the through-hole may have a same shape as the pole unit, (particularly the current collecting protrusion of the pole unit) which may be, for example, a circular, polygonal (e.g., rectangular, pentagonal, hexagonal, octagonal, etc.) shape. A cross-sectional area of the through-hole may be approximately equal or larger than a cross-sectional area of the pole unit (or its current collecting protrusion).

In an example, a through-hole may extend through an entirety of the cap assembly. The through hole may be aligned with the through-hole that extends through the terminal. Any one of the both through-holes may extend in a height direction as described above, that is a direction away from the electrode assembly. The height direction may be perpendicular to a major surface of the cap assembly. The through-holes through the terminal and the cap assembly may have corresponding sizes so as to allow the pole unit to extend therethrough.

Hence, a secondary battery may be provided in which a cap assembly closes (and seals) the open end of the case, while the pole unit (or the current collecting protrusion thereof) may extend through (a part of) the cap assembly and be inserted into the through-hole of the terminal. Accordingly, an electrical contact between the electrode assembly and the terminal may be established while supporting the case of the secondary battery by the cap assembly. Also, a stable distance may be maintained between the cap assembly and the electrode assembly.

According to an example, the pole unit and the terminal may be welded together from outside along a periphery of the through-hole. In particular, the terminal and the pole unit may be welded at an (outward) end of the pole unit. In particular, the terminal and the current collecting protrusion may be welded at an (outward) end of the current collecting protrusion.

Welding from outside may mean that the energy (e.g., from a laser source) for welding is applied from (the) outside of the secondary battery. As being welded from outside, the periphery of the through-hole may refer to a periphery along an outer end (opening) of the through-hole formed on an outer surface of the terminal.

Accordingly, an object of the present disclosure is to provide a secondary battery capable of preventing influence on an electrode assembly during welding of electrode tabs to a current collector.

Another object of the present disclosure is to provide a secondary battery capable of stably welding a relatively large number of electrode tabs to the current collector during welding of the electrode tabs to the current collector.

Another object of the present disclosure is to provide a secondary battery capable of stably coupling a current collecting protrusion to the current collector.

Still another object of the present disclosure is to provide a secondary battery capable of simplifying an assembly process of the secondary battery.

A secondary battery according to an aspect of the present disclosure may include an electrode assembly and a current collector. The electrode assembly may include an electrode portion, and a plurality of electrode tabs formed on one end of the electrode portion. The current collector may be disposed on an upper end of the electrode portion and welded to the electrode tabs. The current collector may include a current collecting unit and a pole unit. The current collecting unit may include a first current collecting portion, a second current collecting portion, and a connection portion. The first current collecting portion may be welded to a plurality of first electrode tabs. The second current collecting portion may be welded to a plurality of second electrode tabs. The connection portion may be connected to the first current collecting portion. An opening may be formed in the connection portion. A recessed region may be formed in a lower surface of the current collecting unit. The pole unit may be coupled to the current collecting unit. The pole unit may include a current collecting protrusion and a support portion coupled to a lower end of the current collecting protrusion.

According to an aspect of the present disclosure, the opening of the connection portion and the recessed region may be integrated with each other.

According to an aspect of the present disclosure, a stopper formed with an opening may be disposed on the connection portion.

According to an aspect of the present disclosure, the support portion may be received in the recessed region.

According to an aspect of the present disclosure, the lower surface of the current collecting unit may be flush with a lower surface of the support portion.

According to an aspect of the present disclosure, an upper surface of the stopper may be flush with an upper surface of the support portion.

According to an aspect of the present disclosure, the stopper may have a square plate shape, a rectangular plate shape, or a disc shape.

According to an aspect of the present disclosure, the stopper may be integrally formed with the connection portion.

According to an aspect of the present disclosure, a height of the stopper may range from 30% to 50% of a height of an end of the current collecting unit.

According to an aspect of the present disclosure, the height of the stopper may range from 1% to 5% of a thickness of the electrode assembly.

According to an aspect of the present disclosure, a depth of the recessed region may range from 30% to 50% of a height of an end of the current collecting unit.

According to an aspect of the present disclosure, the recessed region may be formed under the stopper. A cross-sectional area of the recessed region may be smaller than a cross-sectional area of the stopper.

According to an aspect of the present disclosure, a depth of the recessed region may be equal to a height of an end of the current collecting unit.

According to an aspect of the present disclosure, an outer circumferential surface of the current collecting protrusion and an inner circumferential surface of the opening of the stopper may be spaced apart from each other by a predetermined distance.

According to an aspect of the present disclosure, an outer circumferential surface of the support portion and an inner circumferential surface of the recessed region may be spaced apart from each other by a predetermined distance.

According to an aspect of the present disclosure, the pole unit may further include a flange formed between the current collecting protrusion and the support portion.

According to an aspect of the present disclosure, the support portion may be inserted into the opening.

According to an aspect of the present disclosure, a lower surface of the support portion may be positioned above the lower surface of the current collecting unit.

According to an aspect of the present disclosure, the flange may have a square plate shape, a rectangular plate shape, or a disc shape.

According to an aspect of the present disclosure, the current collecting protrusion, the support portion, and the flange may be integrally formed.

According to an aspect of the present disclosure, a height of the flange may range from 30% to 50% of a height of an end of the current collecting unit.

According to an aspect of the present disclosure, a height of the flange may range from 1% to 5% of a thickness of the electrode assembly.

According to an aspect of the present disclosure, a welding region may be formed on a periphery of the lower surface of the support portion.

According to an aspect of the present disclosure, a material of the current collecting unit may be identical to a material of the pole unit.

According to an aspect of the present disclosure, a material of the current collecting unit may be different from a material of the pole unit.

According to an aspect of the present disclosure, a nickel plating layer may be formed on an upper end of the current collecting protrusion.

A secondary battery according to an aspect of the present disclosure may include an electrode assembly and a current collector. The electrode assembly may include an electrode portion and a plurality of electrode tabs formed on one end of the electrode portion. The current collector may be disposed on an upper end of the electrode portion and welded to the electrode tabs. The current collector may include a current collecting unit and a pole unit. The current collecting unit may include a first current collecting portion, a second current collecting portion, and a connection portion. The first current collecting portion may be welded to a plurality of first electrode tabs. The second current collecting portion may be welded to a plurality of second electrode tabs. The connection portion may be connected to the first current collecting portion and may include a seating region formed in an upper surface thereof. The pole unit may be coupled to the current collecting unit and may include a current collecting protrusion.

According to an aspect of the present disclosure, the seating region may be recessed downward from an upper surface of the connection portion, and a depth of the seating region may range from 30% to 50% of a height of an end of the current collecting unit.

According to an aspect of the present disclosure, the pole unit may further include a support portion coupled to a lower end of the current collecting protrusion and seated in the seating region.

According to an aspect of the present disclosure, a height by which the support portion protrudes from an upper surface of the current collecting unit may range from 1% to 5% of a thickness of the electrode assembly.

According to an aspect of the present disclosure, the support portion may have a square plate shape, a rectangular plate shape, or a disc shape.

According to an aspect of the present disclosure, the connection portion may protrude from and be connected to one side of the first current collecting portion.

According to an aspect of the present disclosure, an upper surface of the seating region may be flush with an upper surface of the connection portion and may be coupled to a lower surface of the current collecting protrusion.

According to an aspect of the present disclosure, a height by which the connection portion protrudes from the first current collecting portion may range from 1% to 5% of a thickness of the electrode assembly.

According to an aspect of the present disclosure, a surface to which the connection portion and the first current collecting portion are connected may be inclined.

According to an aspect of the present disclosure, a thickness of the connection portion may be equal to a thickness of each of the first current collecting portion and the second current collecting portion.

According to an aspect of the present disclosure, a welding region may be formed in a lower surface of the seating region.

According to an aspect of the present disclosure, a material of the current collecting unit may be identical to a material of the pole unit.

According to an aspect of the present disclosure, a material of the current collecting unit may be different from a material of the pole unit.

According to an aspect of the present disclosure, a nickel plating layer may be formed on an upper end of the current collecting protrusion.

According to an aspect of the present disclosure, in the current collecting unit, the connection portion may be connected to one side of the first current collecting portion, and the second current collecting portion may be connected to a remaining side of the first current collecting portion.

According to an aspect of the present disclosure, in the current collecting unit, the connection portion may be disposed between the first current collecting portion and the second current collecting portion.

According to an aspect of the present disclosure, in the current collecting unit, the first current collecting portion may be connected to an upper end of one side of the connection portion, and the second current collecting portion may be connected to a lower end of the one side of the connection portion.

### BRIEF DESCRIPTION OF THE DRAWINGS

FIG. 1 is a view illustrating a secondary battery according to an embodiment.
FIG. 2 is a view illustrating a secondary battery with a cap assembly being separated according to an embodiment.
FIG. 3 is a view illustrating an electrode assembly in which a plurality of first electrode tabs and a plurality of second electrode tabs are formed on an electrode portion according to an embodiment.
FIGS. 4A and 4B are views illustrating a electrode elements and electrode tabs according to an embodiment.
FIGS. 5A and 5B are views illustrating electrode elements and electrode tabs according to an embodiment.
FIG. 6 is a perspective exploded view illustrating a secondary battery according to an embodiment.
FIG. 7 is a perspective view illustrating an electrode assembly according to an embodiment.
FIG. 8 is a perspective view illustrating an electrode assembly, electrode tabs, a current collector and a pole unit according to an embodiment.
FIG. 9 is a perspective view illustrating an electrode assembly, electrode tabs, a current collector and a pole unit according to an embodiment.
FIG. 10 is a cross-sectional partial view of a secondary battery illustrating an electrode assembly, electrode tabs, a current collector and a pole unit according to an embodiment.
FIG. 11 is a view illustrating a current collector according an embodiment .
FIG. 12 is a view illustrating the current collector in the secondary battery according to an embodiment .
FIG. 13 is a cross-sectional view taken along line A-A' of FIG. 12.
FIG. 14 is a view illustrating a current collector in the secondary battery according to an embodiment .
FIGS. 15A and 15B are views illustrating a pole unit according to an embodiment .
FIG. 16 is a view illustrating a process of assembling the current collector with the pole unit according to an embodiment .
FIG. 17 is a view illustrating a welding region on a lower surface of the current collector according to an embodiment.
FIG. 18 is a view illustrating a welding region on the lower surface of the current collector according to an embodiment.
FIG. 19 is a view illustrating a connection portion and a pole unit according to an embodiment.
FIG. 20 is a cross-sectional view taken along line B-B' of FIG. 19.
FIG. 21 is a view illustrating a current collector according to an embodiment .
FIGS. 22A and 22B are views illustrating the pole unit according to an embodiment .
FIG. 23 is a view illustrating a process of assembling the current collector with the pole unit according to an embodiment.
FIG. 24 is a view illustrating a welding region on a lower surface of the current collector according to an embodiment.
FIG. 25 is a view illustrating a current collector according an embodiment.
FIG. 26 is a cross-sectional view taken along line C-C' of FIG. 25.
FIG. 27 is a view illustrating a current collector according to an embodiment.
FIG. 28A and 28B are views illustrating a pole unit according to an embodiment.
FIG. 29 is a view illustrating a process of assembling the current collector with the pole unit according to an embodiment.
FIG. 30 is a view illustrating a welding region on a lower surface of the current collector according to an embodiment.
FIG. 31 is a view illustrating a current collector according to an embodiment .
FIG. 32 is a view illustrating a current collector according to an embodiment.
FIG. 33A and 33B are views illustrating a pole unit according to an embodiment.
FIG. 34 is a view illustrating a process of assembling the current collector with the pole unit according to an embodiment.
FIG. 35 is a view illustrating a welding region on a lower surface of the current collector according to an embodiment.
FIG. 36 is a view illustrating a current collector according to an embodiment.
FIG. 37 is a view illustrating a current collector according to an embodiment.
FIG. 38A and 38B are views illustrating a pole unit according to an embodiment.
FIG. 39 is a view illustrating a process of assembling the current collector with the pole unit according to an embodiment.
FIG. 40 is a view illustrating a welding region on a lower surface of the current collector according to an embodiment.
FIG. 41 is a view illustrating a current collector according to an embodiment.
FIG. 42 is a view illustrating the current collector according to an embodiment.
FIG. 43 is a view illustrating a process of assembling a current collector with a pole unit according to an embodiment.
FIG. 44 is a view illustrating a welding region on a lower surface of the current collector according to an embodiment.
FIG. 45 is a view illustrating a welding region on the lower surface of the current collector according to an embodiment.
FIG. 46 is a view illustrating a current collector and a pole unit according to an embodiment.
FIG. 47 is a view illustrating a current collector according to an embodiment.
FIG. 48A and 48B are views illustrating a pole unit according to an embodiment.
FIG. 49 is a view illustrating a process of assembling the current collector with the pole unit according to an embodiment
FIG. 50 is an enlarged view illustrating a pole unit joined with a current collector according to an embodiment.
FIG. 51 is a view illustrating a welding region on a lower surface of the current collector according to an embodiment.
FIG. 52 is a view illustrating a current collector and a pole unit according to an embodiment.
FIG. 53 is a view illustrating a current collector according to an embodiment.
FIG. 54A and 54B are views illustrating a pole unit according to an embodiment.
FIG. 55 is a view illustrating a process of assembling the current collector with the pole unit according to an embodiment
FIG. 56 is a view illustrating a welding region on a lower surface of the current collector according to an embodiment.
FIG. 57 is a view illustrating a current collector and a pole unit according to an embodiment.
FIG. 58 is a view illustrating a current collector according to an embodiment.
FIG. 59A and 59B are views illustrating a pole unit according to an embodiment.
FIG. 60 is a view illustrating a process of assembling the current collector with the pole unit according to an embodiment
FIG. 61 is a view illustrating a current collector and a pole unit according to an embodiment.
FIG. 62 is a view illustrating a welding region on a lower surface of the current collector according to an embodiment.
FIG. 63 is a view illustrating a current collector and a pole unit according to an embodiment.
FIG. 64 is a view illustrating a current collector according to an embodiment.
FIG. 65A and 65B are views illustrating a pole unit according to an embodiment.

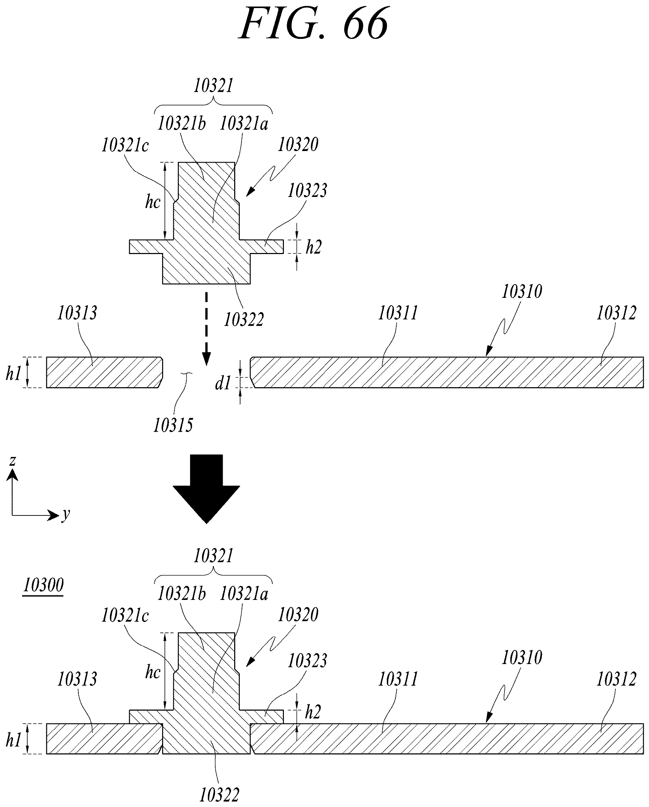

FIG. 66 is a view illustrating a process of assembling the current collector with the pole unit according to an embodiment
FIG. 67 is a view illustrating a welding region on a lower surface of the current collector according to an embodiment.
FIG. 68 is a view illustrating a current collector according to an embodiment.
FIG. 69A and 69B are views illustrating the first and second electrode tabs welded to the current collector according to embodiments.
FIG. 70 is a cross-sectional partial view of a secondary battery illustrating an electrode assembly, electrode tabs, a current collector and a pole unit according to an embodiment.
FIGS. 71A and 71B are views illustrating a current collector according to an embodiment.
FIG. 72A and 72B are views illustrating the first and second electrode tabs welded to the current collector according to embodiments.
FIG. 73 is a cross-sectional partial view of a secondary battery illustrating an electrode assembly, electrode tabs, a current collector and a pole unit according to an embodiment.
FIG. 74A and 74B are views illustrating the first and second electrode tabs welded to the current collector according to embodiments.
FIG. 75 is a flowchart of a method of manufacturing the secondary battery according to an embodiment.
FIG. 76 is a view illustrating a plurality of first electrode tabs and a plurality of second electrode tabs that are separately grouped according to an embodiment.
FIG. 77 is a view illustrating the plurality of first electrode tabs that are primarily welded and the plurality of second electrode tabs that are primarily welded according to an embodiment.
FIG. 78 is a view illustrating the current collector disposed between the plurality of first electrode tabs and the plurality of second electrode tabs according to an embodiment.
FIG. 79 is a view illustrating the first and second electrode tabs welded to the current collector according to an embodiment.
FIG. 80 is a view illustrating the cap assembly coupled to the electrode assembly according to an embodiment.
FIG. 81 is a schematic partial view of a secondary battery illustrating an electrode assembly, electrode tabs, a current collector and a pole unit according to an embodiment.

### DETAILED DESCRIPTION

Since the present disclosure may be modified in various forms, and may have various embodiments, particular embodiments and examples will be illustrated in the accompanying drawings and described in detail with reference to the drawings. However, this is not intended to limit the present disclosure to particular examples as shown in the drawings, and it is to be appreciated that all changes, equivalents, and substitutes that do not depart from the technical scope of the claimed subject matter are encompassed in the disclosure.

The terminology used herein is for the purpose of describing particular examples only and is not intended to be limiting the present disclosure. In the present disclosure, the singular forms are intended to include the plural forms as well, unless the context clearly indicates otherwise. It will be further understood that the terms "comprise", "include", "have", etc. when used in this specification, are intended to specify the presence of stated features, integers, steps, operations, elements, components, and/or combinations of them but do not preclude the presence or addition of one or more other features, integers, steps, operations, elements, components, and/or combinations thereof.

Hereinafter, embodiments and examples of the present disclosure will be described in detail with reference to the accompanying drawings. It should be noted that like reference numerals refer to like elements throughout the attached drawings. Details of well-known configurations and functions may be omitted to avoid unnecessarily obscuring the gist of the present disclosure. For the same reason, in the accompanying drawings, some elements are enlarged, omitted, or depicted schematically.

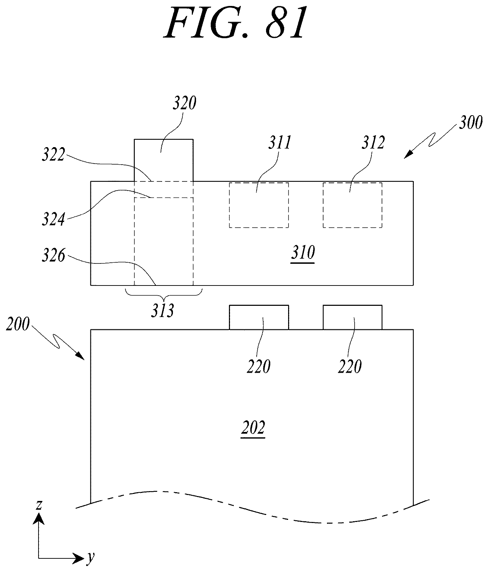

FIG. 81 is a schematic partial view of a secondary battery according to an example. Generally, the secondary battery of the example shown in FIG. 81 may implement any one, some or all of the features described above, unless indicated otherwise or technically inappropriate.

The secondary battery comprises an electrode assembly 200 and a current collector 300. The secondary battery further comprises a pole unit 320. Alternatively, the pole unit 320 may be considered a part of the current collector 300. Both organizational concepts are in line with the claimed subject matter. Hereinafter, for the sake of simplifying the description, the current collector 300 and the current collecting unit 310 may be used interchangeably, unless indicated otherwise or technically inappropriate.

The electrode assembly 200 comprises electrode tabs 220, 230 that protrude outwardly. The electrode assembly 200 may implement any one, some or all of the features described above in summary section, unless indicated otherwise or technically inappropriate. The electrode tabs 220, 230 comprise a first electrode tab 220 and a second electrode tab 230 that may be implemented as described above in summary section, unless indicated otherwise or technically inappropriate. Each of the first electrode tab 220 and the second electrode tab 230 may comprise one or more electrode tabs. In particular, each of the first electrode tab 220 and the second electrode tab 230 may comprise a bundle of electrode tabs, as described in detail below.

The current collector 300 may be disposed on the electrode assembly 200. The current collector 300 may implement any one, some or all of the features described above in summary section, unless indicated otherwise or technically inappropriate. The first electrode tab 220 and the second electrode tab 230 are coupled to the current collector 300 and spaced apart from each other on the current collector 300.

The current collector comprises a current collecting unit 310. The current collecting unit 310 may be a part of the current collector 300 that is configured to providing contact surfaces for, and to conduct electric current from and to, the electrode tabs 220, 230 as well as the pole unit 320. The current collector 300 (the current collecting unit 310) may comprise a first current collecting portion 311 and a second current collecting portion 312 which provide a contact surface for the first electrode tab 220 and the second electrode tab 230, respectively. The current collector 300 (the current collecting unit 310) further comprises a connection portion 313 to which the pole unit 320 may be coupled.

The pole unit 320 is in physical contact with the current collector 300 and extends so as to conduct electric current in a direction that is different from a direction of electric current flowing along a path between the electrode tabs 220, 230 and the pole unit 320. The pole unit 320 may implement any one, some or all of the features described above in summary section, unless indicated otherwise or technically inappropriate.

The pole unit 320 may be coupled to the current collector 300 (the current collecting unit 310) in any manner suitable. Three examples are illustrated in FIG. 81. In a first example, as symbolized with dashed line 322, the pole unit 320 may be disposed upon an upper surface of the current collector 300 (the current collecting unit 310). In a second example, as symbolized with dashed line 324, the pole unit 320 may be disposed in or on a seated region which may be provided as a recess on an upper surface of the current collector 300 (the current collecting unit 310). In a third example, as symbolized with dashed line 326, the pole unit 320 may extend through the current collector 300 (the current collecting unit 310) via an opening formed therethrough.

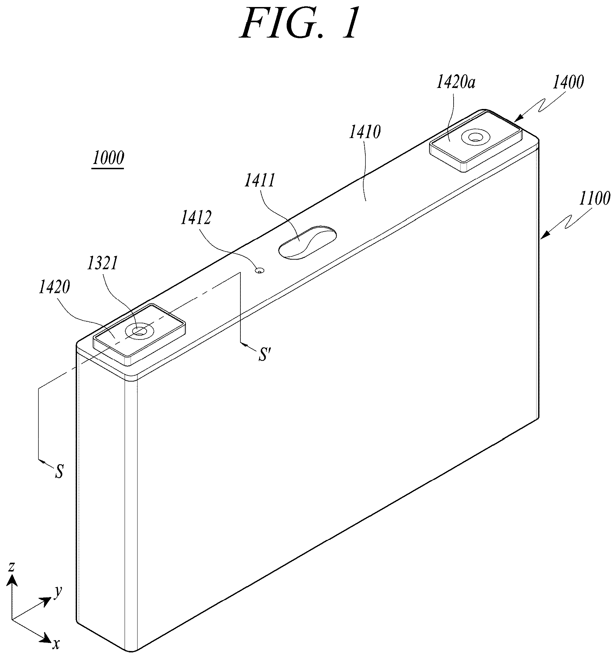

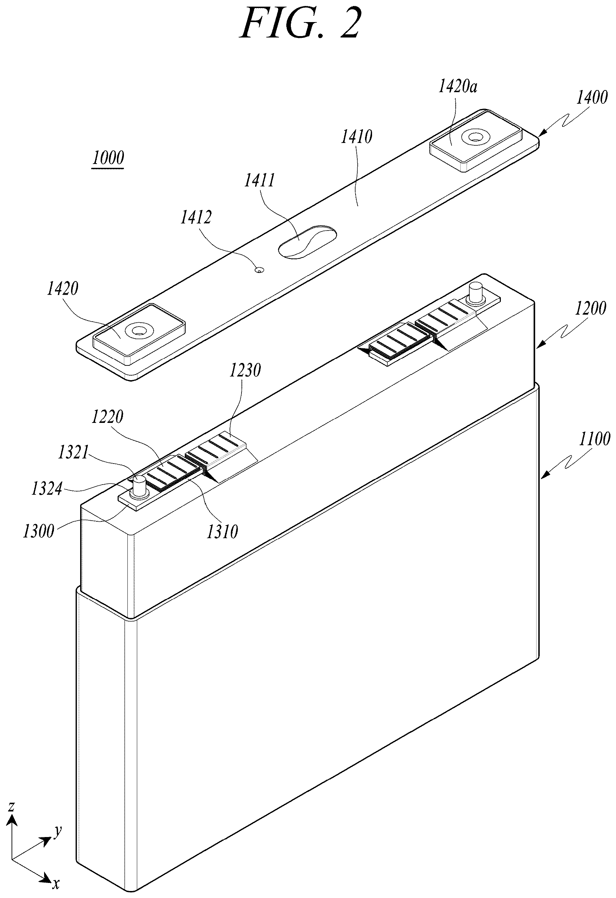

FIG. 1 is a view illustrating a secondary battery according to an example. FIG. 2 is a view illustrating a cap assembly separated from the secondary battery according to an example.

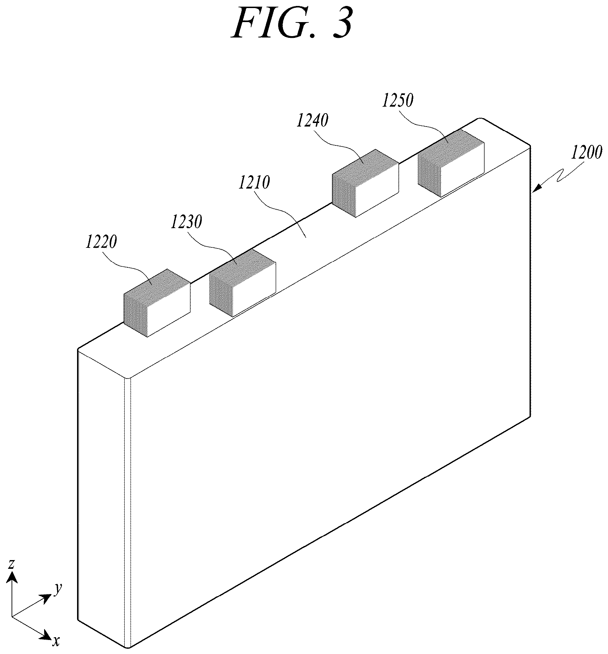

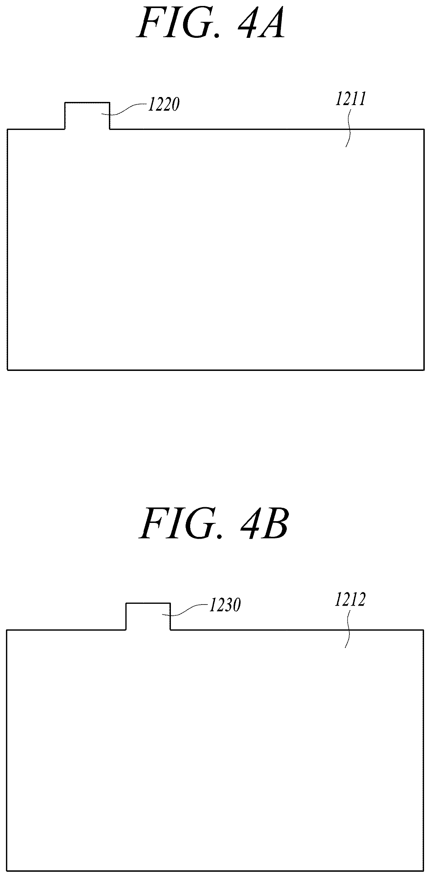

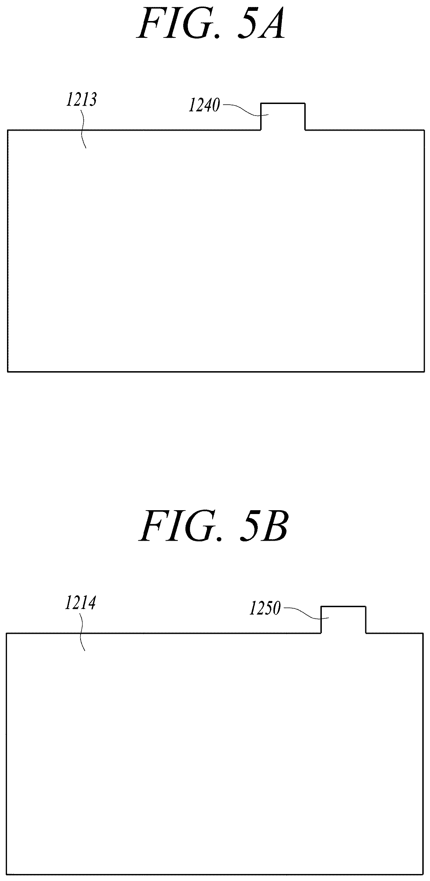

FIG. 3 is a view illustrating an electrode assembly in which a plurality of first electrode tabs and a plurality of second electrode tabs are formed on an electrode portion according to an example. FIGS. 4A and 4B are views illustrating a first electrode element and a second electrode element according to an example. FIGS. 5A and 5B are views illustrating a third electrode element and a fourth electrode element according to an example.

As illustrated in FIGS. 1 and 2, a secondary battery 1000 according to an example includes a case 1100, an electrode assembly 1200, a current collector 1300, and a cap assembly 1400.

The case 1100 forms an outer shape of the secondary battery 1000. The case 1100 may define a space capable of accommodating the electrode assembly 1200 therein, and may have an opening on one surface thereof. In this example, the case 1100 has a rectangular parallelepiped shape, but is not limited thereto and may be modified in various ways. The case 1100 may be made of a rigid material capable of protecting the electrode assembly 1200 accommodated therein. For example, the case 1100 may be made of metal such as aluminum or stainless steel.

Electrolyte may be received together with the electrode assembly 1200 in the case 1100. The electrolyte may include a lithium salt such as LiPF₆ or LiBF₄ in an organic solvent such as ethylene carbonate (EC), propylene carbonate (PC), diethyl carbonate (DEC), ethyl methyl carbonate (EMC), or dimethyl carbonate (DMC). The electrolyte may be in a liquid, solid, or gel phase.

The electrode assembly 1200 is accommodated in the case 1100. The electrode assembly 1200 may comprise any one, some or all of the features of an electrode assembly as described above. As illustrated in FIG. 3, the electrode assembly 1200 includes a plurality of first electrode tabs 1220, and a plurality of second electrode tabs 1230. A portion of the electrode assembly 1200 in which electrode(s) of the electrode assembly 1200 is/are arranged may be referred to herein as an electrode portion 1210. The plurality of first electrode tabs 1220 and the plurality of second electrode tabs 1230 may extend outwardly from the electrode portion 1210. The plurality of first electrode tabs 1220 and the plurality of second electrode tabs 1230 are placed on one end (i.e., on a same side) of the electrode portion 1210. The plurality of first electrode tabs 1220 are grouped and aligned with each other, and the plurality of second electrode tabs 1230 are grouped and aligned with each other, for example when viewing along a thickness direction of the electrode assembly 1200 (i.e., when viewing in x direction in the orientation of FIG. 1 to 3). Generally, the thickness direction of the electrode assembly may be determined as described above. The plurality of first electrode tabs 1220 aligned with one another and the plurality of second electrode tabs 1230 aligned with one another are arranged so as not to overlap when viewed in x direction (in the orientation of FIG. 1 to 3) , i.e., in the thickness direction of the electrode assembly 1200.

Herein, the term "plurality of first electrode tabs" may be used interchangeably with "the first electrode tab" as disclosed herein, unless indicated otherwise or technically inappropriate. As such, the plurality of first electrode tabs are considered to include the first electrode tab as used herein, for example by including the first electrode tab and a bundle of further electrode tabs. Moreover, the plurality of first electrode tabs may be parts of the electrode tabs.

Similarly, the term "plurality of second electrode tabs" may be used interchangeably with "the second electrode tab" as disclosed herein, unless indicated otherwise or technically inappropriate. As such, the plurality of second electrode tabs are considered to include the second electrode tab as used herein, for example by including the first electrode tab and a bundle of further electrode tabs. Moreover, the plurality of second electrode tabs may be parts of the electrode tabs.

With reference to FIG. 4, the electrode portion 1210 includes one or more first electrode elements 1211, one or more second electrode elements 1212, one or more third electrode elements 1213, one or more fourth electrode elements 1214, and a separator. In the following description and in the drawings, the terms a plurality of first electrode elements 1211, a plurality of second electrode elements 1212, a plurality of third electrode elements 1213 and a plurality of fourth electrode elements 1214 may be used without loss of generality and in an interchangeable manner with the terms a first electrode element 1211, a second electrode element 1212, a third electrode element 1213 and a fourth electrode element 1214, respectively. However, the claimed subject matter is not limited thereto, and any one of the first, second, third and fourth electrode elements may be provided as a single piece rather than as a plurality. In the drawings, and without loss of generality, the electrode assembly 1100 (and others) comprises a stack of electrodes and separator(s). The claimed subject matter is not limited thereto. The electrode assembly as disclosed herein may, alternatively, comprise a stack of electrodes and separator(s) that are wound together around a winding axis (i.e., to a jelly roll).

An active material may be applied to (deposited onto) each of the plurality of first electrode elements 1211, the plurality of second electrode elements 1212, the plurality of third electrode elements 1213, and the plurality of fourth electrode elements 1214. The plurality of first electrode elements 1211 and the plurality of second electrode elements 1212 may each be formed by applying an active material such as a transition metal oxide to a metal plate (which may be also referred to as a substrate) such as an aluminum plate. The plurality of first electrode elements 1211 and the plurality of second electrode elements 1212 may have the same polarity. In other words, both the plurality of first electrode elements 1211 and the plurality of second electrode elements 1212 may be positive electrode plates or negative electrode plates. The plurality of third electrode elements 1213 and the plurality of fourth electrode elements 1214 may each be formed by applying an active material such as graphite or carbon to a metal plate such as a copper or nickel plate. The plurality of third electrode elements 1213 and the plurality of fourth electrode elements 1214 may have the same polarity. In other words, the plurality of third electrode elements 1213 and the plurality of fourth electrode elements 1214 may be negative electrode plates or positive electrode plates. The plurality of first electrode elements 1211 and the plurality of second electrode elements 1212 may have a first polarity, and the plurality of third electrode elements 1213 and the plurality of fourth electrode elements 1214 may have a second polarity that is opposite to the first polarity.

The separators are positioned between the plurality of first to fourth electrode elements 1211, 1212, 1213, and 1214 to prevent a short circuit between the plurality of first to fourth electrode elements 1211, 1212, 1213, and 1214. The separators may be made of polyethylene, polypropylene, a composite material thereof, or the like.

The electrode portion 1210 may be formed by positioning separators between the first electrode elements 1211 and the third electrode elements 1213, which are alternately arranged, and between the second electrode elements 1212 and the fourth electrode elements 1214, which are alternately arranged. In other words, in an example, the electrode portion 1210 may be formed in such a way that one side of the electrode portion 1210 is formed by stacking the first electrode element 1211, the separator, the third electrode element 1213, and the separator in the listed order, several, or tens to hundreds of times, and a remaining side of the electrode portion 1210 is formed by stacking the second electrode element 1212, the separator, the fourth electrode element 1214, and the separator in the listed order, several or tens to hundreds of times. In another example, the electrode portion 1210 may be formed by sequentially stacking the first electrode element 1211, the separator, the third electrode element 1213, the separator, the second electrode element 1212, the separator, the fourth electrode element 1214, and the separator in the listed order, and then winding the stacked structure.

Although, in this example, the electrode assembly 1200 is illustrated as including the single electrode portion 1210, in another example, the electrode assembly 1200 may include a plurality of electrode portions 1210. The plurality of electrode portions 1210 may be electrically connected to one another.

The first to fourth electrode tabs 1220, 1230, 1240, and 1250, to which no active material is applied, are respectively formed at one end of the plurality of first to fourth electrode elements 1211, 1212, 1213, and 1214. In an example, each of the electrode elements 1211, 1212, 1213, and 1214 and the corresponding electrode tab 1220, 1230, 1240, or 1250 may be integrally formed by cutting a predetermined portion of a single metal plate using a laser or the like, such that the electrode element 1211, 1212, 1213, or 1214 and the electrode tab 1220, 1230, 1240, or 1250 remain. The plurality of electrode tabs 1220, 1230, 1240, and 1250 may be formed in a direction toward the cap assembly 1400.

Each of the first electrode tabs 1220 may be formed on a first position of the corresponding first electrode element 1211, and each of the second electrode tabs 1230 may be formed on a second position of the corresponding second electrode element 1212 (see FIGS. 4A and 4B). Similarly, each of the third electrode tabs 1240 may be formed on a third position of the corresponding third electrode element 1213, and each of the fourth electrode tabs 1250 may be formed on a fourth position of the corresponding fourth electrode element 1214 (see FIGS. 5A and 5B).

The plurality of first electrode elements 1211 and the plurality of third electrode elements 1213 may be alternately stacked with the corresponding separator interposed between adjacent electrode elements. A stack including the plurality of first electrode elements 1211 and the plurality of third electrode elements 1213 forms one half of the electrode portion 1210.

The plurality of second electrode elements 1212 and the plurality of fourth electrode elements 1214 may be alternately stacked with the corresponding separator interposed between adjacent electrode elements. A stack including the plurality of second electrode elements 1212 and the plurality of fourth electrode elements 1214 forms a remaining half of the electrode portion 1210.

The stack including the plurality of first electrode elements 1211 and the plurality of third electrode elements 1213 and the stack including the plurality of second electrode elements 1212 and the plurality of fourth electrode elements 1214 are connected in the thickness direction (x direction) of the electrode portion 1210. During formation of the electrode assembly 1200, the plurality of first electrode elements 1211 and the plurality of third electrode elements 1213 may be stacked before stacking the plurality of second electrode elements 1212 and the plurality of fourth electrode elements 1214.

When the plurality of first to fourth electrode elements 1211, 1212, 1213, and 1214 are stacked, the plurality of first electrode tabs 1220 overlap one another at the first position, and the plurality of second electrode tabs 1230 overlap one another at the second position. In other words, the plurality of first electrode tabs 1220 are grouped at the first position, and the plurality of second electrode tabs 1230 are grouped at the second position. The first position and the second position are spaced apart from each other on the electrode element. The plurality of first electrode tabs 1220 that are grouped and the plurality of second electrode tabs 1230 that are grouped may be spaced apart in the thickness direction (x direction, which may also be referred to as a width direction) and/or in the longitudinal direction (y direction) of the electrode assembly 1200.

The plurality of first electrode tabs 1220 that are grouped are primarily welded to each other, and the plurality of second electrode tabs 1230 that are grouped are primarily welded to each other.

The plurality of first electrode tabs 1220 and the plurality of second electrode tabs 1230 are electrode tabs having the same polarity. For example, the plurality of first electrode tabs 1220 and the plurality of second electrode tabs 1230 are connected to negative electrodes. In another example, the plurality of first electrode tabs 1220 and the plurality of second electrode tabs 1230 are connected to positive electrodes. The plurality of first electrode tabs 1220 and the plurality of second electrode tabs 1230 are welded at respective positions spaced apart in the width direction and the longitudinal direction of the electrode assembly 1200 to enable stable welding of a large number of electrode tabs. Then, the plurality of first electrode tabs 1220 and the plurality of second electrode tabs 1230 are welded on the current collector. In other words, although a single electrode tab is formed on each electrode element, two electrode tab groups having the same polarity but different positions are formed after stacking the electrode elements by varying the positions at which the electrode tabs are formed on the respective electrode elements. In another example, two or more electrode tabs may be formed at different positions on the same polarity side.

When the plurality of first to fourth electrode elements 1211, 1212, 1213, and 1214 are stacked, the plurality of third electrode tabs 1240 overlap one another at the third position, and the plurality of fourth electrode tabs 1250 overlap one another at the fourth position. In other words, the plurality of third electrode tabs 1240 are grouped at the third position, and the plurality of fourth electrode tabs 1250 are grouped at the fourth position. The third position and the fourth position are spaced apart from each other on the electrode element. The plurality of third electrode tabs 1240 that are grouped and the plurality of fourth electrode tabs 1250 that are grouped may be spaced apart in the width direction (x direction) and the longitudinal direction (y direction) of the electrode assembly 1200.

The plurality of third electrode tabs 1240 and the plurality of fourth electrode tabs 1250 are electrode tabs having the same polarity. For example, the plurality of third electrode tabs 1240 and the plurality of fourth electrode tabs 1250 are connected to the positive electrodes. In another example, the plurality of third electrode tabs 1240 and the plurality of fourth electrode tabs 1250 are connected to the negative electrodes.

The plurality of electrode tabs 1220, 1230, 1240, and 1250, which overlap at the respective positions, may each be joined by ultrasonic welding, laser welding, or the like to facilitate current flow.

The current collector 1300 may be disposed on an upper end of the electrode portion 1210. The electrode tabs 1220 and 1230 may be bent onto and welded to an upper surface of the current collector 1300, so that the current collector 1300 can be connected to the electrode tabs 1220 and 1230.

In the related art, welding is performed after placing the current collector the electrode tabs, and thus a high laser output is required to transmit heat to the electrode tabs located under the current collector. However, in the present disclosure, electrode tabs are disposed on the upper surface of the current collector, enabling welding with a relatively low output. Since, in the present disclosure, it is unnecessary to melt even a lower portion of the current collector, the thickness of the current collector may be increased to protect the separators provided in the electrode portion. Accordingly, damage to the separators may be prevented and durability of the secondary battery may be improved.

One side of the current collector 1300 may be connected to an electrode terminal. The electrode tabs 1220 and 1230 of the electrode portion 1210 may be electrically connected to the electrode terminal by the current collector 1300.

The current collector 1300 may be provided as two current collectors 1300. The material of each current collector 1300 may be the same as that of the first and second electrode tabs 1220 and 1230, or the third and fourth electrode tabs 1240 and 1250. In other words, each current collector 1300 may be made of aluminum, or may be made of copper or nickel.

Detailed explanation of the current collector 1300 will be provided later.

The cap assembly 1400 seals the opening of the case 1100 in which the electrode assembly 1200 is accommodated. The cap assembly 1400 includes a cap plate 1410 and terminals 1420 and 1420a.

The cap plate 1410 may have a plate shape that covers the opening of the case 1100. The cap plate 1410 may have a shape corresponding to that of the opening of the case 1100. The cap plate 1410 may be made of the same material as the case 1100, and may be fixed to the case 1100 by a method such as laser welding.

The cap plate 1410 may be formed with a vent hole 1411 and an electrolyte injection hole 1412. The vent hole 1411 opens when an internal pressure of the case 1100 exceeds a reference value. In this example, the vent hole 1411 is formed in the cap plate 1410, but in other examples, the vent hole 1411 may be formed in the case 1100. Electrolyte can be injected into the case 1100 through the electrolyte injection hole 1412.

The terminals 1420 and 1420a may be formed to protrude from the cap plate 1410. The terminals 1420 and 1420a are respectively electrically connected to the corresponding electrode tabs 1220, 1230, 1240, and 1250 through the current collectors 1300. The terminals 1420 and 1420a may each have a plate shape in a circular or polygonal (e.g., rectangular) form.

A through hole may be formed in each of the terminals 1420 and 1420a. A current collecting protrusion 1321 may be inserted into the through hole. After the current collecting protrusion 1321 is inserted into the through hole, an outer peripheral surface of an end of the current collecting protrusion 1321 and an inner peripheral surface of an end of the through hole may be welded to each other.

Insulators may be respectively positioned between the terminals 1420 and 1420a and the cap plate 1410. The insulators electrically insulate the terminals 1420 and 1420a from the cap plate 1410.

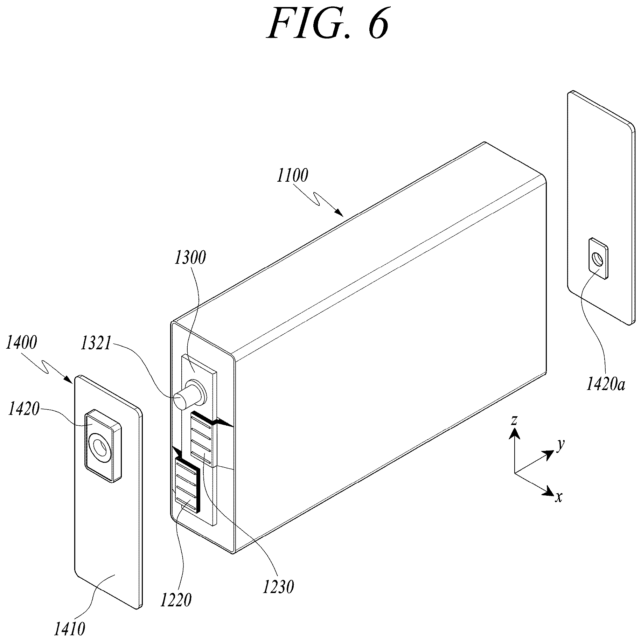

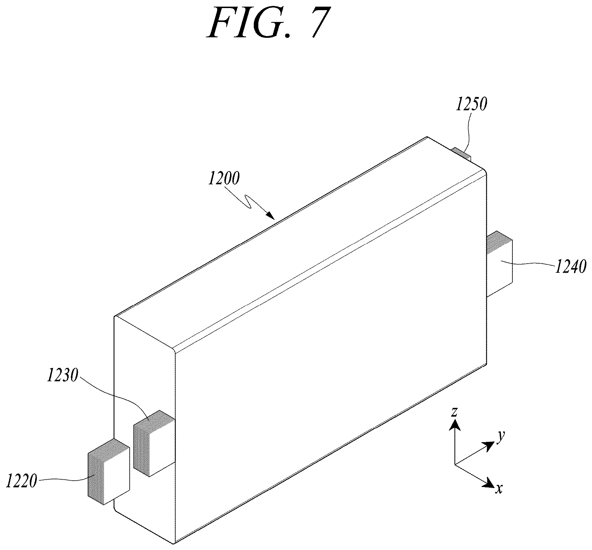

The secondary battery may be configured so that the electrode tabs 1220, 1230 protrude from two opposite sides, particularly the upper and lower surfaces, of the electrode assembly 1200, as for example shown in FIG. 6 and 7. In such examples, a first cap assembly 1400 may be provided on an upper side (that is perpendicular to y direction in FIG. 6 and 7) of the case 1100 and a second cap assembly may be provided on a lower side of the case 1100.

FIG. 6 is a perspective exploded view illustrating a secondary battery according to an example. The secondary battery comprises a case 1100, an electrode assembly 1200, a current collector 1300 and a cap assembly 1400. The thickness direction of the electrode assembly 1200 may be x direction in the orientation as shown in FIG. 6 and 7.

The case 1100 may be provided as a prismatic battery case covering the two major surfaces (those perpendicular to x direction in the orientation of FIG. 6 and 7) of the electrode assembly (see FIG. 7) and two lateral surfaces (those perpendicular to z direction in the orientation of FIG. 6 and 7) connecting therebetween. Electrode tabs 1220, 1230 protrude outward from each of an upper surface and a lower surface of the electrode assembly. In the orientation of FIG. 6 and 7, upper and lower surfaces are those perpendicular to y direction. Two cap assemblies, including the cap assembly 1400, are provided to cover and close the upper and lower surfaces that are perpendicular to y-direction in FIG. 6. Each of the cap assemblies 1400 comprises a respective cap plate 1410. Each of the cap assemblies 1400 comprises a respective terminal 1420, 1420' mounted to the respective cap plate 1410.

The electrode tabs 1220, 1230 are coupled to an upper surface of the current collector 1300. The secondary battery further comprises a pole unit that has a current collecting protrusion 1321 extending so as to be inserted into a hole formed in the terminal 1420, thereby passing through the cap plate 1410.

FIG. 7 is a perspective view illustrating an electrode assembly 1200 according to an example. The electrode assembly 1200 comprises a plurality of electrode tabs 1220, 1230, 1240, 1250 that are provided as bundles. The electrode tabs of the same polarity, either positive or negative, may be formed on and protrude from the same side of the electrode assembly 1200 with respect to the y-direction in the orientation of FIG. 7.

A first electrode tab 1220 and a second electrode tab 1230 formed on and protruding from the same side of the electrode assembly 1200 may be connected to a respective electrode having the same polarity, for example, to respective positive electrodes. A third electrode tab 1240 and a fourth electrode tab 1250 formed on and protruding from the opposite side of the electrode assembly 1200 may be connected to a respective electrode having the same polarity, for example, to a respective negative electrodes. As described above, reference is made to a respective "electrode tab" in singular form, while each of the electrode tabs 1220, 1230, 1240, 1250 may include a plurality of the electrode tabs formed to a bundle.

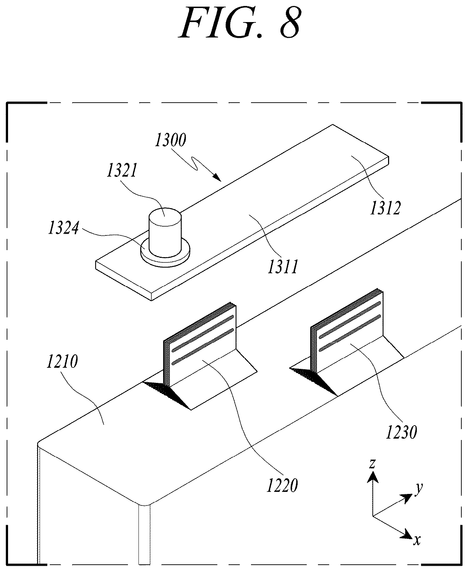

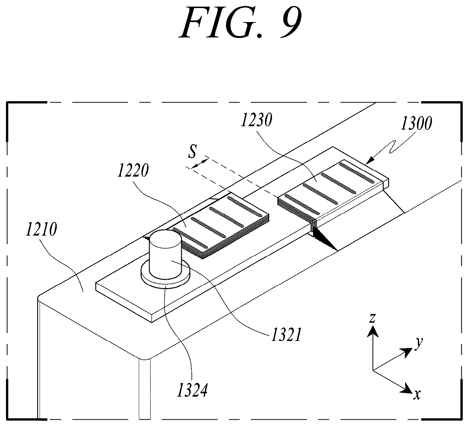

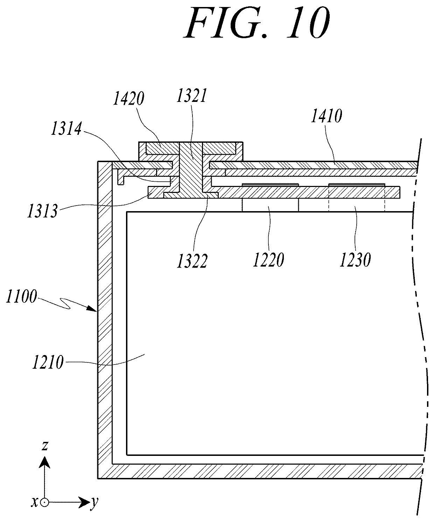

FIG. 8 is a view illustrating a state in which a current collector is disposed on an electrode assembly in which first and second electrode tabs are primarily welded according to an example. FIG. 9 is a view illustrating a state in which the first and second electrode tabs are bent onto the current collector according to an example. FIG. 10 is a cross-sectional view taken along line S-S' of FIG. 1.

Generally, a secondary battery 1000 may include a case 1100, an electrode assembly 1200, a current collector 1300, and a cap assembly 1400. The case 1100 forms the exterior appearance of the secondary battery 1000. The case 1100 may have an internal space in which the electrode assembly 1200 can be accommodated, and an opening may be formed on one side thereof. In this example, the case 1100 has a rectangular parallelepiped shape, but is not limited thereto and may be modified in various ways. The material of the case 1100 may be a rigid material capable of protecting the electrode assembly 1200 accommodated therein. For example, the case 1100 may be made of metal such as aluminum or stainless steel. Any one of the secondary battery 1000, the case 1100, the electrode assembly 1200, the current collector 1300 and the cap assembly 1400 may comprise any one, some or all of the respective features disclosed herein unless indicated otherwise or technically inappropriate.

An electrolyte together with the electrode assembly 1200 may be accommodated in the case 1100. The electrolyte may include a lithium salt such as LiPF6 or LiBF4 in an organic solvent such as EC, PC, DEC, EMC, or DMC. The electrolyte may be liquid, solid, or gel.

The electrode assembly 1200 is accommodated inside the case 1100. As shown in FIG. 3, the electrode assembly 1200 may include an electrode portion 1210, a plurality of first electrode tabs 1220, and a plurality of second electrode tabs 1230. The plurality of first electrode tabs 1220 and the plurality of second electrode tabs 1230 may be disposed at one end of the electrode portion 1210. The plurality of first electrode tabs 1220 may be aligned with one another, and the plurality of second electrode tabs 1230 may also be aligned with one another. The aligned plurality of first electrode tabs 1220 and plurality of second electrode tabs 1230 may be disposed so as not to overlap each other in the width direction (x direction) and the length direction (y direction) of the electrode assembly 1200.

The electrode portion 1210 may include a plurality of first electrode members 1211, a plurality of second electrode members 1212, a plurality of third electrode members 1213, a plurality of fourth electrode members 1214, and separators.

An active material may be coated on the plurality of first electrode members 1211, the plurality of second electrode members 1212, the plurality of third electrode members 1213, and the plurality of fourth electrode members 1214. On the plurality of first electrode members 1211 and the plurality of second electrode members 1212, an active material such as a transition metal oxide may be coated on a metal plate such as aluminum. The plurality of first electrode members 1211 and the plurality of second electrode members 1212 may have the same polarity and may be positive electrode plates. On the plurality of third electrode members 1213 and the plurality of fourth electrode members 1214, an active material such as graphite or carbon may be coated on a metal plate such as copper or nickel. The plurality of third electrode members 1213 and the plurality of fourth electrode members 1214 may have the same polarity and may be negative electrode plates.

The separators are positioned between the plurality of first to fourth electrode members 1211, 1212, 1213, and 1214 to prevent short circuits therebetween. The separators may be made of polyethylene, polypropylene, or a composite thereof.

The electrode portion 1210 may be formed by positioning separators between the first electrode member 1211 and the third electrode member 1213 and between the second electrode member 1212 and the fourth electrode member 1214, which are sequentially arranged. That is, in one example, one side of the electrode portion 1210 is formed by stacking the first electrode member 1211, a separator, the third electrode member 1213, and a separator in this order several tens to several hundreds of times, and the other side of the electrode portion 1210 is formed by stacking the second electrode member 1212, a separator, the fourth electrode member 1214, and a separator in this order several tens to several hundreds of times. In other examples, the electrode portion 1210 may be formed by stacking the first electrode member 1211, a separator, the third electrode member 1213, a separator, the second electrode member 1212, a separator, the fourth electrode member 1214, and a separator in this order and then winding the stack.

The electrode assembly 1200 may include one electrode portion 1210. In other examples, the electrode assembly 1200 may include a plurality of electrode portions 1210. The plurality of electrode portions 1210 may be electrically connected to each other.

At one end of each of the plurality of first to fourth electrode members 1211, 1212, 1213, and 1214, electrode tabs 1220, 1230, 1240, and 1250 on which no active material is coated are formed. In one example, the electrode members 1211, 1212, 1213, and 1214 and the electrode tabs 1220, 1230, 1240, and 1250 may be integrally formed by cutting predetermined portions of a single metal plate using a laser or the like so that the electrode members and the electrode tabs remain. The plurality of electrode tabs 1220, 1230, 1240, and 1250 may be formed in a direction toward the cap assembly 1400.

A first electrode tab 1220 is formed at a first position of the first electrode member 1211. A second electrode tab 1230 is formed at a second position of the second electrode member 1212 (FIG. 4a and 4b). Likewise, a third electrode tab 1240 is formed at a third position of the third electrode member 1213, and a fourth electrode tab 1250 may be formed at a fourth position of the fourth electrode member 1214 (FIG. 5a and 5b).

The plurality of first electrode members 1211 and the plurality of third electrode members 1213 may be alternately stacked with separators interposed therebetween. The stack of the plurality of first electrode members 1211 and the plurality of third electrode members 1213 forms one half of the electrode portion 1210.

The plurality of second electrode members 1212 and the plurality of fourth electrode members 1214 may be alternately stacked with separators interposed therebetween. The stack of the plurality of second electrode members 1212 and the plurality of fourth electrode members 1214 forms the other half of the electrode portion 1210.

The stack of the plurality of first electrode members 1211 and the plurality of third electrode members 1213 and the stack of the plurality of second electrode members 1212 and the plurality of fourth electrode members 1214 are connected in the width direction (x direction) of the electrode portion 1210. When forming the electrode assembly 1200, after stacking the plurality of first electrode members 1211 and the plurality of third electrode members 1213, the plurality of second electrode members 1212 and the plurality of fourth electrode members 1214 may be stacked.

When the plurality of first to fourth electrode members 1211, 1212, 1213, and 1214 are stacked, the plurality of first electrode tabs 1220 overlap each other at the first position. The plurality of second electrode tabs 1230 overlap each other at the second position. That is, the plurality of first electrode tabs 1220 are grouped at the first position, and the plurality of second electrode tabs 1230 are grouped at the second position. The first position and the second position are spaced apart from each other on the electrode members, and the grouped plurality of first electrode tabs 1220 and plurality of second electrode tabs 1230 may be spaced apart from each other in the width direction (x direction) and the length direction (y direction) of the electrode assembly 1200.

The grouped plurality of first electrode tabs 1220 may be primarily welded together, and the plurality of second electrode tabs 1230 may likewise be primarily welded together.

The plurality of first electrode tabs 1220 and the plurality of second electrode tabs 1230 are electrode tabs having the same polarity, and in order to stably weld a large number of electrode tabs, they may first be primarily welded while being spaced apart from each other in the width direction and the length direction of the electrode assembly 1200, and then secondarily welded on the current collector. That is, one electrode tab is formed on one electrode member, but by varying the positions at which the electrode tabs are formed on the respective electrode members, two groups of electrode tabs of the same polarity but at different positions may be formed after stacking the electrode members. In another example, two or more electrode tabs at different positions may be formed on the same polarity side.

When the plurality of first to fourth electrode members 1211, 1212, 1213, and 1214 are stacked, the plurality of third electrode tabs 1240 overlap each other at the third position, and the plurality of fourth electrode tabs 1250 overlap each other at the fourth position. That is, the plurality of third electrode tabs 1240 are grouped at the third position, and the plurality of fourth electrode tabs 1250 are grouped at the fourth position. The third position and the fourth position are spaced apart from each other on the electrode members, and the grouped plurality of third electrode tabs 1240 and plurality of fourth electrode tabs 1250 may be spaced apart from each other in the width direction (x direction) and the length direction (y direction) of the electrode assembly 1200.

The plurality of third electrode tabs 1240 and the plurality of fourth electrode tabs 1250 are electrode tabs having the same polarity.

The plurality of electrode tabs 1220, 1230, 1240, and 1250 overlapped at the respective positions may each be connected by ultrasonic welding, laser welding, or the like to facilitate current flow.

While a case is described above in which a plurality of electrode tabs having different polarities are formed at one end of the electrode assembly, the present invention is not limited thereto. In other examples, a plurality of electrode tabs having different polarities may be respectively formed at one end and the other end of the electrode assembly.

As shown in FIG. 6, in the secondary battery 1000 according to the modified example of the present invention, the case 1100 has an internal space in which the electrode assembly 1200 can be accommodated, and openings may be formed at both ends.

The electrode assembly 1200 may be accommodated inside the case 1100. As shown in FIG. 7, the electrode assembly 1200 may include an electrode portion 1210, a plurality of first electrode tabs 1220, a plurality of second electrode tabs 1230, a plurality of third electrode tabs 1240, and a plurality of fourth electrode tabs 1250. The plurality of first electrode tabs 1220 and the plurality of second electrode tabs 1230 may be disposed at one end of the electrode portion 1210. The plurality of third electrode tabs 1240 and the plurality of fourth electrode tabs 1250 may be disposed at the other end of the electrode portion 1210.

At one end of the electrode assembly 1200, the plurality of first electrode tabs 1220 may be aligned with one another, and the plurality of second electrode tabs 1230 may be aligned with one another. The aligned plurality of first electrode tabs 1220 and plurality of second electrode tabs 1230 may be disposed so as not to overlap each other in the width direction (x direction) and the length direction (y direction) of the electrode assembly 1200.

At the other end of the electrode assembly 1200, the plurality of third electrode tabs 1240 may be aligned with one another, and the plurality of fourth electrode tabs 1250 may be aligned with one another. The aligned plurality of third electrode tabs 1240 and plurality of fourth electrode tabs 1250 may be disposed so as not to overlap each other in the width direction (x direction) and the length direction (y direction) of the electrode assembly 1200.

The grouped plurality of first electrode tabs 1220 may be primarily welded together, and the plurality of second electrode tabs 1230 may likewise be primarily welded together.

The plurality of first electrode tabs 1220 and the plurality of second electrode tabs 1230 are electrode tabs having the same polarity, and in order to stably weld a large number of electrode tabs, they may first be primarily welded while being spaced apart from each other in the width direction and the length direction of the electrode assembly 1200, and then secondarily welded on the current collector. That is, one electrode tab is formed on one electrode member, but by varying the positions at which the electrode tabs are formed on the respective electrode members, two groups of electrode tabs having the same polarity may be formed at different positions after stacking the electrode members.

The plurality of third electrode tabs 1240 and the plurality of fourth electrode tabs 1250 are electrode tabs having the same polarity, and in order to stably weld a large number of electrode tabs, they may first be primarily welded while being spaced apart from each other in the width direction and the length direction of the electrode assembly 1200, and then secondarily welded on the current collector. The plurality of first and second electrode tabs 1220, 1230 and the plurality of third and fourth electrode tabs 1240, 1250 may have different polarities.

The current collector 1300 may include a current collecting unit 1310 and a pole unit 1320. Two current collectors 1300 may be provided, and each current collecting unit 1300 may be respectively connected to the plurality of first and second electrode tabs 1220, 1230 and the plurality of third and fourth electrode tabs 1240, 1250. The pole unit 1320 may be connected to an electrode terminal.

The current collecting unit 1310 may have a rectangular shape extending in the length direction (y direction) of the electrode assembly 1200. In the longitudinal direction of the rectangle, a connection portion 1313, a first current collecting portion 1311, and a second current collecting portion 1312 may be sequentially arranged.

The plurality of first electrode tabs 1220 may be bent and connected onto the first current collecting portion 1311, and the plurality of second electrode tabs 1230 may be bent and connected onto the second current collecting portion 1312. The plurality of first and second electrode tabs 1220, 1230 may be connected to the first and second current collecting portions 1311, 1312, respectively, by welding.

The pole unit 1320 may include a current collecting protrusion 1321 and a support portion 1322. As the pole unit 1320 and the current collecting unit 1310 are coupled, the current collecting protrusion 1321 may protrude from the upper surface of the current collecting unit 1310.

A detailed description of the connection structure between the current collecting unit 1310 and the pole unit 1320 in the current collector 1300 will be given later.

As shown in FIG. 8, the current collector 1300 may be disposed on the upper end of the electrode portion 1210. The plurality of first and second electrode tabs 1220, 1230 may be aligned at one end of the electrode portion 1210 and primarily welded. So that the current collector 1300 can be readily positioned on the electrode portion 1210, the primarily welded plurality of first and second electrode tabs 1220, 1230 may each be bent outwardly from the electrode assembly 1200.

When the current collector 1300 is disposed at one end of the electrode portion 1210, at least a portion of the lower surface of the current collector 1300 comes into contact with the plurality of first and second electrode tabs 1220, 1230.

By bending and welding the electrode tabs 1220, 1230 onto the upper surface of the current collector 1300, the current collector 1300 and the electrode tabs 1220, 1230 may be connected (FIF. 9).

Conventionally, welding was carried out after placing the current collector on top of the electrode tabs, and a high laser output was required in order to deliver heat to the electrode tabs under the current collector. In contrast, in the present invention, since the electrode tabs are disposed on the upper side of the current collector, welding is possible with lower output. Since it is not necessary to melt the lower side of the current collector, the thickness of the current collector may be increased to protect the separator. Accordingly, there is no risk of damaging the separator provided in the electrode portion, and the durability of the secondary battery may also be improved.

In addition, in the present invention, since welding is performed on the upper surface of the current collector 1300, foreign matter generated during welding can be prevented from falling downward and affecting the electrode portion.

The plurality of first electrode tabs 1220 may be bent and welded onto the upper surface of the first current collecting portion 1311 of the current collector 1300. The plurality of second electrode tabs 1230 may be bent and welded onto the upper surface of the second current collecting portion 1312 of the current collector 1300. The plurality of first and second electrode tabs 1220, 1230 may be disposed spaced apart from each other by a predetermined distance in the length direction (y direction) of the current collector 1300 according to the arrangement positions of the first current collecting portion 1311 and the second current collecting portion 1312.

The separation distance s between the plurality of first and second electrode tabs 1220, 1230 may be 5 to 15% of the length of the current collector 1300. If the separation distance s is less than 5% of the length of the current collector 1300, welding burrs generated by the first and second electrode tabs during secondary welding may become concentrated between the first and second electrode tabs, such that the weld thickness may become large and non-uniform. If the separation distance s exceeds 15% of the length of the current collector 1300, the second electrode tabs 1230 become adjacent to the outer edge of the current collector 1300, which may affect the electrode portion during welding. The other side of the current collector 1300 may be connected to the electrode terminal. Specifically, the current collecting protrusion 1321 of the pole unit 1320 may pass through the opening of the cap plate 1410 and be coupled to the electrode terminal 1420.

The cap assembly 1400 seals the opening of the case 1100 in which the electrode assembly 1200 is accommodated. The cap assembly 1400 may include a cap plate 1410 and a terminal 1420.

The cap plate 1410 may have a plate shape covering the opening of the case 1100. The cap plate 1410 may have a shape corresponding to the shape of the opening of the case 1100. The cap plate 1410 may be formed of the same material as the case 1100, and may be fixed to the case 1100 by a method such as laser welding.

The terminal 1420 may be coupled onto the cap plate 1410. The terminal 1420 may have a plate shape with a circular, oval or polygonal (e.g., square, rectangular, pentagonal, hexagonal, octagonal etc.) base or a combination thereof. A through-hole may be formed in the terminal 1420.

As shown in FIG. 10, when the cap assembly 1400 seals the opening of the case 1100, the current collecting protrusion 1321 of the current collector 1300 may pass through the opening of the cap plate 1410 and be inserted into the through-hole of the electrode terminal 1420. The lower structure of the cap assembly 1400 may be supported while contacting the upper surface of the stopper 1314 of the current collector 1300. Accordingly, the cap assembly 1400 may maintain a stable distance from the electrode assembly 1200.

After the current collecting protrusion 1321 is inserted into the through-hole of the electrode terminal 1420, the outer circumferential surface of the end portion of the current collecting protrusion 1321 and the inner circumferential surface of the end portion of the through-hole may be welded.

As the current collecting unit 1310 of the current collector 1300 is connected to the plurality of first and second electrode tabs 1220, 1230, and the pole unit 1320 is connected to the electrode terminal 1420, the electrode tabs 1220, 1230 of the electrode portion 1210 may be electrically connected to the electrode terminal 1420.

Two current collectors 1300 may be provided. The material of the current collectors 1300 may be the same as that of the first and second electrode tabs 1220, 1230 or the third and fourth electrode tabs 1240, 1250, respectively. That is, the current collector 1300 may be made of aluminum, or may be made of copper or nickel.

The two current collectors 1300 may be disposed spaced apart from each other at one end of the electrode assembly, or may be respectively disposed at both ends of the electrode assembly. A vent hole 1411 and an electrolyte injection port 1412 may be formed in the cap plate 1410. The vent hole 1411 is opened when the internal pressure of the case 1100 exceeds a reference value. In this example, the vent hole 1411 is formed in the cap plate 1410, but in another example, the vent hole 1411 may be formed in the case 1100. Electrolyte may be injected into the case 1100 through the electrolyte injection port 1412.

An insulating member may be positioned between the terminals 1420, 1420a and the cap plate 1410. The insulating member electrically insulates the terminals 1420, 1420a from the cap plate 1410.

Accordingly, the secondary battery may be configured so that the electrode tabs 1220, 1230 protrude from two opposite sides, particularly the upper and lower surfaces, of the electrode assembly 1200, as for example shown in FIG. 6 and 7. In such examples, a first cap assembly 1400 may be provided on an upper side (that is perpendicular to y direction in FIG. 6 and 7) of the case 1100 and a second cap assembly may be provided on a lower side of the case 1100.

The case 1100 may be provided as a prismatic battery case covering the two major surfaces (those perpendicular to x direction in the orientation of FIG. 6 and 7) of the electrode assembly (see FIG. 7) and two lateral surfaces (those perpendicular to z direction in the orientation of FIG. 6 and 7) connecting therebetween. Electrode tabs 1220, 1230 protrude outward from each of an upper surface and a lower surface of the electrode assembly. In the orientation of FIG. 6 and 7, upper and lower surfaces are those perpendicular to y direction. Two cap assemblies, including the cap assembly 1400, are provided to cover and close the upper and lower surfaces that are perpendicular to y-direction in FIG. 6. Each of the cap assemblies 1400 comprises a respective cap plate 1410. Each of the cap assemblies 1400 comprises a respective terminal 1420, 1420' mounted to the respective cap plate 1410. The thickness direction of the electrode assembly 1200 may be x direction in the orientation as shown in FIG. 6 and 7.

The electrode tabs 1220, 1230 are coupled to an upper surface of the current collector 1300. The secondary battery further comprises a pole unit that has a current collecting protrusion 1321 extending so as to be inserted into a hole formed in the terminal 1420, thereby passing through the cap plate 1410.

As shown in FIG. 7, the electrode assembly 1200 comprises a plurality of electrode tabs 1220, 1230, 1240, 1250 that are provided as bundles. The electrode tabs of the same polarity, either positive or negative, may be formed on and protrude from the same side of the electrode assembly 1200 with respect to the y-direction in the orientation of FIG. 7.

A first electrode tab 1220 and a second electrode tab 1230 formed on and protruding from the same side of the electrode assembly 1200 may be connected to a respective electrode having the same polarity, for example, to respective positive electrodes. A third electrode tab 1240 and a fourth electrode tab 1250 formed on and protruding from the opposite side of the electrode assembly 1200 may be connected to a respective electrode having the same polarity, for example, to a respective negative electrodes. As described above, reference is made to a respective "electrode tab" in singular form, while each of the electrode tabs 1220, 1230, 1240, 1250 may include a plurality of the electrode tabs formed to a bundle.

FIGS. 8 and 9 are perspective views illustrating an electrode assembly 1210, a first electrode tab 1220, a second electrode tab 1230, a current collector 1300 and a pole unit 1321 (the current collecting protrusion 1321) according to an example.

The reference numeral 1210 may refer herein to an electrode portion of electrode assembly, which may be a part of the electrode assembly on an upper or lower end in z-direction in the orientation of FIGS. 8 and 9, where uncoated portions of the electrodes are formed. For simplifying the description, the reference numeral 1210 is considered to indicate the electrode assembly nonetheless.

As shown in FIG. 8, the electrode tabs 1220, 1230 each comprises a plurality of electrode tabs that are bundled, e.g., pressed together and welded (as symbolized by two thick lines extending in y-direction in FIGS. 8 and 9), so that the electrode tabs of each of the electrode tabs 1220, 1230 can be mechanically deformed together.

As shown in FIG. 9, the electrode tabs 1220, 1230 are spaced from each other in y-direction in the orientation of FIGS. 8 and 9 by a distance S (see FIG. 9). In addition, the bundles of the first electrode tab 1220 and the second electrode tab 1230 are spaced from each other also in x-direction in the orientation of FIGS. 8 and 9 so as to allow the current collector 1300 to be placed therebetween. After placing the current collector 1300 between the first and second electrode tabs 1220, 1230 as shown in FIG. 9, the electrode tabs 1220, 1230 are bent so as to rest on an upper surface of the current collector 1300. Then a welding of the electrode tabs 1220, 1230 onto the upper surface of the current collector 1300 is performed, as symbolized by thick lines that extend in x-direction in FIG. 9.

In this example, the first electrode tab 1220 and the second electrode tab 1230 are formed on a same side with respect to the pole unit 1321 (the current collecting protrusion 1321), so that paths for electric current between the pole unit 1321 and either one of the first electrode tab 1220 and the second electrode tab 1230 are within an acute angle in a plan view.

FIG. 10 is a cross-sectional partial view of a secondary battery illustrating an electrode assembly, electrode tabs, a current collector and a pole unit according to an example. The electrode assembly is accommodated in a case 1100.

Electrode tabs 1220, 1230 are coupled to an un upper surface of the current collector. The pole unit comprises a current collecting protrusion 1321 and a support portion 1322. The pole unit is provided as a separate piece from the current collector and extends through an opening formed through the current collector in a connection portion 1313. The current collecting protrusion 1321 is physically and electrically connected to a terminal 1420 on an outer side of the cam assembly. The support portion is received in a recessed region formed on a lower surface of the current collector. The current collector further comprises a stopper 1314 that protrudes from the upper surface of the current collector and surrounds the current collecting protrusion 1321 of the pole unit.

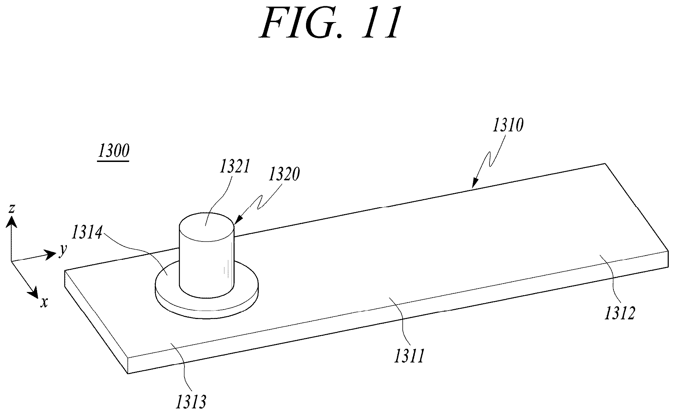

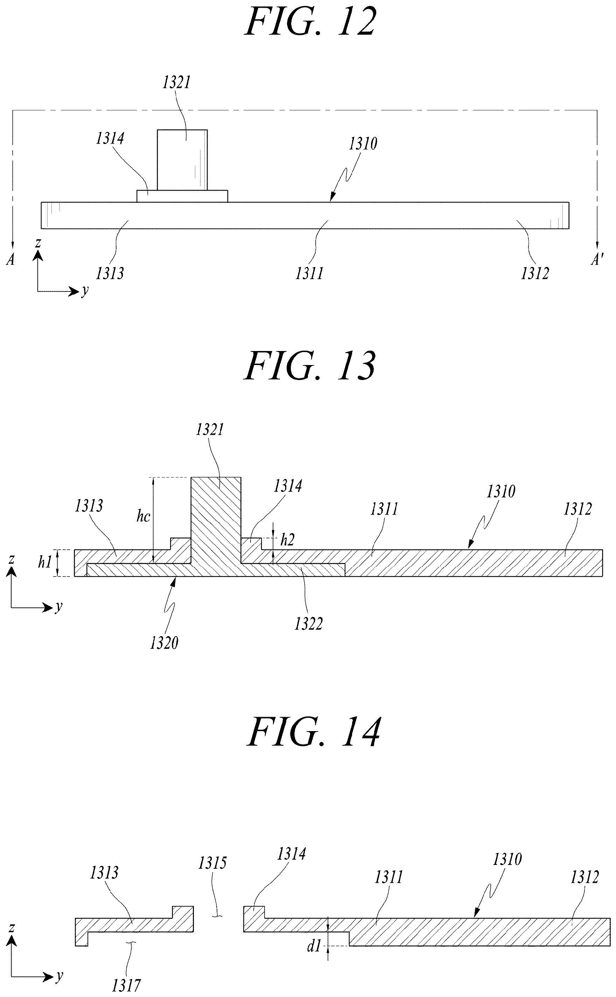

FIG. 11 is a view illustrating the current collector according to an example. FIG. 12 is a view illustrating the current collector according to an example. FIG. 13 is a cross-sectional view taken along line A-A' of FIG. 12.

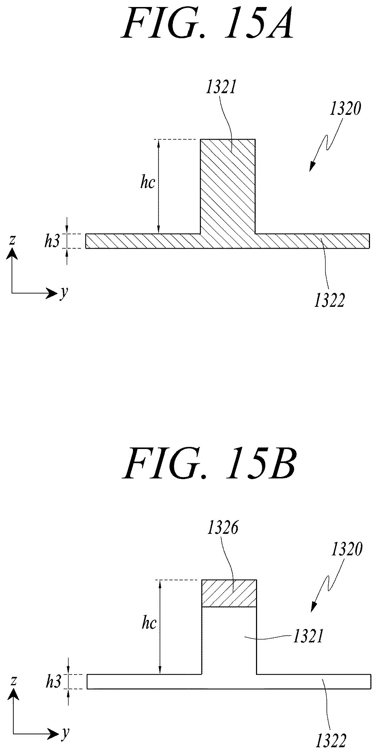

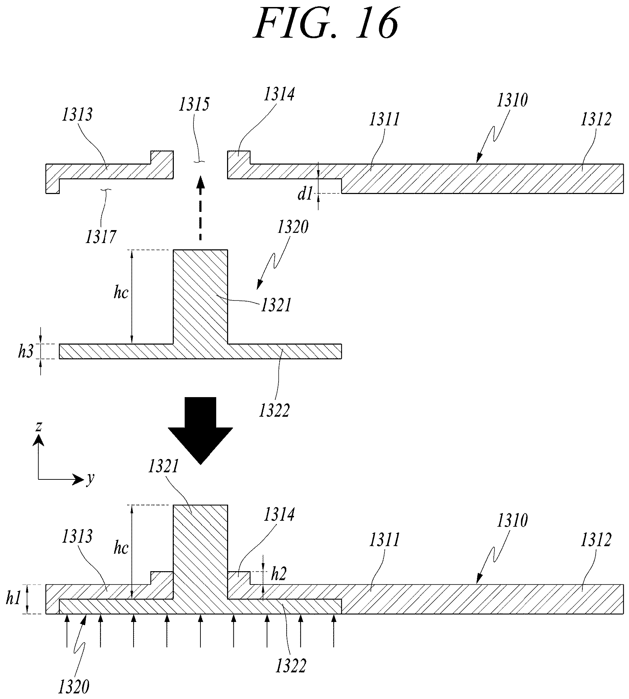

FIG. 14 is a view illustrating a current collecting unit according to an example. FIGS. 15A and 15B are views illustrating a pole unit according to an example. FIG. 16 is a view illustrating a process of assembling the current collecting unit with the pole unit according to an example.

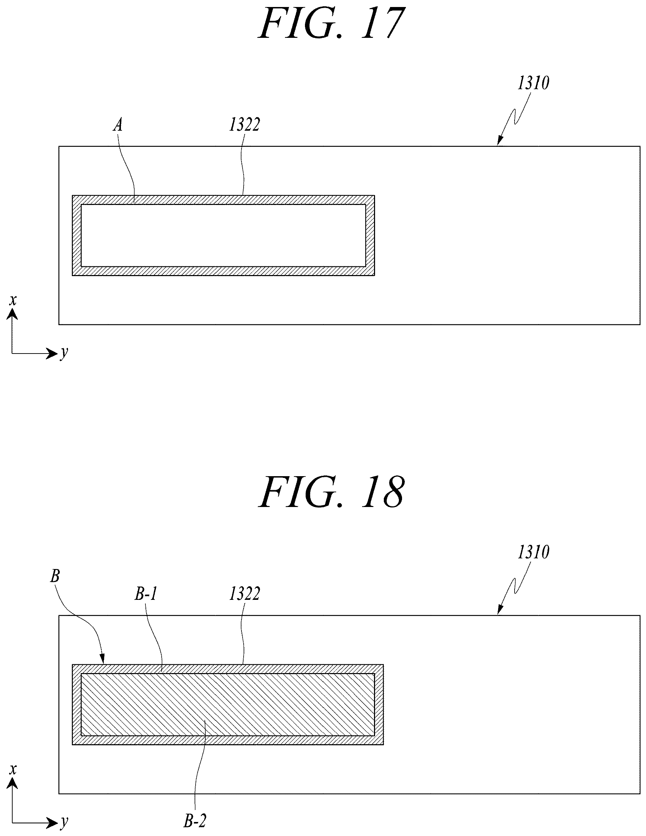

FIG. 17 is a view illustrating a welding region on a lower surface of the current collecting unit according to an example. FIG. 18 is a view illustrating a welding region on the lower surface of the current collecting unit according to an example.

As illustrated in FIGS. 11 to 13, the current collector 1300 may include a current collecting unit 1310 and a pole unit 1320. The current collecting unit 1310 may be connected to the plurality of electrode tabs 1220 and 1230. The pole unit 1320 may be connected to the corresponding electrode terminal.

The current collecting unit 1310 may have various shapes according to an arrangement of the electrode tabs and a connection configuration of the electrode portion.

For example, as illustrated in FIG. 11, the current collecting unit 1310 may have a rectangular shape extending in the longitudinal direction (y direction) of the electrode assembly 1200. The current collecting unit 1310 may include a connection portion 1313, a first current collecting portion 1311, and a second current collecting portion 1312 that are successively arranged in a longitudinal direction of the rectangular shape. The connection portion 1313, the first collecting portion 1311, and the second collecting portion 1312 may be made of the same material and may be integrally formed.

The first current collecting portion 1311 may be welded to the plurality of first electrode tabs 1220. The plurality of first electrode tabs 1220 may be bent onto and welded to an upper surface of the first current collecting portion 1311. The second current collecting portion 1312 may be welded to the plurality of second electrode tabs 1230. The plurality of second electrode tabs 1230 may be bent onto and welded to an upper surface of the second current collecting portion 1312. The first current collecting portion 1311 and the second current collecting portion 1312 may have a predetermined height h1. Specifically, the height of each of the first current collecting portion 1311 and the second current collecting portion 1312 may range from 0.5 mm to 3.0 mm.

The connection portion 1313 may be connected to one side of the first current collecting portion 1311. The second current collecting portion 1312 may be connected to a remaining side of the first current collecting portion 1311. Because the first current collecting portion 1311 and the second current collecting portion 1312 are disposed to be spaced apart from each other in the longitudinal direction, the plurality of first electrode tabs 1220 and the plurality of second electrode tabs 1230 do not interfere with each other when welded to the first current collecting portion 1311 and the second current collecting portion 1312, respectively.

The connection portion 1313 may be formed to have the same thickness as the first current collecting portion 1311 and the second current collecting portion 1312. The thickness of the connection portion 1313 may range from 0.5 mm to 3.0 mm. A curvature radius of an edge of the upper surface of the current collecting unit 1310 may range from 0.25 mm to 0.35 mm.

The connection portion 1313 may be coupled to the pole unit 1320.

An opening may be formed in the connection portion 1313.

A stopper 1314 may be disposed on an upper surface of the connection portion 1313. The stopper 1314 may protrude from the upper surface of the connection portion 1313 by a predetermined height h2. When the current collector 1300 is coupled to another component, a lower limit position of the component to be coupled to the current collector 1300 may be defined by the stopper 1314. Because the electrode tabs are placed on and welded to the first current collecting portion 1311 and the second current collecting portion 1312 of the current collecting unit 1310, welded portions each form a predetermined thickness. In the case where thicknesses of the welded portions on the first current collecting portion 1311 and the second current collecting portion 1312 are not equal to each other, the component coupled to the current collector 1300 may not be properly leveled. Such improper leveling may reduce airtightness of the assembled secondary battery or lead to an assembly defect. As the stopper 1314 is provided on the upper surface of the current collector 1300, the component assembled to the current collector 1300 may be horizontally aligned.

The height h2 of the stopper 1314 may be equal to or greater than a height to which the plurality of first electrode tabs 1220 and the plurality of second electrode tabs 1230 are welded on the upper surface of the current collector 1300. As the numbers of first electrode tabs 1220 and second electrode tabs 1230 increase, that is, as the thickness of the electrode assembly 1200 (in the x direction in FIG. 2) increases, the height h2 of the stopper 1314 may also increase. The height h2 of the stopper 1314 may be 1% to 5% of the thickness of the electrode assembly 1200, and may be 2.5%, for example. In two current collectors 1300 disposed on the electrode portion 1210, the stoppers 1314 may have the same height.

For example, the height (h2) of the stopper 1314 may be determined according to the following equation:
$h 2 = A \times 0.005 \times B / C$

Here, A is the thickness of the electrode assembly, B is the length of the electrode tabs, and C is the number of groups of electrode tabs connected to electrodes of a same polarity, wherein electrode tabs at the same position are aligned with one another in each of the groups.

The claimed subject matter may allow for a large number of electrode tabs to be welded onto the current collector 1300 while forming a plurality of groups, and as the number of same-polarity electrode-tab groups increases, the height of the stopper 1314 may decrease.

The stoppers 1314 that are provided on different current collecting plates may have a same height.

The stopper 1314 may have a square plate shape, a rectangular plate shape, or a disc shape. An upper surface of the stopper 1314 may be formed as a flat surface to support a component to be assembled thereto and may have a predetermined area. A cross-sectional area of the stopper 1314 may be 3% to 6% of the upper surface of the current collecting unit 1310. The stopper 1314 may be integrally formed with the connection portion 1313.

The stopper 1314 may protrude upward from the upper surface of the connection portion 1313, and the height h2 thereof may be smaller than the thickness of the current collecting unit 1310. Specifically, the height h2 of the stopper 1314 may be 30% to 50% of the height h1 of an end of the current collecting unit 1310, that is, an end of the first or second current collecting portion 1311 or 1312. Due to the stopper 1314, a stepped structure of the current collecting unit 1310 may be formed.

As illustrated in FIG. 14, an opening may be formed in the stopper 1314. The opening may be formed to pass through a center of the stopper 1314. In this case, the opening of the stopper 1314 may be connected to the opening of the connection portion 1313 to form a continuous opening 1315. The current collecting protrusion 1321 of the pole unit 1320 may be inserted through the opening 1315.

A recessed region 1317 may be formed in the lower surface of the current collecting unit 1310. The recessed region 1317 may have a rectangular plate shape and may define a vacant space above the lower surface of the current collecting unit 1310. The recessed region 1317 may be formed in a lower surface of the connection portion 1313 and a portion of a lower surface of the first current collecting portion 1311. A depth d1 of the recessed region 1317 may be 30% to 50% of the height h1 of the end of the current collecting unit 1310.

The pole unit 1320 may be coupled to the current collecting unit 1310. One side of the pole unit 1320 may be connected to the current collecting unit 1310, and a remaining side thereof may be connected to the corresponding electrode terminal. The electrode tabs 1220 and 1230 of the electrode portion 1210 may be electrically connected to the electrode terminal by the pole unit 1320.

The pole unit 1320 may be electrically connected to the corresponding electrode terminal. A material of the pole unit 1320 may be the same as or different from that of the current collecting unit 1310. For example, the current collecting unit 1310 and the pole unit 1320 may both be made of aluminum. Alternatively, the current collecting unit 1310 may be made of copper, and the pole unit 1320 may be made of aluminum. According to the present disclosure, as the current collecting unit 1310 and the pole unit 1320 are formed as separate components, flexibility in selecting materials and dimensions of components may be increased.

As illustrated in FIGS. 10A and 10B, the pole unit 1320 may include a current collecting protrusion 1321 and a support portion 1322. The current collecting protrusion 1321 may have a cylindrical shape having a predetermined height hc. The current collecting protrusion 1321 may be electrically connected to the corresponding electrode terminal. The current collecting protrusion 1321 may be inserted into the opening 1315 of the connection portion 1313 and the stopper 1314. In order for a component fitted over the current collecting protrusion 1321 to be stably supported on the stopper 1314, the stopper 1314 may have a predetermined area. An area of a horizontal cross section of the stopper 1314 may be 2 times to 5 times an area of a horizontal cross section of the current collecting protrusion 1321. Because a cross-sectional area of the stopper 1314 is formed to be larger than a cross-sectional area of the current collecting protrusion 1321, the component may be stably supported.

In order to facilitate coupling between the current collecting protrusion 1321 and the component, the height hc of the current collecting protrusion 1321 may be formed to be greater than the height h2 of the stopper 1314 within a predetermined range. Specifically, the height h2 of the stopper 1314 may be 10% to 20% of the height hc of the current collecting protrusion 1321, and may be 15%, for example. When the height h2 of the stopper 1314 is greater than 20% of the height hc of the current collecting protrusion 1321, a height difference between the upper surface of the stopper 1314 and the upper surfaces of the first and second current collecting portions 1311 and 1312 increases, thereby making it difficult to stably support the component.

In the case of a negative electrode current collector, an upper end of the current collecting protrusion 1321 made of copper may be plated with nickel. A height of a nickel plating layer 1326 may be 1.5 mm to 2.5 mm from the upper end of the current collecting protrusion 1321. The height of the nickel plating layer 1326 may be 30% to 50% of the height of the current collecting protrusion 1321. A thickness of the nickel plating layer 1326 may range from 2 µm to 4 µm. As the upper end of the current collecting protrusion 1321 is plated with nickel, welding strength when the current collecting protrusion 1321 is welded to the electrode terminal may be further enhanced.

The support portion 1322 may be connected to a lower end of the current collecting protrusion 1321 and may have a rectangular plate shape. The support portion 1322 may support the current collecting protrusion 1321 such that the current collecting protrusion 1321 is perpendicular to the current collecting unit 1310 when the pole unit 1320 is connected to the current collecting unit 1310. The current collecting protrusion 1321 and the support portion 1322 may be integrally formed. The support portion 1322 may be received in the recessed region 1317 of the current collecting unit 1310. A height h3 of the support portion 1322 may be the same as the depth d1 of the recessed region. In other words, a lower surface of the support portion 1322 and a lower surface of the current collecting unit 1310 may be flush with each other (see FIG. 11).

After the support portion 1322 is fitted into the recessed region 1317 of the current collecting unit 1310, the support portion 1322 may be jointed with the current collecting unit 1310 by welding. The welding may be performed on the lower surface of the support portion 1322. Due to the welding, a welding region A or B may be formed on the lower surface of the support portion 1322.

As illustrated in FIG. 17, in an example , the welding region may be formed on an outer periphery (region A) of the lower surface of the support portion 1322. The support portion 1322 overlaps the current collecting unit 1310. Although the plate-shaped current collecting unit 1310 has the predetermined thickness h1, in a portion in which the recessed region 1317 that receives the support portion 1322 is formed, the thickness of the current collecting unit 1310 is reduced. Accordingly, when laser output is relatively high during welding, a welding mark may be formed even on the upper surface of the current collecting unit 1310, and flatness of the upper surface may be degraded. In order to prevent the foregoing issue, the welding may be performed only on the outer periphery (region A) of the support portion 1322 in which the thickness of the current collecting unit 1310 is secured.

In a modified example, a welding region (region B) may be formed over an entire lower surface of the support portion 1322 (see FIG. 18). In order to stably fix the pole unit 1320 to the current collecting unit 1310, the entire lower surface of the support portion 1322 may be welded to increase a welding area. In this case, laser output on an outer periphery (region B-1) of the lower surface of the support portion 1322 may be higher than laser output on an inner side (region B-2) of the lower surface of the support portion 1322. Because a thickness of a portion of the current collecting unit 1310 that is adjacent to the inner side (region B-2) of the lower surface of the support portion 1322 is smaller than that at the outer periphery, the laser output may be adjusted to a lower level.

According to the present disclosure, a sufficient welding area may be secured by the rectangular support portion 1322, so that the current collecting protrusion 1321 may be stably connected to the current collecting unit 1310. In addition, because the support portion 1322 is formed in a rectangular plate shape and is received in the recessed region 1317, undesired rotation of the current collecting protrusion 1321 may be prevented.

A width of the current collector 1300 may be 0.3 times to 0.8 times a thickness of the electrode assembly 1200. The current collector 1300 may have a thickness of 0.5 mm to 3.0 mm.

An insulator may be disposed under the current collector 1300. The insulator may be an insulating plate or an insulating film. The insulator may more reliably protect the electrode tabs 1220 and 1230 and the electrode portion 1210.

The insulator may be applied or attached to a lower surface of the current collector 1300 with a predetermined thickness after the pole unit 1320 is welded to the current collecting unit 1310.

In this example, a structure in which the connection portion 1313 is coupled to the pole unit 1320 has been described; however, the present disclosure is not limited thereto, and the connection portion 1313 that may have various shapes may be coupled to the pole unit 1320 in various manners.

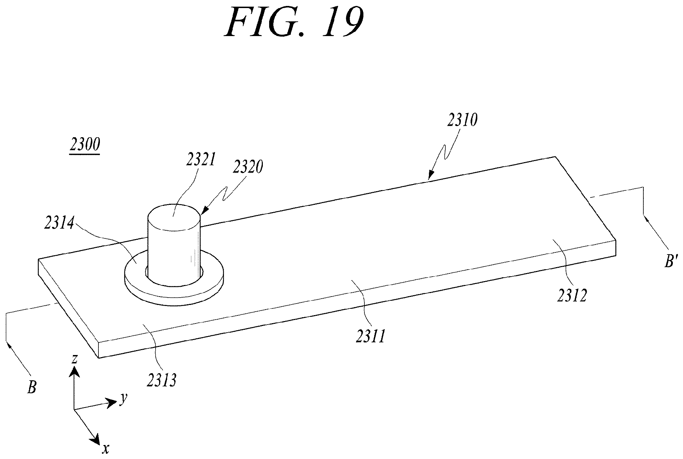

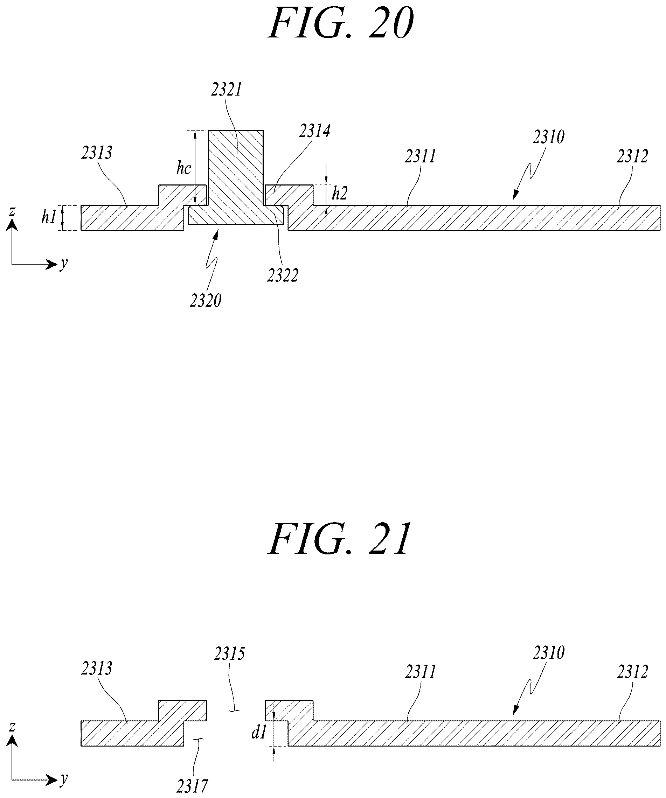

FIG. 19 is a view illustrating a connection portion and a pole unit in the current collector according to an example. FIG. 20 is a cross-sectional view taken along line B-B' of FIG. 19.

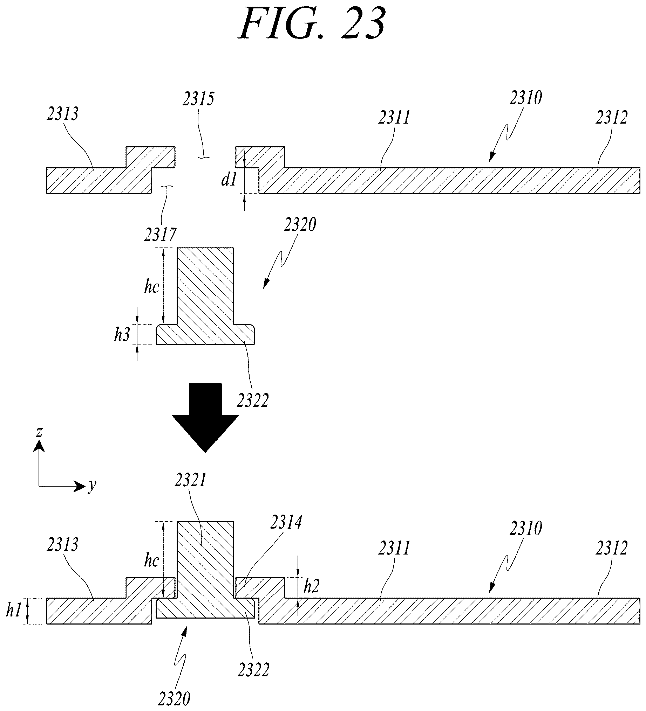

FIG. 21 is a view illustrating a current collecting unit according to an example. FIGS. 17A and 17B are views illustrating the pole unit according to an example. FIG. 23 is a view illustrating a process of assembling the current collecting unit with the pole unit according to an example.

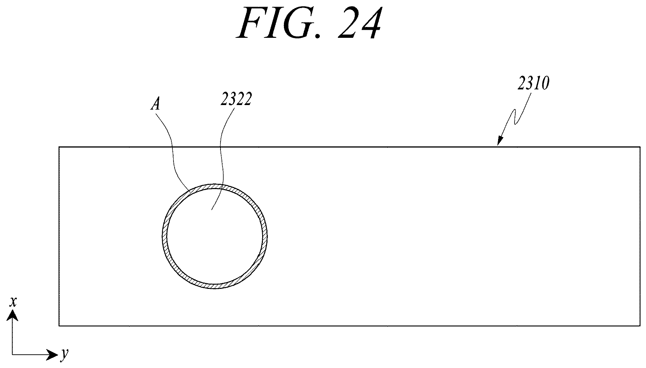

FIG. 24 is a view illustrating a welding region on a lower surface of the current collecting unit according to an example.

As illustrated in FIG. 19, a current collector 2300 may include a current collecting unit 2310 and a pole unit 2320. The current collecting unit 2310 may be connected to the plurality of electrode tabs 1220 and 1230. The pole unit 2320 may be connected to the corresponding electrode terminal.

The current collecting unit 2310 may have a rectangular shape extending in the longitudinal direction (y direction) of the electrode assembly 1200, and may include a connection portion 2313, a first current collecting portion 2311, and a second current collecting portion 2312 that are successively arranged. The connection portion 2313, the first current collecting portion 2311, and the second current collecting portion 2312 may be made of the same material and may be integrally formed.

The first current collecting portion 2311 may be welded to the plurality of first electrode tabs 1220. The second current collecting portion 2312 may be welded to the plurality of second electrode tabs 1230. The connection portion 2313 may be formed to have the same thickness as the first current collecting portion 2311 and the second current collecting portion 2312. The thickness of the connection portion 2313 may range from 0.5 mm to 3.0 mm. A radius of curvature of an edge of an upper surface of the current collector 2300 may range from 0.25 mm to 0.35 mm.

The connection portion 2313 may be coupled to the pole unit 2320.

A stopper 2314 may be disposed on an upper surface of the connection portion 2313. The stopper 2314 may protrude from the upper surface of the connection portion 2313 by a predetermined height h2. When the current collector 2300 is coupled to another component, a lower limit position of the component to be coupled to the current collector 2300 may be defined by the stopper 2314. With the stopper 2314 provided on the upper surface of the current collector 2300, the component assembled to the current collector 2300 may be horizontally aligned.

The height h2 of the stopper 2314 may be 1% to 5% of the thickness of the electrode assembly 1200, and may be 2.5%, for example. In two current collectors 2300 disposed on the electrode portion 1210, the stoppers 2314 may have the same height.

The height (h2) of the stopper 2314 may be determined according to the Equation 1 as follows:

$h 2 = A \times 0.005 \times B / C$ (Equation 1)

Here, A is the thickness of the electrode assembly, B is the length of the electrode tabs, and C is the number of groups of electrode tabs connected to electrodes of a same polarity, wherein electrode tabs at the same position are aligned with one another in each of the groups.

The stoppers 2314 of different current collecting plates 2300 may have the same height.

Additionally or alternatively, a ratio of the height (hc) of the current collecting protrusion 2321 to a diameter (or a maximum extent in a plan view) of the support portion 2322 may be 0.35 to 0.95, or 0.45 to 0.85, or 0.55 to 0.75. If said ratio is within this range, a good balance between space occupancy and mechanical stability may be achieved.

Additionally or alternatively, a ratio of the diameter of the current collecting protrusion 2321 to a thickness (height) of the support portion 2322 may be 0.05 to 0.35, or 0.1 to 0.3, or 0.15 to 0.25. If said ratio is within this range, a good balance between space occupancy and mechanical stability may be achieved.

The stopper 2314 may have a square plate shape, a rectangular plate shape, or a disc shape. An upper surface of the stopper 2314 may be formed as a flat surface to support a component to be assembled thereto and may have a predetermined area. A cross-sectional area of the stopper 2314 may be 3% to 6% of the upper surface of the current collecting unit 2310. The stopper 2314 may be integrally formed with the connection portion 2313.

The stopper 2314 may protrude upward from the upper surface of the connection portion 2313, and the height h2 thereof may be equal to or smaller than the thickness of the current collecting unit 2310. Specifically, the height h2 of the stopper 2314 may be 30% to 100% of the height h1 of an end of the current collecting unit 2310, that is, an end of the first or second current collecting portion 2311 or 2312. Due to the stopper 2314, a stepped structure of the current collecting unit 2310 may be formed.

As illustrated in FIG. 21, an opening 2315 may be formed in the stopper 2314. The opening 2315 may be formed to pass through a center of the stopper 2314. The current collecting protrusion 2321 of the pole unit 2320 may penetrate through the opening 2315.

A recessed region 2317 may be formed in a lower surface of the current collecting unit 2310. The recessed region 2317 may have a disc shape or a rectangular plate shape and may define a vacant space above the lower surface of the connection portion of the current collecting unit 2310. A position at which the recessed region 2317 is formed may be under the stopper 2314. A cross-sectional area of the recessed region 2317 may be smaller than a cross-sectional area of the stopper 2314. A depth d1 of the recessed region 2317 may be equal to the height h1 of the end of the current collecting unit 2310. Accordingly, the recessed region 2317 may be integrated with the opening formed in the connection portion 2313.

The cross-sectional area of the recessed region 2317 may be larger than a cross-sectional area of the opening 2315 of the stopper 2314. That is, an upper surface of the recessed region 2317 may be a lower surface of the stopper 2314. Under the opening 2315 of the stopper 2314, the recessed region 2317 may be formed to have a cross-sectional area larger than the opening 2315 of the stopper 2314.

The pole unit 2320 may be coupled to the current collecting unit 2310 and may electrically connect the electrode tabs 1220 and 1230 of the electrode portion 1210 to the corresponding electrode terminal. A material of the pole unit 2320 may be the same as or different from that of the current collecting unit 2310.

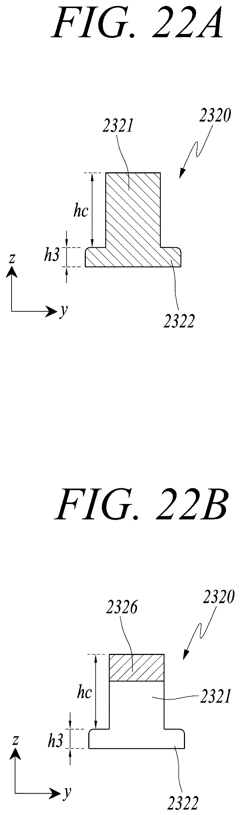

As illustrated in FIGS. 22A and 22B, the pole unit 2320 may include a current collecting protrusion 2321 and a support portion 2322. The current collecting protrusion 2321 may have a cylindrical shape having a predetermined height hc. The current collecting protrusion 2321 may be electrically connected to the corresponding electrode terminal. The current collecting protrusion 2321 may be inserted into the opening 2315 of the stopper 2314. A diameter of the current collecting protrusion 2321 may be smaller than an inner diameter of the opening 2315.

In order for a component fitted over the current collecting protrusion 2321 to be stably supported on the stopper 2314, the stopper 2314 may have a predetermined area. An area of a horizontal cross section of the stopper 2314 may be 2 times to 5 times an area of a horizontal cross section of the current collecting protrusion 2321. Because a cross-sectional area of the stopper 2314 is formed to be larger than a cross-sectional area of the current collecting protrusion 2321, the component may be stably supported.

In order to facilitate coupling between the current collecting protrusion 2321 and the component, the height hc of the current collecting protrusion 2321 may be formed to be greater than the height h2 of the stopper 2314 within a predetermined range. Specifically, the height h2 of the stopper 2314 may be 15% to 35% of the height hc of the current collecting protrusion 2321, or 20% to 30%, or 25% ±2%. When the height h2 of the stopper 2314 is greater than 20% of the height hc of the current collecting protrusion 2321, a height difference between the upper surface of the stopper 2314 and the upper surfaces of first and second current collecting portions 2311 and 2312 increases, thereby making it difficult to stably support the component.

In the case of a negative electrode current collector, an upper end of a current collecting protrusion 2321 made of copper may be plated with nickel. A height of a nickel plating layer may be 1.5 mm to 2.5 mm from the upper end of the current collecting protrusion 2321. The height of the nickel plating layer may be 30% to 50% of the height of the current collecting protrusion 2321. A thickness of the nickel plating layer may range from 2 µm to 4 µm. As the upper end of the current collecting protrusion 2321 is plated with nickel, welding strength when the current collecting protrusion 2321 is welded to the electrode terminal may be further enhanced.

The support portion 2322 may be connected to a lower end of a current collecting protrusion 2321 and may have a disc shape or a rectangular plate shape. A shape of the support portion 2322 may be the same as that of the recessed region 2317. The support portion 2322 may support the current collecting protrusion 2321 such that the current collecting protrusion 2321 is perpendicular to the current collecting unit 2310 when the pole unit 2320 is connected to the current collecting unit 2310. The current collecting protrusion 2321 and the support portion 2322 may be integrally formed. A peripheral edge of an upper end of the support portion 2322 may be rounded.

The support portion 2322 may be received in the recessed region 2317 of the current collecting unit 2310. A diameter of the support portion 2322 may be smaller than a diameter of the recessed region 2317. In addition, a height h3 of the support portion 2322 may be smaller than the depth d1 of the recessed region 2317. In other words, when the support portion 2322 is received in the recessed region 2317, a lower surface of the support portion 2322 may be positioned inside, that is, above, the lower surface of the current collecting unit 2310 (see FIG. 23).

Because the diameter of the current collecting protrusion 2321 is smaller than the inner diameter of the opening 2315 of the stopper 2314, and the diameter of the support portion 2322 is smaller than the diameter of the recessed region 2317, when the current collecting unit 2310 is coupled to the pole unit 2320, clearance may be formed between the current collecting protrusion 2321 and the opening 2315 and between the support portion 2322 and the recessed region 2317. In addition, the peripheral edge of the upper end of the support portion 2322 is rounded. Therefore, when the support portion 2322 is fitted into the recessed region 2317, insertion of the support portion 2322 may be facilitated.

In a modified example, the diameter of the current collecting protrusion 2321 may be the same as the inner diameter of the opening 2315 of the stopper 2314. In addition, the diameter of the support portion 2322 may be the same as the diameter of the recessed region 2317. Accordingly, when the current collecting unit 2310 and the pole unit 2320 are coupled, the current collecting protrusion 2321 may be fitted into the opening 2315, and the support portion 2322 may be fitted into the recessed region 2317.

After the support portion 2322 is fitted into the recessed region 2317 of the current collecting unit 2310, the support portion 2322 may be joined with the current collecting unit 2310 by welding. The welding may be performed on a peripheral region of the lower surface of the support portion 2322. Due to the welding, a welding region A may be formed on the lower surface of the support portion 2322.

As illustrated in FIG. 24, in an example , the welding region is formed at an outer periphery (region A) of the lower surface of the support portion 2322. The support portion 2322 may be positioned above a lower end of the connection portion 2313 by a predetermined distance, such that, even when a welding burr is generated, the welding burr does not protrude downward from the lower surface of the current collecting unit 2310.

According to the present disclosure, a sufficient welding area may be secured by a support portion 2322 having a disc shape or a rectangular shape, so that the current collecting protrusion 2321 may be stably connected to the current collecting unit 2310. Furthermore, in the case where the support portion 2322 is formed in a rectangular plate shape and is received in the recessed region 2317, undesired rotation of the current collecting protrusion 2321 may be prevented.

A width of the current collector 2300 may be 0.3 times to 0.8 times the thickness of the electrode assembly 1200. The current collector 2300 may have a thickness of 0.5 mm to 3.0 mm.

An insulator may be disposed under the current collector 2300. The insulator may be an insulating plate or an insulating film. The insulator may more reliably protect the electrode tabs 1220 and 1230 and the electrode portion 1210.

The insulator may be applied or attached to a lower surface of the current collector 2300 with a predetermined thickness after the pole unit 2320 is welded to the current collecting unit 2310.

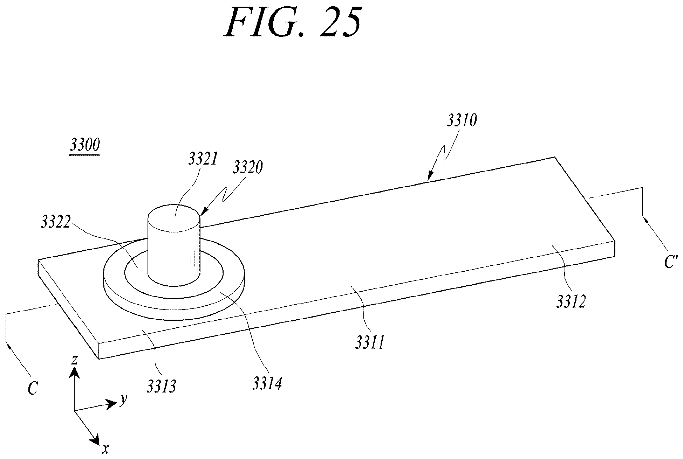

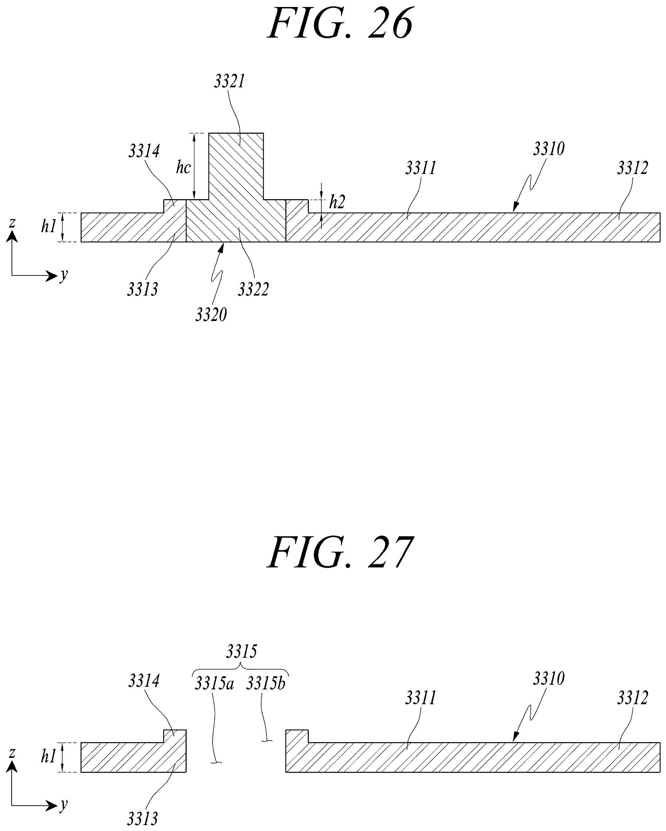

FIG. 25 is a view illustrating a current collector according to an example. FIG. 26 is a cross-sectional view taken along line C-C' of FIG. 25.

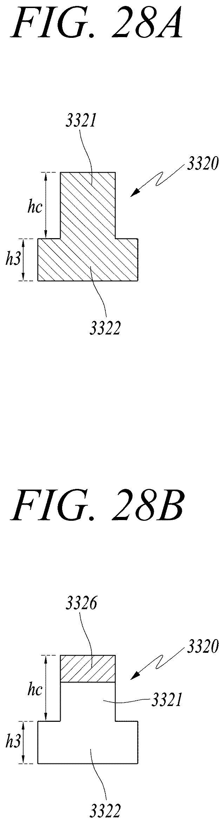

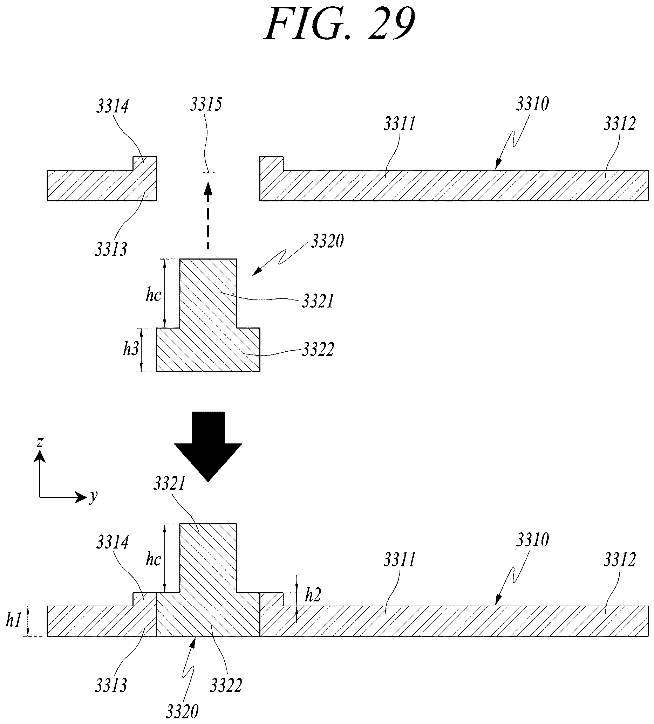

FIG. 27 is a view illustrating a current collecting unit according to an example. FIG. 28 is a view illustrating a pole unit according to an example. FIG. 29 is a view illustrating a process of assembling the current collecting unit with the pole unit according to an example.

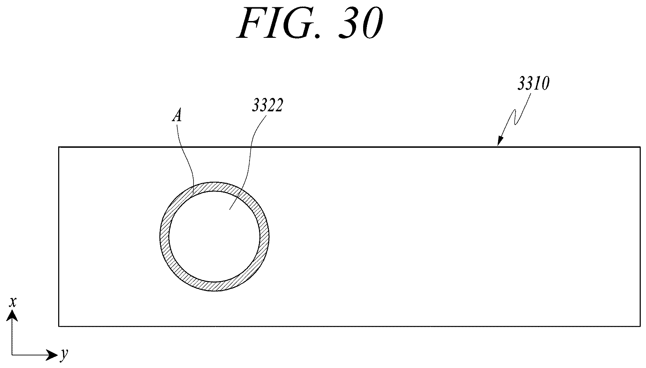

FIG. 30 is a view illustrating a welding region on a lower surface of the current collecting unit according to an example.

As illustrated in FIGS. 25 and 26, a current collector 3300 may include a current collecting unit 3310 and a pole unit 3320. The current collecting unit 3310 may include a first current collecting portion 3311, a second current collecting portion 3312, and a connection portion 3313.

The current collecting unit 3310 may have a rectangular shape extending in the longitudinal direction (y direction) of the electrode assembly 1200. The current collecting unit 3310 may be configured such that the connection portion 3313, the first current collecting portion 3311, and the second current collecting portion 3312 are successively arranged in a longitudinal direction of the rectangular shape. A height of each of the first current collecting portion 3311 and the second current collecting portion 3312 may range from 0.5 mm to 3.0 mm. A curvature radius of an edge of an upper surface of the current collector 3300 may be 0.25 mm to 0.35 mm.

An opening 3315a may be formed in the connection portion 3313.

A stopper 3314 may be disposed on an upper surface of the connection portion 3313. The stopper 3314 may protrude from the upper surface of the connection portion 3313 by a predetermined height h2. The height h2 of the stopper 3314 may be equal to or greater than a height to which the plurality of first electrode tabs 1220 and the plurality of second electrode tabs 1230 are welded on the upper surface of the current collector 3300. As the numbers of first electrode tabs 1220 and second electrode tabs 1230 increase, that is, as the thickness of the electrode assembly 1200 (in the x direction in FIG. 2) increases, the height h2 of the stopper 3314 may also increase. The height h2 of the stopper 3314 may be 1% to 5% of the thickness of the electrode assembly 1200, and may be 2.5%, for example. In two current collectors 3300 disposed on the electrode portion 1210, the stoppers 3314 may have the same height.

The height (h2) of the stopper 3314 may be determined according to the following equation:
$h 2 = A \times 0.005 \times B / C$

Here A is the thickness of the electrode assembly, B is the length of the electrode tabs, and C is the number of groups of electrode tabs connected to electrodes of a same polarity, wherein electrode tabs at the same position are aligned with one another in each of the groups.

For example, a large number of electrode tabs may be welded onto the current collector 3300 while forming a plurality of groups, and as the number of same-polarity electrode-tab groups increases, the height of the stopper 3314 may decrease.

The stoppers 3314 of current collecting plates 3300 may have a same height.

The stopper 3314 may have a square plate shape, a rectangular plate shape, or a disc shape. In this example, the case in which the stopper 3314 has a disc shape will be described. An upper surface of the stopper 3314 may be formed as a flat surface to support a component to be assembled thereto and may have a predetermined area. The stopper 3314 may be integrally formed with the connection portion 3313.

The stopper 3314 may protrude upward from the upper surface of the connection portion 3313, and the height h2 thereof may be smaller than the thickness of the current collecting unit 3310. Specifically, the height h2 of the stopper 3314 may be 30% to 50% of a height h1 of an end of the first current collecting portion 3311 or the second current collecting portion 3312. Due to the stopper 3314, a stepped structure of the current collecting unit 3310 may be formed (see FIG. 26).

As illustrated in FIG. 27, an opening 3315b may be formed in the stopper 3314. The opening 3315b may be formed to pass through a center of the stopper 3314. In this case, the opening 3315b of the stopper 3314 may be connected to the opening 3315a of the connection portion 3313 to form a continuous opening 3315. A support portion 3322 of the pole unit 3320 may be inserted through the opening 3315. In this example, a recessed region may be formed to have the same diameter as the opening 3315, and accordingly, the recessed region may be integrated with the opening 3315 formed in the connection portion 3313.

The pole unit 3320 may be electrically connected to the corresponding electrode terminal. A material of the pole unit 3320 may be the same as or different from that of the current collecting unit 3310. For example, the current collecting unit 3310 and the pole unit 3320 may both be made of aluminum. Alternatively, the current collecting unit 3310 may be made of copper, and the pole unit 3320 may be made of aluminum. According to the present disclosure, as the current collecting unit 3310 and the pole unit 3320 are formed as separate components, flexibility in selecting materials and dimensions of components may be increased.

The pole unit 3320 may include a current collecting protrusion 3321 and a support portion 3322 (see FIG. 28). The current collecting protrusion 3321 may have a cylindrical shape having a predetermined height hc. The current collecting protrusion 3321 may be electrically connected to the corresponding electrode terminal. The current collecting protrusion 3321 may be supported by the support portion 3322 and may be connected to the current collecting unit 3310. The support portion 3322 may be fitted into the opening 3315 of the connection portion 3313 and the stopper 3314 and may be fixed in close contact with an inner wall of the opening 3315. To allow a component fitted over the current collecting protrusion 3321 to be stably supported on the stopper 3314, the stopper 3314 may have a predetermined area.

In order to facilitate coupling between the current collecting protrusion 3321 and the component, the height hc of the current collecting protrusion 3321 may be formed to be greater than the height h2 of the stopper 3314 within a predetermined range. Specifically, the height h2 of the stopper 3314 may be 10% to 20% of the height hc of the current collecting protrusion 3321, and may be 15%, for example.

The support portion 3322 may be connected to a lower end of the current collecting protrusion 3321 and may have a square plate shape, a rectangular plate shape, or a disc shape. The support portion 3322 may have a shape corresponding to that of the opening 3315. A cross-sectional area of the opening 3315 may also be polygonal (e.g., square, rectangular, etc.), or circular.

The support portion 3322 may extend from a lower surface of the connection portion 3313 to a height corresponding to the upper surface of the stopper 3314 disposed on the connection portion 3313. A lower surface of the support portion 3322 may be flush with the lower surface of the connection portion 3313. In addition, an upper surface of the support portion 3322 may be flush with the upper surface of the stopper 3314.

An area of a continuous surface formed by the upper surface of the stopper 3314 and the upper surface of the support portion 3322 may be 2 times to 5 times an area of a horizontal cross section of the current collecting protrusion 3321. As the continuous surface formed by the upper surface of the stopper 3314 and the upper surface of the support portion 3322 is formed to be larger than a cross-sectional area of the current collecting protrusion 3321, the component may be stably supported. The area of the continuous surface formed by the upper surface of the stopper 3314 and the upper surface of the support portion 3322 may be 3% to 6% of an upper surface of the current collecting unit 3310.

The support portion 3322 may support the current collecting protrusion 3321 such that the current collecting protrusion 3321 is perpendicular to the current collecting unit 3310 when the pole unit 3320 is connected to the current collecting unit 3310. The current collecting protrusion 3321 and the support portion 3322 may be integrally formed.

After the support portion 3322 is fitted into the opening 3315 of the current collecting unit 3310, the support portion 3322 and the current collecting unit 3310 may be joined by welding. The welding may be performed on the lower surface of the support portion 3322. Due to the welding, a welding region may be formed on the lower surface of the support portion 3322.

As illustrated in FIG. 30, in an example, the welding region may be formed on an outer periphery (region A) of the lower surface of the support portion 3322. The welding may be performed at a boundary surface between the support portion 3322 and the connection portion 3313.

In the case in which the support portion 3322 is formed in a square plate shape, undesired rotation of the current collecting protrusion 3321 may be prevented by fitting the support portion 3322 into the opening 3315 of the current collecting unit 3310.

A width of the current collector 3300 may be 0.3 times to 0.8 times the thickness of the electrode assembly 1200. The current collector 3300 may have a thickness of 0.5 mm to 3.0 mm.

An insulator may be disposed under the current collector 3300. The insulator may be an insulating plate or an insulating film. The insulator may more reliably protect the electrode tabs 1220 and 1230 and the electrode portion 1210.

The insulator may be applied or attached to a lower surface of the current collector 3300 with a predetermined thickness after the pole unit 3320 is welded to the current collecting unit 3310.

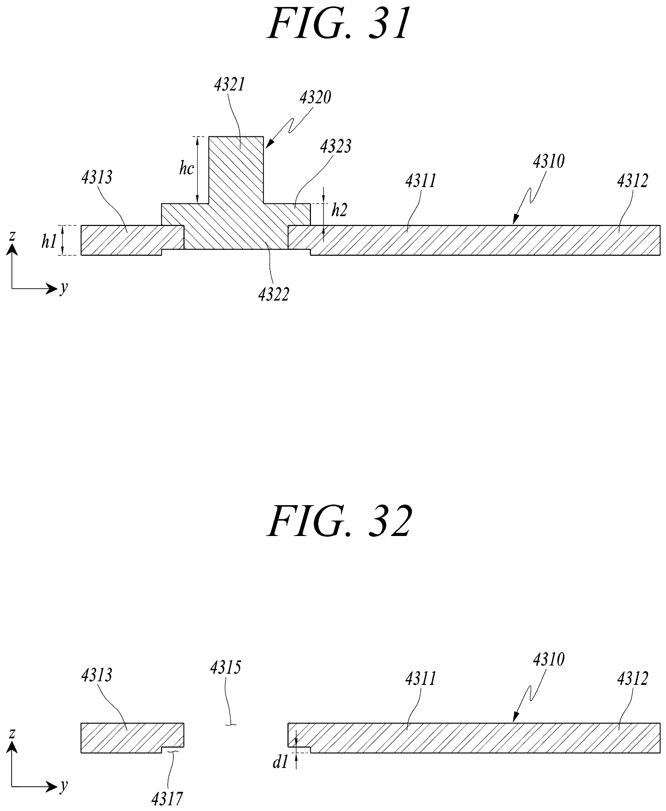

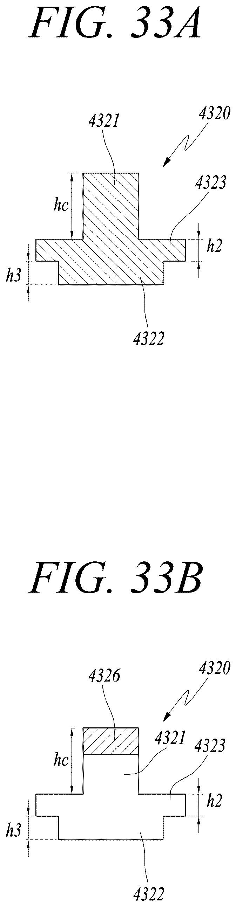

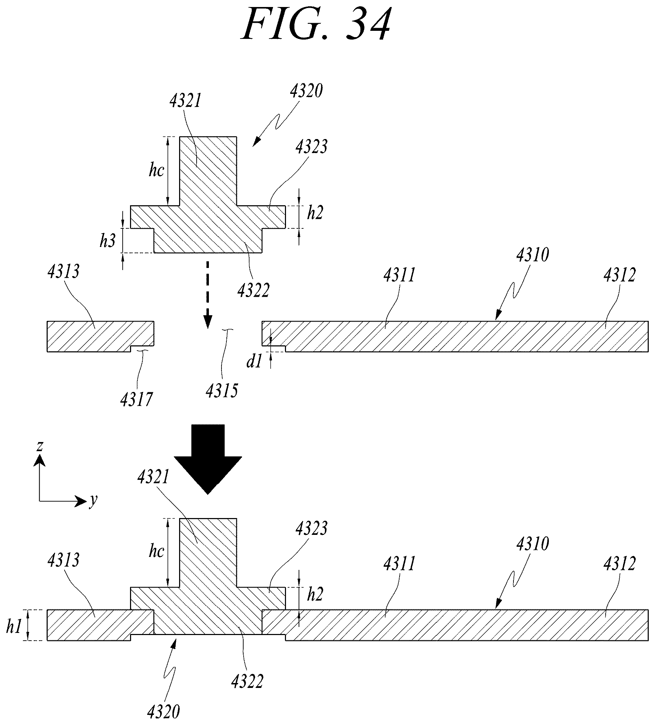

FIG. 31 is a view illustrating a current collector according to an example. FIG. 32 is a view illustrating a current collecting unit according to an example. FIG. 33A and 33B are views illustrating a pole unit according to examples. FIG. 34 is a view illustrating a process of assembling the current collecting unit with the pole unit according to an example.

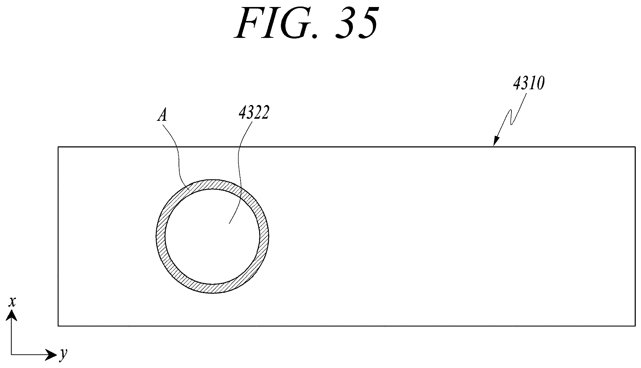

FIG. 35 is a view illustrating a welding region on a lower surface of the current collecting unit according to an example.

As illustrated in FIG. 31, a current collector 4300 may include a current collecting unit 4310 and a pole unit 4320. The current collecting unit 4310 may be connected to the plurality of electrode tabs 1220 and 1230. The pole unit 4320 may be connected to a corresponding electrode terminal.

The current collecting unit 4310 may have a rectangular shape extending in the longitudinal direction (y direction) of the electrode assembly 1200, and may include a connection portion 4313, a first current collecting portion 4311, and a second current collecting portion 4312 that are successively arranged in a longitudinal direction of the rectangular shape. The connection portion 4313, the first current collecting portion 4311, and the second current collecting portion 4312 may be made of the same material and may be integrally formed.

The first current collecting portion 4311 may be welded to the plurality of first electrode tabs 1220. The second current collecting portion 4312 may be welded to the plurality of second electrode tabs 1230. The connection portion 4313 may be formed to have the same thickness as the first current collecting portion 4311 and the second current collecting portion 4312. A thickness of the connection portion 4313 may range from 0.5 mm to 3.0 mm. A curvature radius of an edge of an upper surface of the current collector 4300 may be 0.25 mm to 0.35 mm.

The connection portion 4313 may be coupled to the pole unit 4320.

As illustrated in FIG. 32, an opening 4315 may be formed in the connection portion 4313. The pole unit 4320 may be coupled to the connection portion 4313 through the opening 4315.

A recessed region 4317 may be formed in a lower surface of the current collecting unit 4310. The recessed region 4317 may have a disc shape, a square plate shape, or a rectangular plate shape, and may define an empty space extending upward from a lower surface of the connection portion 4313 of the current collecting unit 4310. A cross-sectional area of the recessed region 4317 may be larger than a cross-sectional area of the opening 4315. For example, when the opening 4315 and the recessed region 4317 are disc shapes, a diameter of the recessed region 4317 may be larger than that of the opening 4315. A depth d1 of the recessed region 4317 may be 5% to 15% of a height h1 of an end of the current collecting unit 4310.

The pole unit 4320 may be coupled to the current collecting unit 4310 and may electrically connect the electrode tabs 1220 and 1230 of the electrode portion 1210 to the corresponding electrode terminal. A material of the pole unit 4320 may be the same as or different from that of the current collecting unit 4310.

As illustrated in FIG. 33A and 33B, the pole unit 4320 may include a current collecting protrusion 4321, a support portion 4322, and a flange 4323. The current collecting protrusion 4321 may have a cylindrical shape having a predetermined height hc. The current collecting protrusion 4321 may be electrically connected to the corresponding electrode terminal.

An upper end of the current collecting protrusion 4321 may be made of copper and plated with nickel. Hence, a nickel plating layer 4326 may be provided on the upper end of the current collecting protrusion 4321. A height of the nickel plating layer 4326 may be 1.5 mm to 2.5 mm from the upper end of the current collecting protrusion 4321. The height of the nickel plating layer 4326 may be 30% to 50% of the height of the current collecting protrusion 4321. A thickness of the nickel plating layer 4326 may range from 2 µm to 4 µm. As the upper end of the current collecting protrusion 4321 is plated with nickel, welding strength when the current collecting protrusion 4321 is welded to the electrode terminal may be further enhanced.

The support portion 4322 and the flange 4323 may be connected to a lower end of the current collecting protrusion 4321 and may each have a disc shape or a rectangular plate shape. A shape of the support portion 4322 may be the same as that of the opening 4315 of the current collecting unit 4310. The support portion 4322 may be inserted into the opening 4315 of the current collecting unit 4310. The support portion 4322 may support the current collecting protrusion 4321 such that the current collecting protrusion 4321 is perpendicular to the current collecting unit 4310 when the pole unit 4320 is connected to the current collecting unit 4310.

A diameter of the support portion 4322 may be smaller than that of the recessed region 4317. In addition, a height h3 of the support portion 4322 may be the same as a length of the opening 4315. That is, when the support portion 4322 is inserted into the opening 4315, a lower surface of the support portion 4322 may be flush with an upper surface of the recessed region 4317 and may be positioned above the lower surface of the current collecting unit 4310, that is, inside the recessed region 4317 (FIG. 34).

The flange 4323 may be disposed between the current collecting protrusion 4321 and the support portion 4322. A cross-sectional area of the flange 4323 may be larger than that of the support portion 4322. Accordingly, the flange 4323 may contact the upper surface of the connection portion 4313 and may prevent the support portion 4322 from moving downward through the opening 4315 beyond a predetermined depth. When the support portion 4322 is inserted into the opening 4315, the flange 4323 may contact a peripheral surface surrounding the opening 4315, thereby enabling the current collecting protrusion 4321 to be supported more stably.

When the current collector 4300 is coupled to another component, the flange 4323 may define a lower limit position of the component to be coupled to the current collector 4300. The flange 4323 may protrude by a predetermined height from the upper surface of the connection portion 4313. Due to the flange 4323, the component assembled to the current collector 4300 may be horizontally aligned.

A height h2 of the flange 4323 may be 1% to 5% of the thickness of the electrode assembly 1200, and may be 2.5%, for example. In two current collectors 4300 disposed on the electrode portion 1210, the flanges 4323 may have the same height.

The height (h2) of the flange 4323 may be determined according to the following equation:
$h 2 = A \times 0.005 \times B / C$

Here A is the thickness of the electrode assembly, B is the length of the electrode tabs, and C is the number of same-polarity electrode tabs (tab groups) in which electrode tabs at the same position are aligned with one another.

The flanges 4323 of different current collecting plates 4300 may have a same height.

Additionally or alternatively, a ratio of the height (hc) of the current collecting protrusion 4321 to a diameter (or maximum extension in a plan view) of the flange 4323 may be 0.2 to 0.8, or 0.3 to 0.7, or 0.4 to 0.6. If said ratio is within this range, a good balance between space occupancy and mechanical stability may be achieved.

Additionally or alternatively, a ratio of a thickness (h2) of the flange 4323 to the height (hc) of the current collecting protrusion 4321 may be 0.1 to 0.7, or 0.2 to 0.6, or 0.3 to 0.5. If said ratio is within this range, a good balance between space occupancy and mechanical stability may be achieved.

The flange 4323 may have a square plate shape, a rectangular plate shape, or a disc shape. An upper surface of the flange 4323 may be formed as a flat surface to support the component to be assembled thereto, and may have a predetermined area. The cross-sectional area of the flange 4323 may be 3% to 6% of the upper surface of the current collecting unit 4310.

In the case where the support portion 4322 and the flange 4323 each have a cylindrical shape, the diameter of the flange 4323 may be 1.2 times to 1.4 times that of the support portion 4322. In the case where the support portion 4322 and the flange 4323 each have a quadrangular column shape, a length of one side of the flange 4323 may be 1.2 times to 1.4 times that of one side of the support portion 4322. As the length and the area of the flange 4323 are secured, the pole unit 4320 may be stably fixed on the connection portion 4313, and the component coupled to the current collecting protrusion 4321 may be stably supported.

In addition, in the case where the flange 4323 has a cylindrical shape, the diameter of the current collecting protrusion 4321 may be 50% to 60% of that of the flange 4323. As the cross-sectional area of the flange 4323 is formed to be larger than that of the current collecting protrusion 4321 and the diameter of the flange 4323 is formed to be larger than that of the current collecting protrusion 4321, the component connected thereto may be stably supported.

The area of the horizontal cross-section of the flange 4323 may be 5 to 15 times, preferably 10 times, the area of the horizontal cross-section of the current collecting protrusion 4321. In addition, when the flange 4323 has a cylindrical shape, the diameter of the current collecting protrusion 4321 may be 20 to 50%, preferably 30%, of the diameter of the flange 4323. The flange 4323 may protrude upward from the upper surface of the connection portion 4313, and a height of the flange 4323 may be equal to or smaller than the thickness of the current collecting unit 4310. Specifically, the height of the flange 4323 may be 100 to 120% of the height of the end portion of the current collecting unit 4310, that is, the height of the end portion of the first or second current collecting portion 4311, 4312. If the height of the flange 4323 exceeds 120% of the thickness of the connection portion 4313, the distance between the component coupled to the current collecting protrusion 4321 and the connection portion 4313 becomes large, which may weaken airtightness.

Due to the flange 4323, a stepped structure of the current collector 4300 may be formed.

In order for the component fitted over the current collecting protrusion 4321 to be stably supported on the flange 4323, the flange 4323 may have a predetermined area. Specifically, the height of the flange 4323 may be 30 to 50%, preferably 40%, of the height (hc) of the current collecting protrusion 4321. If the height of the flange 4323 is greater than 50% of the height of the current collecting protrusion 4321, the height difference between the upper surface of the flange 4323 and the upper surfaces of the first and second current collecting portions 4311 and 4312 becomes large, making it difficult to stably support the component. The area of the horizontal cross section of the flange 4323 may be 2 times to 5 times that of the horizontal cross section of the current collecting protrusion 4321. As the cross-sectional area of the flange 4323 is formed to be larger than that of the current collecting protrusion 4321, the component may be stably supported.

In order to facilitate coupling between the current collecting protrusion 4321 and the component, a height hc of the current collecting protrusion 4321 may be formed to be greater than the height of the flange 4323 within a predetermined range. Specifically, the height of the flange 4323 may be 10% to 20% of the height hc of the current collecting protrusion 4321, and may be 15%, for example. In the case where the height of the flange 4323 is greater than 20% of the height hc of the current collecting protrusion 4321, a height difference between an upper surface of the flange 4323 and upper surfaces of the first and second current collecting portions 4311 and 4312 may increase, thereby making it difficult to stably support the component.

The current collecting protrusion 4321, the support portion 4322, and the flange 4323 may be integrally formed.

In the case of a negative current collector, an upper end of the current collecting protrusion 4321 made of copper may be plated with nickel. A height of a nickel plating layer may be 1.5 mm to 2.5 mm from the upper end of the current collecting protrusion 4321. The height of the nickel plating layer may be 30% to 50% of that of the current collecting protrusion 4321. A thickness of the nickel plating layer may range from 2 µm to 4 µm. As the upper end of the current collecting protrusion 4321 is plated with nickel, welding strength when the current collecting protrusion 4321 is welded to the electrode terminal may be further enhanced.

After the support portion 4322 is fitted into the opening 4315 of the current collecting unit 4310, the support portion 4322 and the current collecting unit 4310 may be joined by welding. The welding may be performed on a periphery of the lower surface of the support portion 4322. Due to the welding, a welding region A may be formed on the lower surface of the support portion 4322.

As illustrated in FIG. 35, in an example, the welding region may be formed on the outer periphery (region A) of the lower surface of the support portion 4322. The support portion 4322 may be positioned at a position spaced apart from the lower end of the connection portion 4313 by a predetermined distance, so that, even when welding burrs are generated, the welding burrs do not protrude below the lower surface of the current collecting unit 4310.

According to the present disclosure, a sufficient welding area may be secured by the support portion 4322 having a disc shape or a rectangular shape, so that the current collecting protrusion 4321 may be stably connected to the current collecting unit 4310. Furthermore, in the case where the support portion 4322 is formed in a square plate shape and is received in the opening 4315, undesired rotation of the current collecting protrusion 4321 may be prevented.

A width of the current collector 4300 may be 0.3 times to 0.8 times the thickness of the electrode assembly 1200. The current collector 4300 may have a thickness of 0.5 mm to 3.0 mm.

An insulator may be disposed under the current collector 4300. The insulator may be an insulating plate or an insulating film. The insulator may more reliably protect the electrode tabs 1220 and 1230 and the electrode portion 1210.

The insulator may be applied or attached to a lower surface of the current collector 4300 with a predetermined thickness after the pole unit 4320 is welded to the current collecting unit 4310.

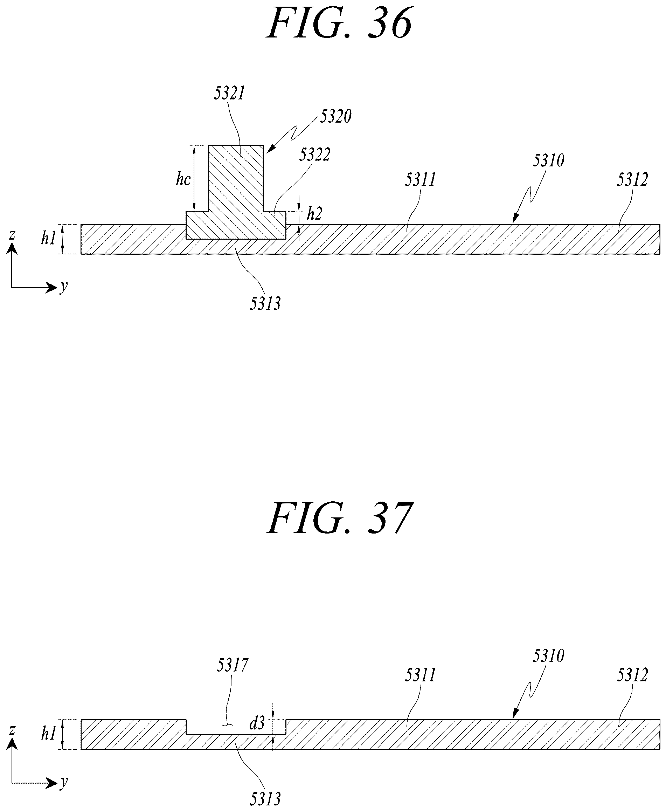

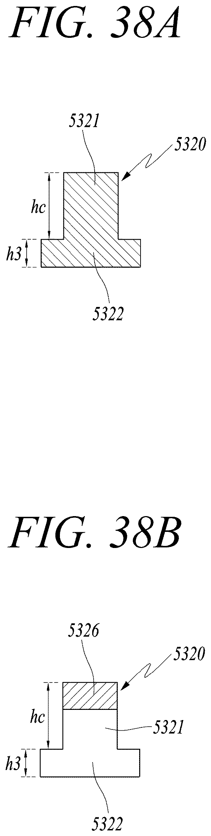

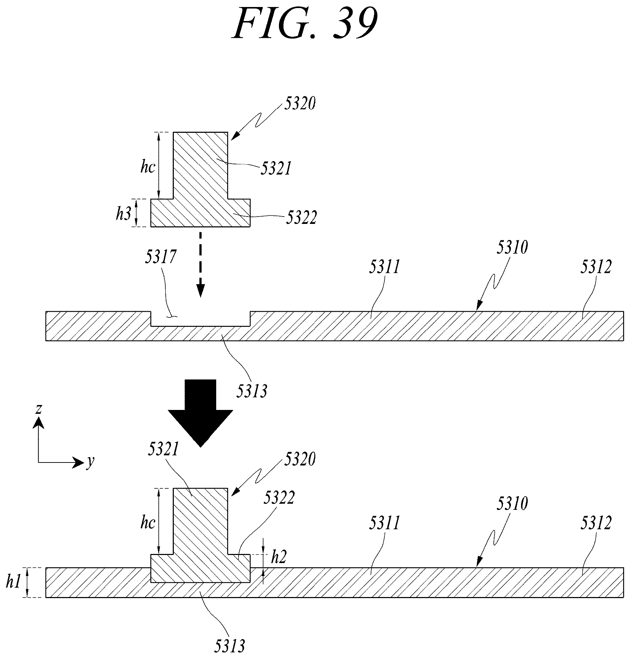

FIG. 36 is a view illustrating a current collector according to an example. FIG. 37 is a view illustrating a current collecting unit according to an example. FIG. 38A and 38B are views illustrating a pole unit according to an example. FIG. 39 is a view illustrating a process of assembling the current collecting unit with the pole unit according to an example.

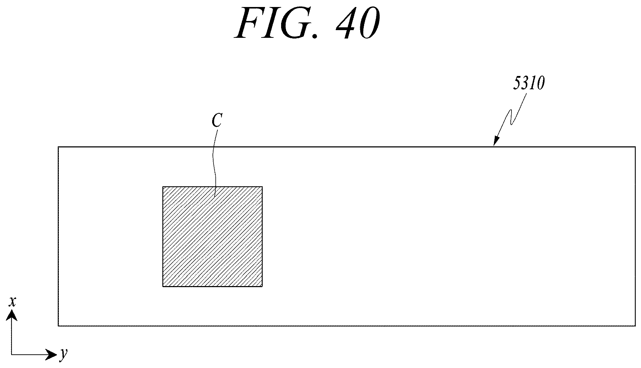

FIG. 40 is a view illustrating a welding region on a lower surface of the current collecting unit according to an example.

As illustrated in FIG. 36, a current collector 5300 may include a current collecting unit 5310 and a pole unit 5320. The current collecting unit 5310 may include a first current collecting portion 5311, a second current collecting portion 5312, and a connection portion 5313.

The current collecting unit 5310 may have a rectangular shape extending in the longitudinal direction (y direction) of the electrode assembly 1200. The current collecting unit 5310 may be configured such that the connection portion 5313, the first current collecting portion 5311, and the second current collecting portion 5312 are successively arranged in a longitudinal direction of the rectangular shape. The first current collecting portion 5311 and the second current collecting portion 5312 may have a predetermined height h1. Specifically, the height h1 of each of the first current collecting portion 5311 and the second current collecting portion 5312 may range from 0.5 mm to 3.0 mm.

The connection portion 5313 may be connected to one side of the first current collecting portion 5311. The second current collecting portion 5312 may be connected to a remaining side of the first current collecting portion 5311. The connection portion 5313 may be formed with a seating region 5317. The seating region 5317 may be formed by recessing a portion of the connection portion 5313 to a predetermined depth d3. A depth d3 of the seating region 5317 may be 30% to 50% of a height h1 of an end of the current collecting unit 5310. A cross-sectional shape of the seating region 5317 may be a polygonal shape (e.g., square shape, rectangular shape, etc.), a circular shape, or a combination thereof.

The pole unit 5320 may be electrically connected to the corresponding electrode terminal. A material of the pole unit 5320 may be the same as or different from that of the current collecting unit 5310. For example, the current collecting unit 5310 and the pole unit 5320 may both be made of aluminum. Alternatively, the current collecting unit 5310 may be made of copper, and the pole unit 5320 may be made of aluminum. According to the present disclosure, as the current collecting unit 5310 and the pole unit 5320 are formed as separate components, flexibility in selecting materials and dimensions of components may be increased.

The pole unit 5320 may include a current collecting protrusion 5321 and a support portion 5322 (see FIG. 38A and 38B). The current collecting protrusion 5321 may have a cylindrical shape having a predetermined height hc. The current collecting protrusion 5321 may be electrically connected to the corresponding electrode terminal.

The support portion 5322 may be connected to a lower end of the current collecting protrusion 5321 and may have a square plate shape, a rectangular plate shape, or a disc shape. A lower portion of the support portion 5322 may be received in the seating region 5317 of the connection portion 5313. A height h3 of the support portion 5322 may be greater than a depth d3 of the seating region 5317. Accordingly, when the support portion 5322 is seated in the seating region 5317, an upper surface of the support portion 5322 may protrude from an upper surface of the connection portion 5313 by a predetermined height h2.

The height h2 by which the support portion 5322 protrudes from the upper surface of the connection portion 5313, that is, an upper surface of the current collecting unit 5310, may be smaller than a thickness of an end of the current collecting unit 5310. Specifically, the height h2 by which the support portion 5322 protrudes from the upper surface of the connection portion 5313 may be 30% to 50% of the height h1 of an end of the first current collecting portion 5311 or the second current collecting portion 5312. Due to protrusion of the support portion 5322, a stepped structure of the current collector 5300 may be formed (see FIG. 39).

The height h2 of the protruding portion may be equal to or greater than a height to which the plurality of first electrode tabs 1220 and the plurality of second electrode tabs 1230 are welded on the upper surface of the current collector 5300. As the numbers of first electrode tabs 1220 and second electrode tabs 1230 increase, that is, as the thickness of the electrode assembly 1200 (in the x direction in FIG. 2) increases, the height h2 of the protruding portion of the support portion 5322 may increase. The height h2 of the protruding portion of the support portion 5322 may be 1% to 5% of the thickness of the electrode assembly 1200, and may be 2.5%, for example.

In the case where the support portion 5322 is formed in a square plate shape, undesired rotation of the current collecting protrusion 5321 may be prevented by fitting the support portion 5322 into the square-shaped seating region 5317 of the current collecting unit 5310.

A width of the current collector 5300 may be 0.3 times to 0.8 times the thickness of the electrode assembly 1200. The current collector 5300 may have a thickness of 0.5 mm to 3.0 mm. A curvature radius of an edge of an upper surface of the current collector 5300 may range from 0.25 mm to 0.35 mm.

An insulator may be disposed under the current collector 5300. The insulator may be an insulating plate or an insulating film. The insulator may more reliably protect the electrode tabs 1220 and 1230 and the electrode portion 1210.

The insulator may be applied or attached to a lower surface of the current collector 5300 with a predetermined thickness after the pole unit 5320 is welded to the current collecting unit 5310.

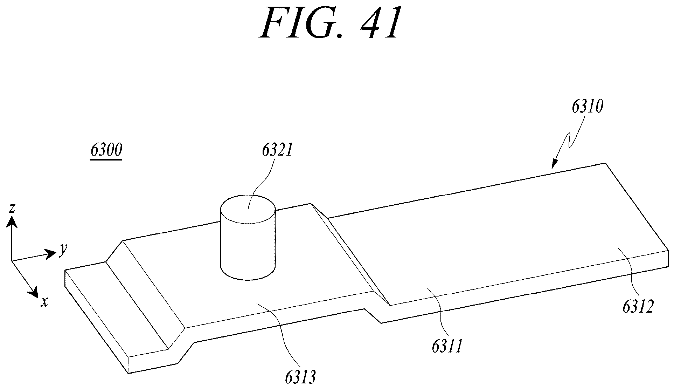

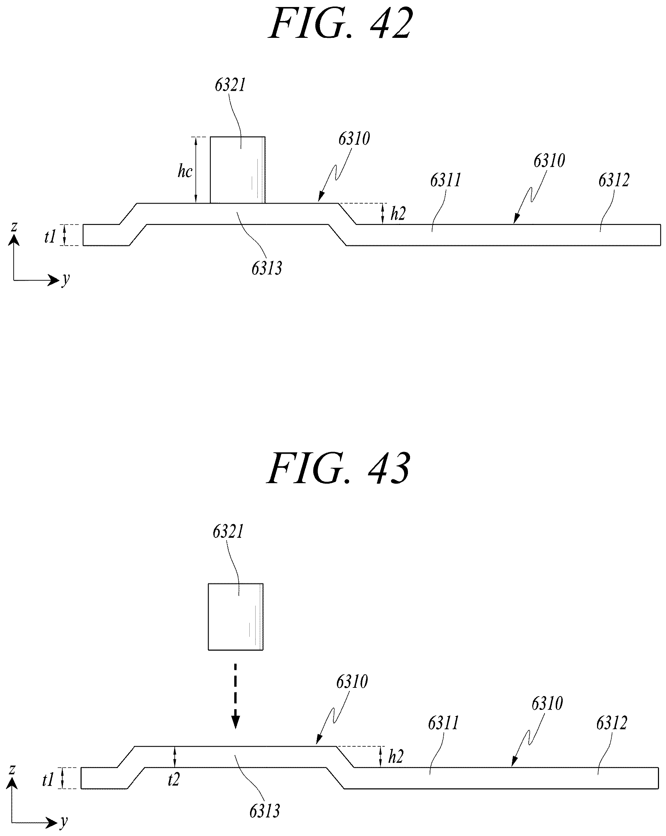

FIG. 41 is a view illustrating a current collector according to an example. FIG. 42 is a view illustrating the current collector according to an example. FIG. 43 is a view illustrating a process of assembling a current collecting unit with a pole unit according to an example.

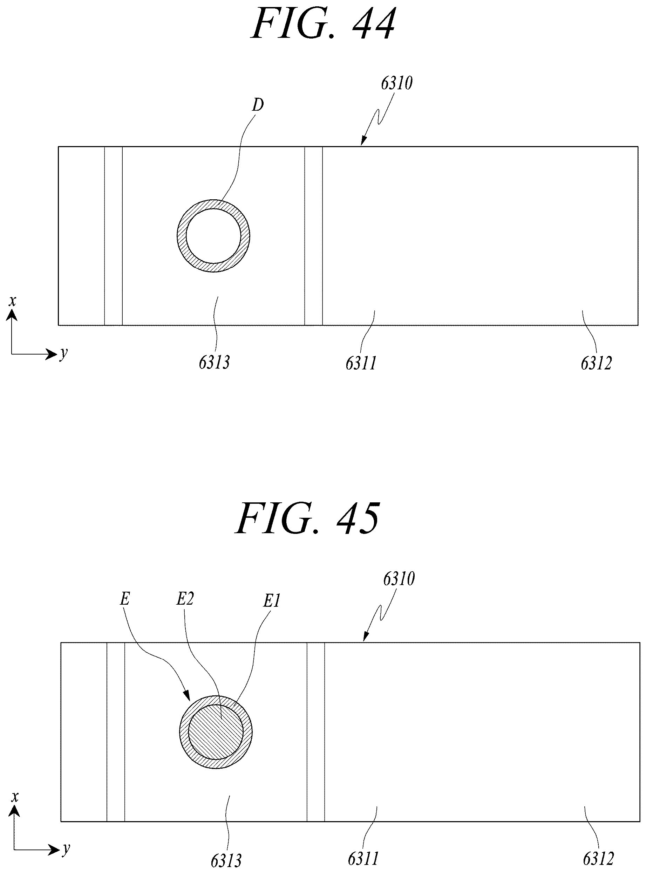

FIG. 44 is a view illustrating a welding region on a lower surface of the current collecting unit according to an example. FIG. 45 is a view illustrating a welding region on the lower surface of the current collecting unit according to an example.

As illustrated in FIGS. 41 to 43, a current collector 6300 may include a current collecting unit 6310 and a pole unit 6320. The current collecting unit 6310 may include a first current collecting portion 6311, a second current collecting portion 6312, and a connection portion 6313.

The current collecting unit 6310 may have a rectangular shape extending in the longitudinal direction (y direction) of the electrode assembly 1200. The current collecting unit 6310 may be configured such that the connection portion 6313, the first current collecting portion 6311, and the second current collecting portion 6312 are successively arranged in a longitudinal direction of the rectangular shape. The first and second current collecting portions 6311 and 6312 and the connection portion 6313 may respectively have predetermined thicknesses t1 and t2. The thickness t2 of the connection portion 6313 may be the same as the thickness t1 of the first current collecting portion 6311 and the second current collecting portion 6312. Specifically, the thicknesses of the first current collecting portion 6311, the second current collecting portion 6312, and the connection portion 6313 may range from 0.5 mm to 3.0 mm.

The connection portion 6313 may be connected to one side of the first current collecting portion 6311. The second current collecting portion 6312 may be connected to a remaining side of the first current collecting portion 6311. The connection portion 6313 may protrude from the first current collecting portion 6311 and the second current collecting portion 6312. An upper surface of the connection portion 6313 may be positioned above upper surfaces of the first current collecting portion 6311 and the second current collecting portion 6312 by a predetermined height h2.

The protruding height h2 of the connection portion 6313 may be smaller than a height t1 of an end of the current collecting unit 6310. Specifically, the protruding height h2 of the connection portion 6313 may be 30% to 50% of the height h1 of an end of the first current collecting portion 6311 or the second current collecting portion 6312. Due to the connection portion 6313 having a protruding structure, a stepped structure of the current collecting unit 6310 may be formed (see FIG. 42).

The protruding height h2 of the connection portion 6313 may be equal to or greater than a height to which the plurality of first electrode tabs 1220 and the plurality of second electrode tabs 1230 are welded on the upper surface of the current collector 6300. As the numbers of first electrode tabs 1220 and second electrode tabs 1230 increase, that is, as the thickness of the electrode assembly 1200 (in the x direction in FIG. 2) increases, the protruding height h2 of the connection portion 6313 may increase. The protruding height h2 of the connection portion 6313 may be 1% to 5% of the thickness of the electrode assembly 1200, and may be 2.5%, for example. In two current collectors 6300 disposed on the electrode portion 1210, the connection portions 6313 may protrude by the same height.

The protruding height (h2) of the connection portion 6313 may be determined according to the following equation:
$h 2 = A \times 0.005 \times B / C$

Here A is the thickness of the electrode assembly, B is the length of the electrode tabs, and C is the number of groups of electrode tabs connected to electrodes of a same polarity, wherein electrode tabs at the same position are aligned with one another in each of the groups.

The stoppers 6314 of different current collecting plates 6300 may have a same height.

The upper surface of the connection portion 6313 may be formed as a flat surface to support a component to be assembled thereto. A seating region may be formed on the upper surface of the connection portion 6313. An upper surface of the seating region may be flush with the upper surface of the connection portion 6313. The pole unit 6320 may be connected on the surface of the seating region.

The connection portion 6313 may be formed by bending the current collecting unit 6310 such that one end of the current collecting unit 6310 protrudes. As the current collecting unit 6310 is bent, a surface to which the connection portion 6313 and the first current collecting portion 6311 are connected may form an inclination.

The pole unit 6320 may be electrically connected to the corresponding electrode terminal. A material of the pole unit 6320 may be the same as or different from that of the current collecting unit 6310. For example, the current collecting unit 6310 and the pole unit 6320 may both be made of aluminum. Alternatively, the current collecting unit 6310 may be made of copper, and the pole unit 6320 may be made of aluminum. According to the present disclosure, as the current collecting unit 6310 and the pole unit 6320 are formed as separate components, flexibility in selecting materials and dimensions of components may be increased.

The pole unit 6320 may include a current collecting protrusion 6321. The current collecting protrusion 6321 may have a cylindrical shape having a predetermined height hc. The current collecting protrusion 6321 may be electrically connected to the corresponding electrode terminal. The current collecting protrusion 6321 may be joined to the seating region formed on the upper surface of the connection portion 6313.

The current collecting protrusion 6321 and the current collecting unit 6310 may be joined to each other by welding. The welding may be performed on a lower surface of the connection portion 6313. By the welding, a welding region may be formed on the lower surface of the connection portion 6313. As illustrated in FIG. 44, in an example, the welding region may be formed in a region (region D) corresponding to an outer periphery of the current collecting protrusion 6321. In an example, the welding region may be formed over an entire region (region E, see FIG. 45) corresponding to a bottom surface of the current collecting protrusion 6321. In this case, laser output for welding in the region corresponding to the outer periphery of the current collecting protrusion 6321 may be greater than laser output in the region corresponding to an inner side of the current collecting protrusion 6321.

In order to facilitate coupling between the current collecting protrusion 6321 and the component, a height hc of the current collecting protrusion 6321 may be formed to be greater than the protruding height h2 of the connection portion 6313 within a predetermined range. Specifically, the protruding height h2 of the connection portion 6313 may be 10% to 20% of the height hc of the current collecting protrusion 6321, and may be 15%, for example.

A width of the current collector 6300 may be 0.3 times to 0.8 times the thickness of the electrode assembly 1200. The current collector 6300 may have a thickness of 0.5 mm to 3.0 mm. A curvature radius of an edge of the upper surface of the current collector 6300 may range from 0.25 mm to 0.35 mm.

An insulator may be disposed under the current collector 6300. The insulator may be an insulating plate or an insulating film. The insulator may more reliably protect the electrode tabs 1220 and 1230 and the electrode portion 1210.

The insulator may be applied or attached to a lower surface of the current collector 6300 with a predetermined thickness after the pole unit 6320 is welded to the current collecting unit 6310.

A coupling structure between the connection portion and the pole unit of the present disclosure may be applied to various types of current collectors.

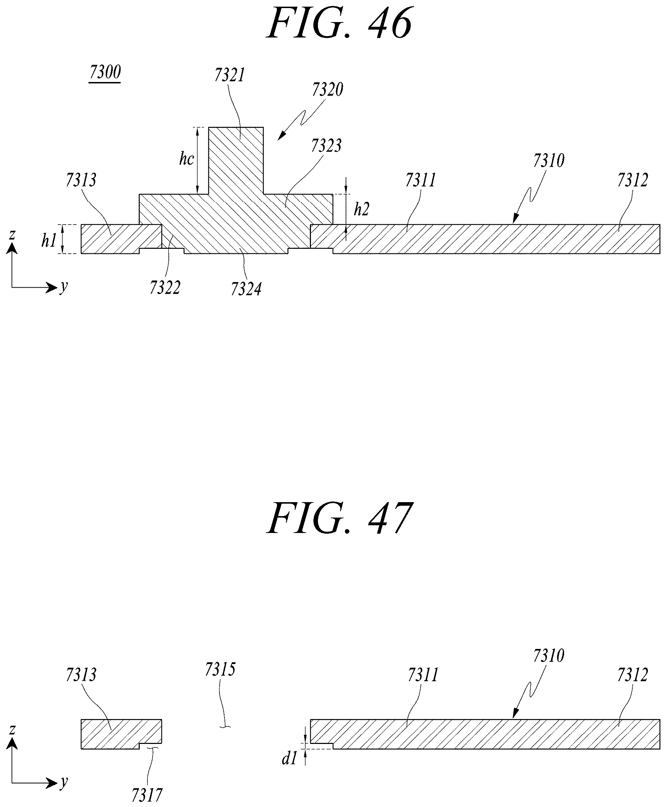

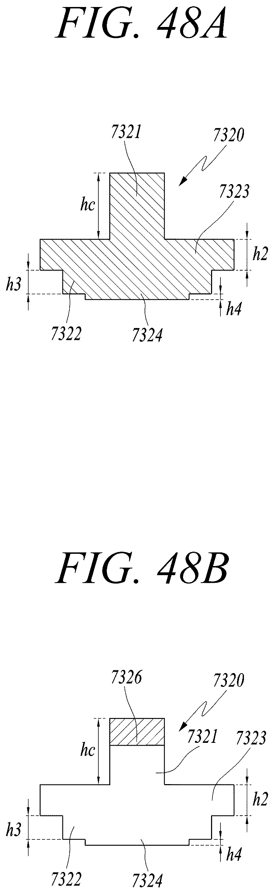

FIG. 46 is a view showing a current collector according to an example. FIG. 47 is a view showing a current collecting unit according to an example. FIG. 48a and 48b are views showing a pole unit according to an example.

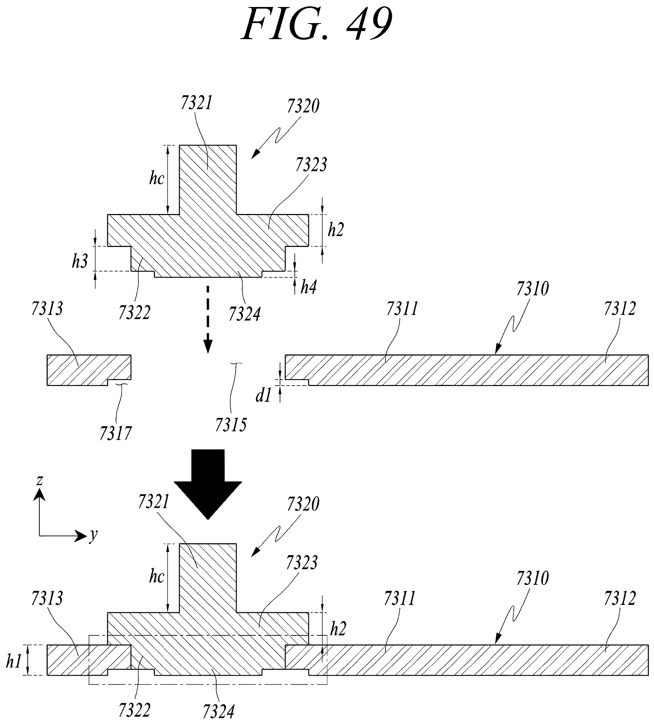

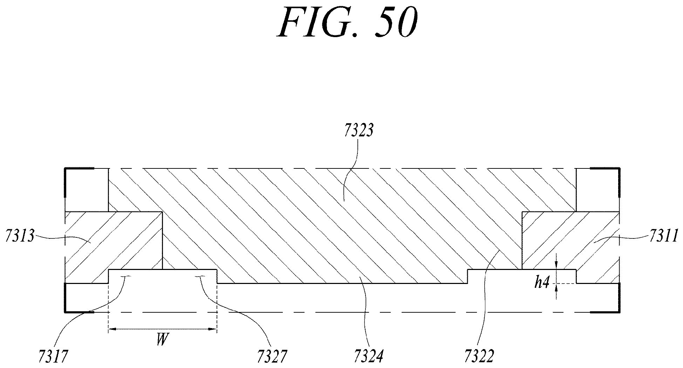

FIG. 49 is a view showing a process of assembling the current collecting unit and the pole unit according to an example. FIG. 50 is a view showing a state in which stepped surfaces are formed on the lower surfaces of the current collecting unit and the pole unit according to an example.

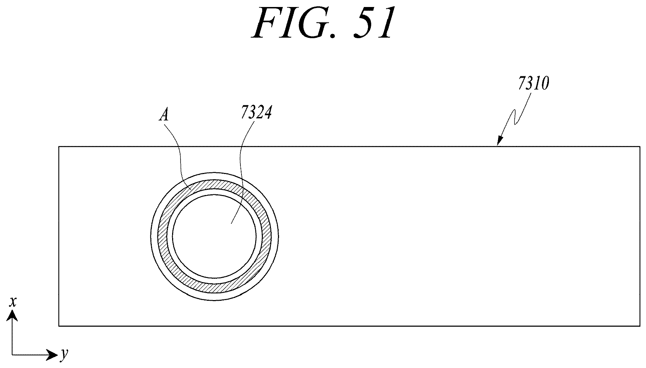

FIG. 51 is a view showing a welding region on the lower surface of the current collecting unit according to an example.

As shown in FIG. 46, the current collector 7300 may include a current collecting unit 7310 and a pole unit 7320. The current collecting unit 7300 may be connected to a plurality of electrode tabs 1220 and 1230. The pole unit 7320 may be connected to an electrode terminal.

The current collecting unit 7310 may have a rectangular shape extending in the longitudinal direction (y direction) of the electrode assembly 1200, and a connection portion 7313, a first current collecting portion 7311, and a second current collecting portion 7312 may be sequentially arranged. The connection portion 7313, the first current collecting portion 7311, and the second current collecting portion 7312 may all be made of the same material and may be integrally formed.

The first current collecting portion 7311 may be welded to the plurality of first electrode tabs 1220, and the second current collecting portion 7312 may be welded to the plurality of second electrode tabs 1230. The connection portion 7313 may be formed to have the same thickness as the first current collecting portion 7311 and the second current collecting portion 7312. The thickness of the connection portion 7313 may be 0.5 to 3.0 mm. The radius of curvature of the edge on the upper surface of the current collector 7300 may be 0.25 to 0.35 mm.

The connection portion 7313 may be coupled to the pole unit 7320.

As shown in FIG. 47, an opening 7315 may be formed in the connection portion 7313. Through the opening 7315, the pole unit 7320 may be coupled to the connection portion 7313.

A recessed region 7317 may be formed on the lower surface of the current collecting unit 7310. The recessed region 7317 may have the shape of a disc, a square plate, or a rectangular plate, and is a region forming an empty space upward from the lower surface of the connection portion of the current collecting unit 7310. The cross-sectional area of the recessed region 7317 may be larger than the cross-sectional area of the opening 7315. For example, when the opening 7315 and the recessed region 7317 are disc-shaped, the diameter of the recessed region 7317 may be greater than the diameter of the opening 7315. The depth d1 of the recessed region 7317 may be 5 to 15% of the height h1 of the end portion of the current collecting unit 7310.

The pole unit 7320 is coupled to the current collecting unit 7310 and may electrically connect the electrode tabs 1220 and 1230 of the electrode portion 1210 to the electrode terminal. The material of the pole unit 7320 may be the same as or different from that of the current collecting unit 7310.

As shown in FIG. 38a, the pole unit 7320 may include a current collecting protrusion 7321, a support portion 7322, a flange 7323, and an extension portion 7324. The current collecting protrusion 7321 has a cylindrical shape with a predetermined height hc. The current collecting protrusion 7321 is electrically connected to the electrode terminal.

The support portion 7322 and the flange 7323 are connected to the lower end of the current collecting protrusion 7321, and may have the shape of a disc or a rectangular plate. The shape of the support portion 7322 may be the same as the shape of the opening 7315 of the current collecting unit 7310. The support portion 7322 may be inserted into the opening 7315 of the current collecting unit 7310. The support portion 7322 may support the current collecting protrusion 7321 such that the current collecting protrusion 7321 is perpendicular to the current collecting unit 7310 when the pole unit 7320 is connected to the current collecting unit 7310.

The diameter of the support portion 7322 may be smaller than the diameter of the recessed region 7317. In addition, the height h3 of the support portion 7322 may be the same as the length of the opening 7315.

The flange 7323 may be disposed between the current collecting protrusion 7321 and the support portion 7322. The cross-sectional area of the flange 7323 may be larger than the cross-sectional area of the support portion 7322. Accordingly, the flange 7323 may contact the upper surface of the connection portion 7313 and prevent the support portion 7322 from moving downward through the opening 7315 beyond a predetermined depth. When the support portion 7322 is inserted into the opening 7315, the flange 7323 may contact the peripheral surface around the opening 7315 so that the current collecting protrusion 7321 is more stably supported.

When the current collector 7300 is coupled to another component, the flange 7323 may determine the lower limit of the coupled component, and may protrude upward by a predetermined height from the upper surface of the connection portion 7313. By means of the flange 7323, another component assembled to the current collector 7300 may be assembled horizontally.

The height h2 of the flange 7323 may be 1 to 5%, preferably 2.5%, of the thickness of the electrode assembly 1200.

The height h2 of the flange 7323 may be determined according to the following equation:
$h 2 = A \times 0.005 \times B / C$

Here, A is the thickness of the electrode assembly, B is the length of the electrode tabs, and C is the number of groups of electrode tabs connected to electrodes of a same polarity, wherein electrode tabs at the same position are aligned with one another in each of the groups.

A large number of electrode tabs may be welded onto the current collector 7300 while forming a plurality of groups, and as the number of same-polarity electrode-tab groups increases, the height h2 of the flange 7323 may decrease.

The flanges 7323 of different current collecting plates 7300 may have a same height.

The flange 7323 may have the shape of a square plate, a rectangular plate, or a disc. The upper surface of the flange 7323 is formed as a flat surface for supporting an assembled component and may have a predetermined area. The cross-sectional area of the flange 7323 may be 3 to 6% of the upper surface area of the current collecting unit 7310.

When the support portion 7322 and the flange 7323 are cylindrical, the diameter of the flange 7323 may be 1.2 to 1.4 times the diameter of the support portion 7322. When the support portion 7322 and the flange 7323 are rectangular columns, the length of one side of the flange 7323 may be 1.2 to 1.4 times the length of one side of the support portion 7322. By securing the length and area of the flange 7323, the pole unit 7320 may be stably fixed on the connection portion 7313 and may stably support a component coupled to the current collecting protrusion 7321.

The area of the horizontal cross-section of the flange 7323 may be 5 to 15 times, preferably 10 times, the area of the horizontal cross-section of the current collecting protrusion 7321. In addition, when the flange 7323 is cylindrical, the diameter of the current collecting protrusion 7321 may be 20 to 50%, preferably 30%, of the diameter of the flange 7323. Since the cross-sectional area of the flange 7323 is greater than that of the current collecting protrusion 7321, or the diameter of the flange 7323 is greater than that of the current collecting protrusion 7321, a connecting component may be stably supported.

The flange 7323 protrudes upward from the upper surface of the connection portion 7313, and its height may be equal to or greater than the thickness of the current collecting unit 7310. Specifically, the height of the flange 7323 may be 100 to 120% of the height of the end portion of the current collecting unit 7310, that is, the height of the end portion of the first or second current collecting portion 7311, 7312. If the height of the flange 7323 exceeds 120% of the thickness of the connection portion 7313, the distance between the component coupled to the current collecting protrusion 7321 and the connection portion 7313 may become large, and airtightness may be weakened.

A stepped structure of the current collector 7300 may be formed by the flange 7323.

To facilitate coupling between the current collecting protrusion 7321 and a component, the height hc of the current collecting protrusion 7321 may be formed larger than the height of the flange 7323 within a predetermined range. Specifically, the height of the flange 7323 may be 30 to 50%, preferably 40%, of the height hc of the current collecting protrusion 7321. If the height of the flange 7323 is greater than 50% of the height of the current collecting protrusion 7321, the height difference between the upper surface of the flange 7323 and the upper surfaces of the first and second current collecting portions 7311 and 7312 becomes large, making it difficult to stably support a component.

An extension portion 7324 may protrude downward from the lower part of the support portion 7322 by a predetermined length h4. The cross-sectional area of the extension portion 7324 may be smaller than the cross-sectional area of the support portion 7322. For example, when the support portion 7322 and the extension portion 7324 are disc -shaped, the support portion 7322 and the extension portion 7324 form concentric circles, and the extension portion 7324 may protrude from the inner lower side of the support portion 7322. The protruding length h4 of the extension portion 7324 may be the same as the depth d1 of the recessed region 7317. That is, the lower surface of the current collecting unit 7310 and the lower surface of the extension portion 7324 may be located on the same plane. In this case, when the current collector 7300 in which the current collecting unit 7310 and the pole unit 7320 are coupled is disposed on the electrode portion 1210, the current collecting unit 7310 and the pole unit 7320 may contact the upper surface of the electrode portion 1210 and be stably disposed thereon.

As the extension portion 7324 protrudes from the inner lower side of the support portion 7322, a stepped surface may be formed at the edge of the lower surface of the support portion 7322. As shown in FIG. 50, the stepped surface may form the same plane as the upper surface of the recessed region 7317 of the current collecting unit 7310. The upper surface of the recessed region 7317 and the stepped surface are continuously formed on the same plane and located upward from the lower surface of the current collector 7300. Accordingly, when welding is performed at the edge of the lower surface of the support portion 7322, even if welding burrs are generated, they do not protrude below the lower surface of the current collecting unit 7310.

The current collecting protrusion 7321, the support portion 7322, the flange 7323, and the extension portion 7324 may be integrally formed.

In the case of a negative current collector, the upper end of the copper current collecting protrusion 7321 may be nickel-plated. The height of the nickel plating layer 7326 may be 1.5 to 2.5 mm from the upper end of the current collecting protrusion 7321. The height of the nickel plating layer 7326 may be 30 to 50% of the height of the current collecting protrusion 7321. The thickness of the nickel plating layer 7326 may be 2 to 4 µm.

A potential difference occurs between dissimilar metals. In the case of a negative current collector, corrosion may occur when the copper current collecting protrusion 7321 contacts the aluminum terminal. By nickel-plating the upper end of the current collecting protrusion 7321, welding strength during welding to the electrode terminal may be further secured, and corrosion at the contact portion between the current collecting protrusion 7321 and the terminal may be prevented.

After the support portion 7322 is fitted into the opening 7315 of the current collecting unit 7310, the support portion 7322 and the current collecting unit 7310 may be joined by welding. Welding may be performed around the lower-surface periphery of the support portion 7322. By welding, a welding region A may be formed on the lower surface of the support portion 7322 and the upper surface of the recessed region 7317.

As shown in FIG. 51, in one exampl, the welding region is formed at the outer edge of the lower surface of the support portion 7322 (region A). The support portion 7322 is provided with an annular stepped surface located upward from the lower end of the current collecting unit 7310 by a predetermined distance, and welding is performed at the stepped surface, such that even if welding burrs are generated, they do not protrude below the lower surface of the current collecting unit 7310.

In this example, a sufficient welding area is secured by the disc-shaped or rectangular support portion 7322, so that the current collecting protrusion 7321 may be stably connected to the current collecting unit 7310. In addition, when the support portion 7322 is formed in a square plate shape and accommodated in the opening 7315, rotation of the current collecting protrusion 7321 may be prevented.

The width of the current collector 7300 may be 0.3 to 0.8 times the thickness of the electrode assembly 1200. The current collector 7300 may have a thickness of 0.5 to 3.0 mm.

An insulating member may be disposed below the current collector 7300. The insulating member may be an insulating plate or an insulating film. The insulating member may further protect the electrode tabs 1220 and 1230 and the electrode portion 1210.

The insulating member may be applied or attached to the lower surface of the current collector 7300 with a predetermined thickness after the pole unit 7320 is welded to the current collecting unit 7310.

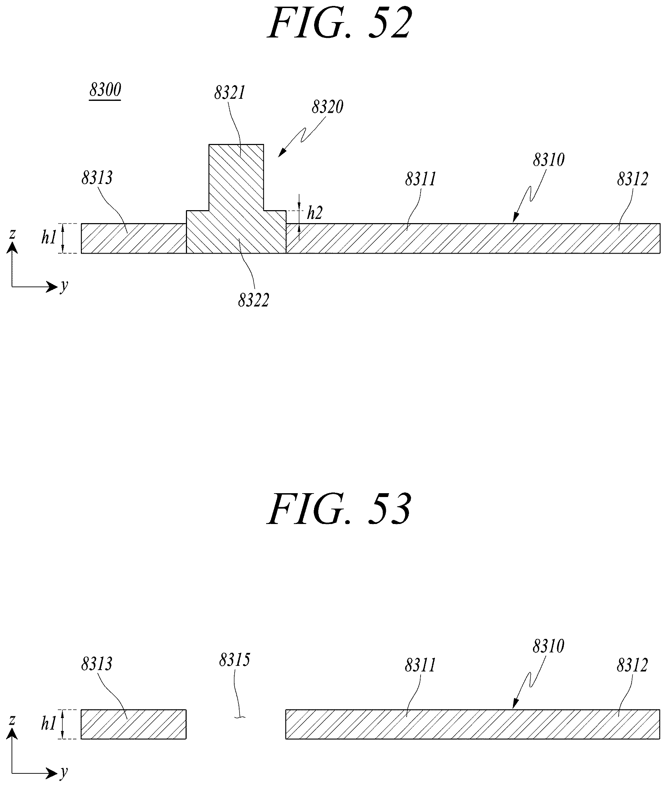

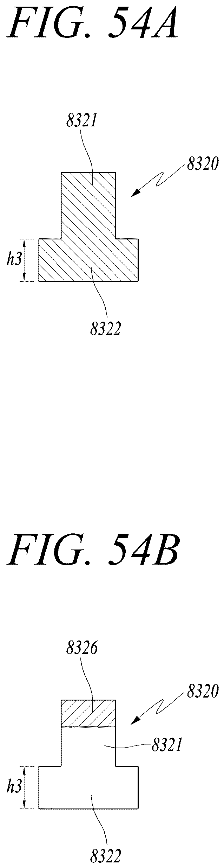

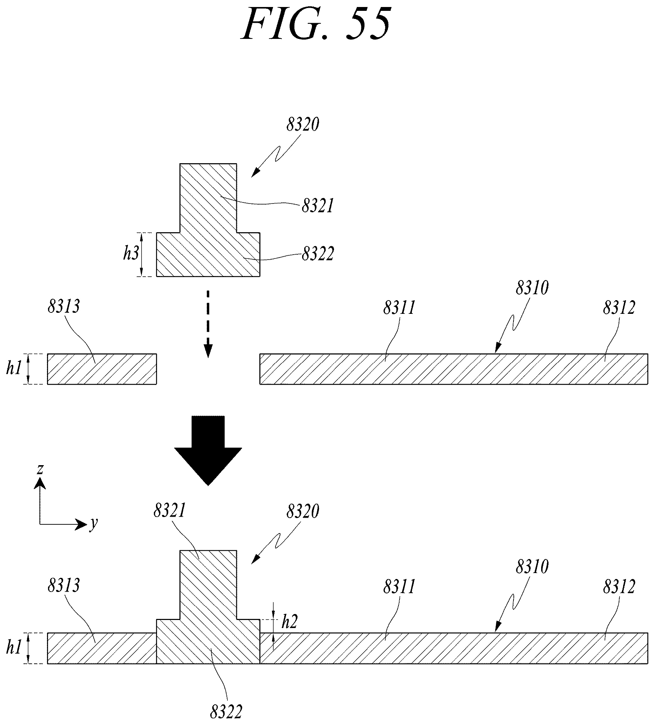

FIG. 52 is a cross-sectional view showing a current collector according to an example. FIG. 53 is a view showing a current collecting unit according to an example. FIG. 54a and 54b are views showing a pole unit according to an example. FIG. 55 is a view showing the process of assembling the current collecting unit and the pole unit according to an example.

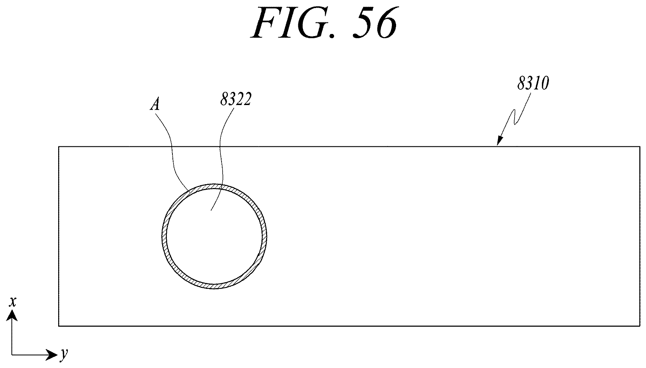

FIG. 56 is a view showing a welding region on the lower surface of the current collecting unit according to an example.

As shown in FIG. 52, the current collector 8300 may include a current collecting unit 8310 and a pole unit 8320. The current collecting unit 8310 may include a first current collecting portion 8311, a second current collecting portion 8312, and a connection portion 8313.

The current collecting unit 8310 may have a rectangular shape extending in the longitudinal direction (y direction) of the electrode assembly 1200. In the longitudinal direction of the rectangle, the connection portion 8313, the first current collecting portion 8311, and the second current collecting portion 8312 may be sequentially arranged. The first current collecting portion 8311 and the second current collecting portion 8312 may have a predetermined height h1. Specifically, the height of the first current collecting portion 8311 and the second current collecting portion 8312 may be 0.5 to 3.0 mm.

The first current collecting portion 8311 may be connected to one side of the connection portion 8313, and the second current collecting portion 8312 may be connected to the other side of the first current collecting portion 8311. An opening 8315 may be formed in the connection portion 8313.

The pole unit 8320 is electrically connected to the electrode terminal. The material of the pole unit 8320 may be the same as or different from that of the current collecting unit 8310. For example, both the current collecting unit 8310 and the pole unit 8320 may be formed of aluminum. Alternatively, the current collecting unit 8310 may be formed of copper, and the pole unit 8320 may be formed of aluminum. In the present invention, since the current collecting unit 8310 and the pole unit 8320 are formed separately, the degree of freedom in the materials and dimensions of the parts may be increased.

The pole unit 8320 may include a current collecting protrusion 8321 and a support portion 8322 (Fig. 49a). The current collecting protrusion 8321 has a cylindrical shape with a predetermined height hc. The current collecting protrusion 8321 may be electrically connected to the electrode terminal. A nickel plating layer 8326 may be formed on the upper end of the current collecting protrusion 8321.

The support portion 8322 is connected to the lower end of the current collecting protrusion 8321 and may have the shape of a square plate, a rectangular plate, or a disc. The shape of the support portion 8322 may correspond to the shape of the opening 8315, and the cross-sectional area of the opening 8315 may also be polygonal (e.g., square, rectangular, pentagonal, hexagonal, octagonal etc.), oval, circular or a combination thereof. The current collecting protrusion 8321 may be supported by the support portion 8322 and connected to the current collecting unit 8310.

The support portion 8322 may be inserted into the opening 8315 of the connection portion 8313. The height h3 of the support portion 8322 may be greater than the height d3 of the current collecting unit 8310. Accordingly, when the support portion 8322 is fitted into the opening 8315, the upper surface of the support portion 8322 may protrude upward from the upper surface of the connection portion 8313 by a predetermined height h2 (Fig. 52).

The height h2 by which the support portion 8322 protrudes from the upper surface of the connection portion 8313, that is, from the upper surface of the current collecting unit 8310, may be smaller than the thickness of the end portion of the current collecting unit 8310. Specifically, the protruding height h2 of the support portion 8322 from the upper surface of the connection portion 8313 may be 30 to 50% of the height h1 of the end portion of the first or second current collecting portion 8311, 8312. Due to the protrusion of the support portion 8322, a stepped structure may be formed in the current collector 8300 (Fig. 55).

The height h2 of the protruding portion may be equal to or greater than the height at which the plurality of first electrode tabs 1220 and the plurality of second electrode tabs 1230 are welded on the upper surface of the current collector 8300. As the number of the plurality of first electrode tabs 1220 and the plurality of second electrode tabs 1230 increases, that is, as the thickness of the electrode assembly 1200 (in the x direction in FIG. 2) increases, the height h2 of the protruding portion of the support portion 8322 may also increase. The height h2 of the protruding portion of the support portion 8322 may be 1 to 5%, preferably 2.5%, of the thickness of the electrode assembly 1200.

The height h2 of the protruding portion of the support portion 8322 may be determined according to the following equation:
$h 2 = A \times 0.005 \times B / C$

Here, A is the thickness of the electrode assembly, B is the length of the electrode tabs, and C is the number of groups of electrode tabs connected to electrodes of a same polarity, wherein electrode tabs at the same position are aligned with one another in each of the groups.

In the two current collecting plates 8300 disposed on the electrode portion 1210, the height h2 of the protruding portions of the support portions 8322 may be the same. In order that a component fitted onto the current collecting protrusion 8321 may be stably supported on the protruding portion of the support portion 8322, the support portion 8322 may have a predetermined area. The area of the horizontal cross-section of the support portion 8322 may be 3 to 5 times the area of the horizontal cross-section of the current collecting protrusion 8321.

The upper surface of the support portion 8322 may be formed as a flat surface to support an assembled component. The current collecting protrusion 8321 and the support portion 8322 may be integrally formed.

After the support portion 8322 is inserted into the opening 8315 of the current collecting unit 8310, the support portion 8322 and the current collecting unit 8310 may be joined by welding at the lower surface of the connection portion 8313. The lower surface of the current collecting unit 8310 and the lower surface of the support portion 8322 may form the same plane. By welding, a welding region may be formed on the lower surface of the connection portion 8313.

As shown in FIG. 56, in one example, the welding region may be formed at the contact portion between the lower surface of the connection portion 8313 and the lower surface of the support portion 8322 (region A).

When the support portion 8322 and the opening 8315 are formed in a rectangular plate shape, the support portion 8322 is fitted into the rectangular opening 8315 of the current collecting unit 8310, thereby preventing the current collecting protrusion 8321 from rotating.

The width of the current collector 8300 may be 0.3 to 0.8 times the thickness of the electrode assembly 1200. The current collector 8300 may have a thickness of 0.5 to 3.0 mm. The radius of curvature of the edge on the upper surface of the current collector 8300 may be 0.25 to 0.35 mm.

An insulating member may be disposed below the current collector 8300. The insulating member may be an insulating plate or an insulating film. The insulating member may further protect the electrode tabs 1220 and 1230 and the electrode portion 1210.

The insulating member may be applied or attached to the lower surface of the current collector 8300 with a predetermined thickness after the pole unit 8320 is welded to the current collecting unit 8310.

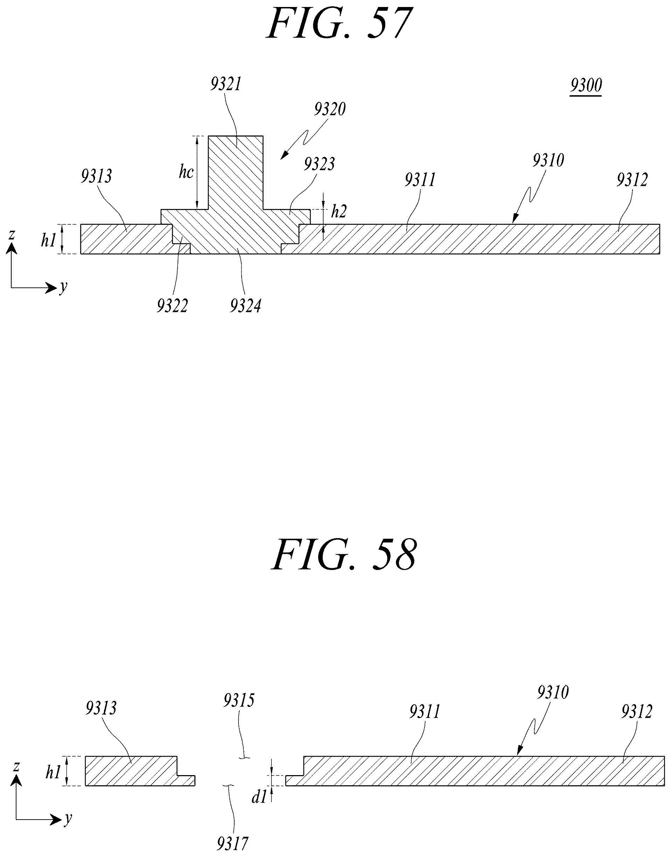

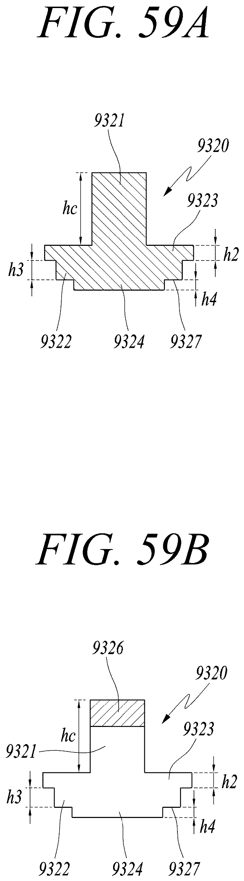

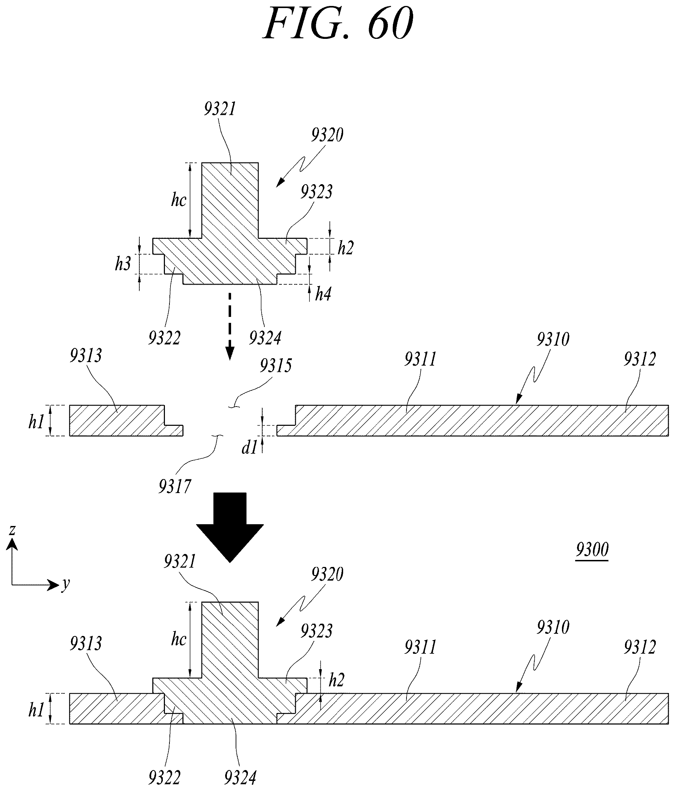

FIG. 57 is a cross-sectional view showing a current collector according to an example. FIG. 58 is a view showing a current collecting unit according to an example. FIG. 59a and 59b are views showing a pole unit according to an example. FIG. 60 is a view showing the process of assembling the current collecting unit and the pole unit according to an example.

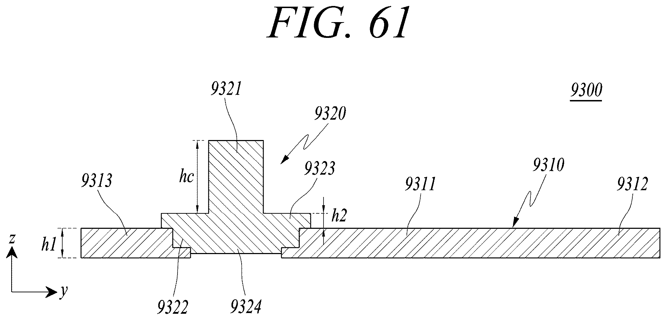

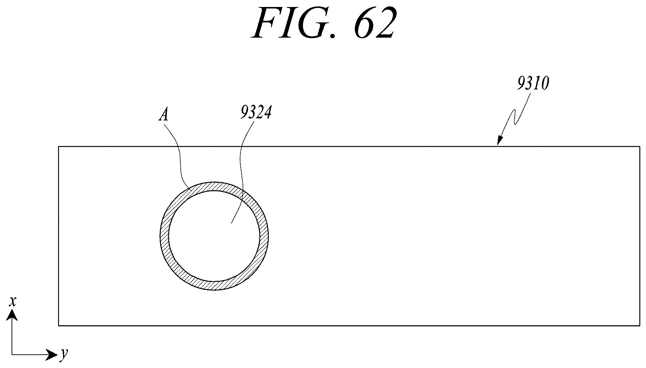

FIG. 61 is a view showing a modified example in which the length of the extension portion of the pole unit is changed, and FIG. 62 is a view showing a welding region on the lower surface of the current collecting unit according to an example.

As shown in FIG. 57, the current collector 9300 may include a current collecting unit 9310 and a pole unit 9320. The current collecting unit 9310 may include a first current collecting portion 9311, a second current collecting portion 9312, and a connection portion 9313.

The current collecting unit 9310 may have a rectangular shape extending in the longitudinal direction (y direction) of the electrode assembly 1200. The connection portion 9313, the first current collecting portion 9311, and the second current collecting portion 9312 may be sequentially arranged. The connection portion 9313, the first current collecting portion 9311, and the second current collecting portion 9312 may all be made of the same material and may be integrally formed.

The first current collecting portion 9311 may be welded to the plurality of first electrode tabs 1220, and the second current collecting portion 9312 may be welded to the plurality of second electrode tabs 1230. The connection portion 9313 may be formed to have the same thickness as the first current collecting portion 9311 and the second current collecting portion 9312. The thickness of the connection portion 9313 may be 0.5 to 3.0 mm. The radius of curvature of the edge on the upper surface of the current collector 9300 may be 0.25 to 0.35 mm.

The connection portion 9313 may be coupled to the pole unit 9320.

As shown in FIG. 58, an opening 9315 may be formed in the connection portion 9313. Through the opening 9315, the pole unit 9320 may be coupled to the connection portion 9313.

A recessed region 9317 may be formed on the lower surface of the current collecting unit 9310. The recessed region 9317 may have the shape of a disc, a square plate, or a rectangular plate, and is a region forming an empty space upward from the lower surface of the connection portion of the current collecting unit 9310. In this example, the cross-sectional area of the recessed region 9317 may be smaller than the cross-sectional area of the opening 9315. For example, when the opening 9315 and the recessed region 9317 are disc-shaped, the diameter of the recessed region 9317 may be smaller than the diameter of the opening 9315. As the diameter of the recessed region 9317 is made smaller than the diameter of the opening 9315, the contact area between the current collecting unit 9310 and the pole unit 9320 may be increased when the current collecting unit 9310 and the pole unit 9320 are coupled. Accordingly, stable coupling of the current collecting unit 9310 and the pole unit 9320 is possible. The depth d1 of the recessed region 9317 may be 30 to 50% of the height h1 of the end portion of the current collecting unit 9310.

The pole unit 9320 is coupled to the current collecting unit 9310 and may electrically connect the electrode tabs 1220 and 1230 of the electrode portion 1210 to the electrode terminal. The material of the pole unit 9320 may be the same as or different from that of the current collecting unit 9310.

As shown in FIG. 59a, the pole unit 9320 may include a current collecting protrusion 9321, a support portion 9322, a flange 9323, and an extension portion 9324. The current collecting protrusion 9321 has a cylindrical shape with a predetermined height hc. The current collecting protrusion 9321 is electrically connected to the electrode terminal.

The support portion 9322, the flange 9323, and the extension portion 9324 are connected to the lower end of the current collecting protrusion 9321, and may have the shape of a disc or a rectangular plate. The flange 9323, the support portion 9322, and the extension portion 9324 may be connected in this order from the lower end of the current collecting protrusion 9321.

The shape of the support portion 9322 may be the same as the shape of the opening 9315 of the current collecting unit 9310. The support portion 9322 may be inserted into the opening 9315 of the current collecting unit 9310. The support portion 9322 may support the current collecting protrusion 9321 such that the current collecting protrusion 9321 is perpendicular to the current collecting unit 9310 when the pole unit 9320 is connected to the current collecting unit 9310.

The diameter of the support portion 9322 may be greater than the diameter of the recessed region 9317. In addition, the height h3 of the support portion 9322 may be the same as the height of the opening 9315. Accordingly, when the support portion 9322 is inserted into the opening 9315, the lower surface of the support portion 9322 may be supported by the stepped surface formed by the recessed region 9317 and the opening 9315 in the current collecting unit 9310.

The flange 9323 may be disposed between the current collecting protrusion 9321 and the support portion 9322. The cross-sectional area of the flange 9323 may be larger than the cross-sectional area of the support portion 9322. Accordingly, the flange 9323 may contact the upper surface of the connection portion 9313 and allow the pole unit 9320 to be stably supported on the current collecting unit 9310. When the support portion 9322 is inserted into the opening 9315, the flange 9323 may contact the peripheral surface around the opening 9315, and the lower surface 9327 of the support portion 9322 may contact the stepped surface formed by the recessed region 9317 and the opening 9315 in the current collecting unit 9310. Accordingly, when the current collecting unit 9310 and the pole unit 9320 are coupled, the contact area between the current collecting unit 9310 and the pole unit 9320 may be increased, and the current collecting protrusion 9321 may be more stably supported on the current collecting unit 9310.

When the current collector 9300 is coupled to another component, the flange 9323 may determine the lower limit of the coupled component and may protrude upward by a predetermined height from the upper surface of the connection portion 9313. By means of the flange 9323, another component assembled to the current collector 9300 may be assembled horizontally.

The height h2 of the flange 9323 may be 1 to 5%, preferably 2.5%, of the thickness of the electrode assembly 1200.

The height h2 of the flange 9323 may be determined according to the following equation:
$h 2 = A \times 0.005 \times B / C$

Here, A is the thickness of the electrode assembly, B is the length of the electrode tabs, and C is the number of groups of electrode tabs connected to electrodes of a same polarity, wherein electrode tabs at the same position are aligned with one another in each of the groups.

In the two current collecting plates 9300 disposed on the electrode portion 1210, the flanges 9323 may have the same height.

The flange 9323 may have the shape of a square plate, a rectangular plate, or a disc. The upper surface of the flange 9323 is formed as a flat surface for supporting an assembled component and may have a predetermined area. The cross-sectional area of the flange 9323 may be 3 to 6% of the upper surface area of the current collecting unit 9310.

When the support portion 9322 and the flange 9323 are cylindrical, the diameter of the flange 9323 may be 1.2 to 1.4 times the diameter of the support portion 9322. When the support portion 9322 and the flange 9323 are rectangular columns, the length of one side of the flange 9323 may be 1.2 to 1.4 times the length of one side of the support portion 9322. By securing the length and area of the flange 9323, the pole unit 9320 may be stably fixed on the connection portion 9313 and may stably support a component coupled to the current collecting protrusion 9321.

The area of the horizontal cross-section of the flange 9323 may be 5 to 15 times, preferably 10 times, the area of the horizontal cross-section of the current collecting protrusion 9321. In addition, when the flange 9323 is cylindrical, the diameter of the current collecting protrusion 9321 may be 20 to 50%, preferably 30%, of the diameter of the flange 9323. Since the cross-sectional area of the flange 9323 is greater than that of the current collecting protrusion 9321, or the diameter of the flange 9323 is greater than that of the current collecting protrusion 9321, a connecting component may be stably supported.

The flange 9323 protrudes upward from the upper surface of the connection portion 9313, and its height may be equal to or greater than the thickness of the current collecting unit 9310. Specifically, the height of the flange 9323 may be 100 to 120% of the height of the end portion of the current collecting unit 9310, that is, the height of the end portion of the first or second current collecting portion 9311, 9312. If the height of the flange 9323 exceeds 120% of the thickness of the connection portion 9313, the distance between the component coupled to the current collecting protrusion 9321 and the connection portion 9313 may become large, making stable support difficult and weakening airtightness. A stepped structure of the current collector 9300 may be formed by the flange 9323.

In order to facilitate coupling between the current collecting protrusion 9321 and a component, the height hc of the current collecting protrusion 9321 may be formed greater than the height of the flange 9323 within a predetermined range. Specifically, the height of the flange 9323 may be 30 to 50%, preferably 40%, of the height hc of the current collecting protrusion 9321. If the height of the flange 9323 is greater than 50% of the height of the current collecting protrusion 9321, the height difference between the upper surface of the flange 9323 and the upper surfaces of the first and second current collecting portions 9311 and 9312 becomes large, making it difficult to stably support a component.

An extension portion 9324 may protrude from the lower side of the support portion 9322. The cross-sectional area of the extension portion 9324 may be smaller than the cross-sectional area of the support portion 9322. For example, when the support portion 9322 and the extension portion 9324 are disc-shaped, the support portion 9322 and the extension portion 9324 form concentric circles, and the extension portion 9324 may protrude from the inner lower side of the support portion 9322. The protruding length h4 of the extension portion 9324 may be the same as the depth of the recessed region 9317. That is, the lower surface of the current collecting unit 9310 and the lower surface of the extension portion 9324 may be located on the same plane. In this case, when the current collector 9300 in which the current collecting unit 9310 and the pole unit 9320 are coupled is disposed on the electrode portion 1210, the current collecting unit 9310 and the pole unit 9320 may contact the upper surface of the electrode portion 1210 and be stably disposed thereon.

In a modified example of Embodiment 9, the protruding length h4 of the extension portion 9324 may be smaller than the depth of the recessed region 9317. That is, the lower surface of the extension portion 9324 may be located upward from the lower surface of the current collecting unit 9310 by a predetermined length (Fig. 61). Accordingly, when welding is performed at the edge of the lower surface of the support portion 9322, even if welding burrs are generated, they may not protrude below the lower surface of the current collecting unit 9310.

Since a flange 9323 having a diameter greater than that of the support portion 9322 is disposed on the upper surface of the support portion 9322, and an extension portion 9324 having a diameter smaller than that of the support portion 9322 protrudes from the inner lower side of the support portion 9322, stepped surfaces may be formed at the edge of the lower surface of the flange 9323 and at the edge of the lower surface of the support portion 9322. A stepped structure of the current collector 9300 may be formed by the flange 9323 and the extension portion 9324.

The current collecting protrusion 9321, the support portion 9322, the flange 9323, and the extension portion 9324 may be integrally formed.

In the case of a negative current collector, the upper end of the copper current collecting protrusion 9321 may be nickel-plated. The height of the nickel plating layer 9326 may be 1.5 to 2.5 mm from the upper end of the current collecting protrusion 9321. The height of the nickel plating layer 9326 may be 30 to 50% of the height of the current collecting protrusion 9321. The thickness of the nickel plating layer 9326 may be 2 to 4 µm. By nickel-plating the upper end of the current collecting protrusion 9321, welding strength during welding to the electrode terminal may be further secured, and corrosion at the contact portion between the current collecting protrusion 9321 and the terminal may be prevented.

After the support portion 9322 is fitted into the opening 9315 of the current collecting unit 9310 and the extension portion 9324 is fitted into the recessed region 9317, the extension portion 9324 and the current collecting unit 9310 may be joined by welding. Welding may be performed around the lower-surface periphery of the extension portion 9324. By welding, a welding region A may be formed on the lower surface of the extension portion 9324.

The width of the current collector 9300 may be 0.3 to 0.8 times the thickness of the electrode assembly 1200. The current collector 9300 may have a thickness of 0.5 to 3.0 mm.

An insulating member may be disposed below the current collector 9300. The insulating member may be an insulating plate or an insulating film. The insulating member may further protect the electrode tabs 1220 and 1230 and the electrode portion 1210.

The insulating member may be applied or attached to the lower surface of the current collector 9300 with a predetermined thickness after the pole unit 9320 is welded to the current collecting unit 9310.

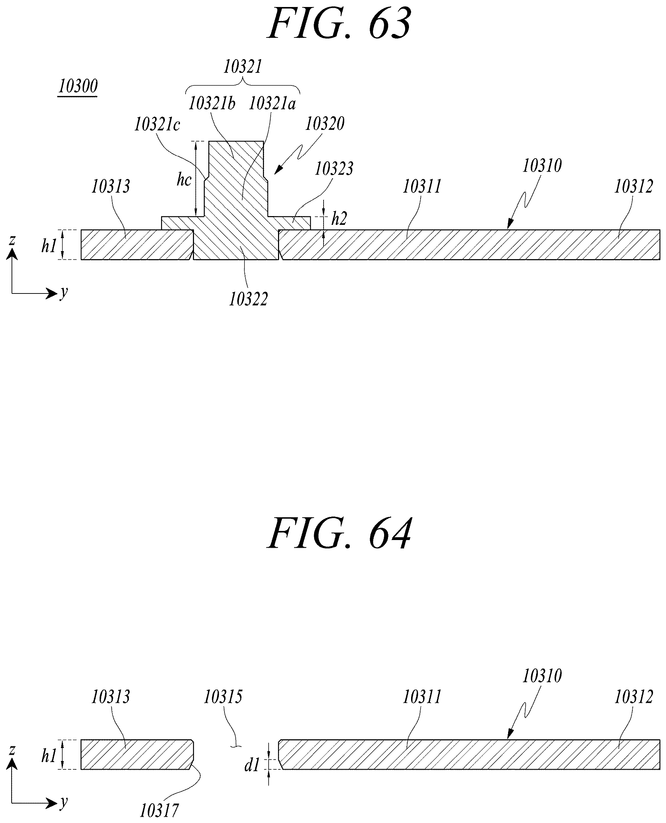

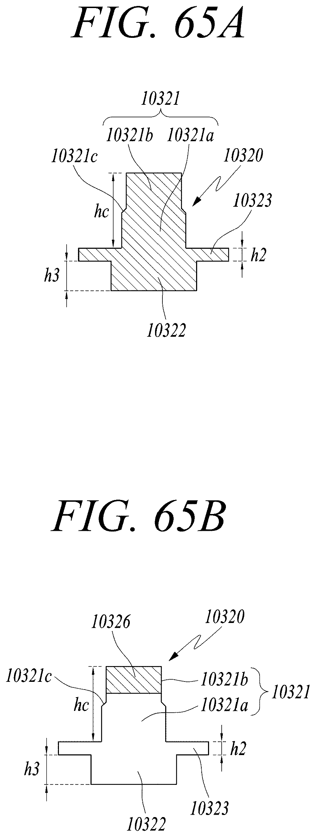

FIG. 63 is a view showing a current collector in a secondary battery according to an example. FIG. 64 is a view showing a current collecting unit according to an example. FIG. 65a and 65b are views showing a pole unit according to an example. FIG. 65 is a view showing a process of assembling the current collecting unit and the pole unit according to an example.

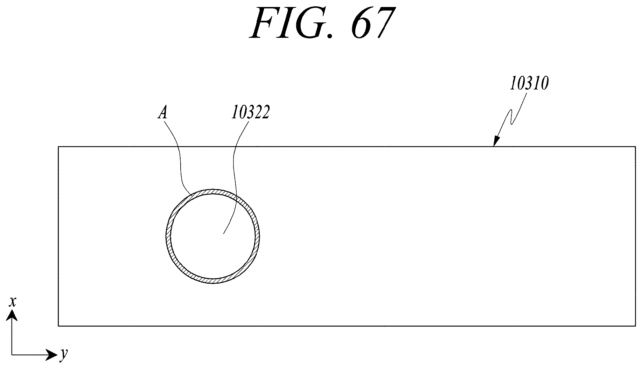

FIG. 67 is a view showing a welding region on the lower surface of the current collecting unit according to an example.

As shown in FIG. 63, the current collector 10300 may include a current collecting unit 10310 and a pole unit 10320. The current collecting unit 10300 may be connected to a plurality of electrode tabs 1220 and 1230. The pole unit 10320 may be connected to an electrode terminal.

The current collecting unit 10310 has a rectangular shape extending in the longitudinal direction (y direction) of the electrode assembly 1200, and a connection portion 10313, a first current collecting portion 10311, and a second current collecting portion 10312 may be sequentially arranged. The connection portion 10313, the first current collecting portion 10311, and the second current collecting portion 10312 may all be made of the same material and may be integrally formed.

The first current collecting portion 10311 may be welded to the plurality of first electrode tabs 1220, and the second current collecting portion 10312 may be welded to the plurality of second electrode tabs 1230. The connection portion 10313 may be formed to have the same thickness as the first current collecting portion 10311 and the second current collecting portion 10312. The thickness of the connection portion 10313 may be 0.5 to 3.0 mm. The radius of curvature of the edge on the upper surface of the current collector 10300 may be 0.25 to 0.35 mm.

The connection portion 10313 may be coupled to the pole unit 10320.

As shown in FIG. 64, an opening 10315 may be formed in the connection portion 10313. Through the opening 10315, the pole unit 10320 may be coupled to the connection portion 10313.

On the inner peripheral surface of the opening 10315, an inclined surface may be formed at a predetermined height from the lower surface of the current collecting unit 10310. Specifically, the point where the inner surface of the opening 10315 meets the lower surface of the current collecting unit 10310 may be chamfered along the circumference of the opening 10315. Accordingly, when the current collecting unit 10310 and the pole unit 10320 are coupled, the lower surface of the current collecting unit 10310 and the lower surface of the pole unit 10320 may be spaced apart from each other along the circumference of the opening 10315.

The height d1 at which the inclined surface is formed on the inner surface of the opening 10315 of the current collecting unit 10310 may be 5 to 15% of the height h1 of the end portion of the current collecting unit 10310.

The pole unit 10320 is coupled to the current collecting unit 10310 and may electrically connect the electrode tabs 1220 and 1230 of the electrode portion 1210 to the electrode terminal. The material of the pole unit 10320 may be the same as or different from that of the current collecting unit 10310.

As shown in FIG. 65a and 65b, the pole unit 10320 may include a current collecting protrusion 10321, a support portion 10322, and a flange 10323. The current collecting protrusion 10321 has a cylindrical shape with a predetermined height hc. The current collecting protrusion 10321 may be formed as two concentric cylinders having different diameters and integrally formed. For example, the diameter of the upper portion 10321b of the current collecting protrusion 10321 may be smaller than the diameter of the lower portion 10321a thereof. An inclined surface 10321c may be formed at the portion where the diameter of the current collecting protrusion 10321 changes. The current collecting protrusion 10321 may be electrically connected to the electrode terminal.

The support portion 10322 and the flange 10323 are connected to the lower end of the current collecting protrusion 104321 and may have the shape of a disc or a polygonal plate such as a rectangular plate. The shape of the support portion 10322 may be the same as the shape of the opening 10315 of the current collecting unit 10310. The support portion 10322 may be inserted into the opening 10315 of the current collecting unit 10310. The support portion 10322 may support the current collecting protrusion 10321 such that the current collecting protrusion 10321 is perpendicular to the current collecting unit 10310 when the pole unit 10320 is connected to the current collecting unit 10310.

The height h3 of the support portion 10322 may be the same as the height of the opening 10315. When the support portion 10322 is inserted into the opening 10315, the lower surface of the support portion 10322 may be located on the same plane as the lower surface of the current collecting unit 10310.

The flange 10323 may be disposed between the current collecting protrusion 10321 and the support portion 10322. The cross-sectional area of the flange 10323 may be larger than the cross-sectional area of the support portion 10322. Accordingly, the flange 10323 may contact the upper surface of the connection portion 10313 and prevent the support portion 10322 from moving downward through the opening 10315 beyond a predetermined depth. When the support portion 10322 is inserted into the opening 10315, the flange 10323 may contact the peripheral surface around the opening 10315 on the upper surface of the current collecting unit 10310 so that the current collecting protrusion 10321 is more stably supported.

When the current collector 10300 is coupled to another component, the flange 10323 may determine the lower limit of the coupled component and may protrude upward by a predetermined height from the upper surface of the connection portion 10313. By means of the flange 10323, another component assembled to the current collector 10300 may be assembled horizontally.

The height h2 of the flange 10323 may be 1 to 5%, preferably 2.5%, of the thickness of the electrode assembly 1200.

The height h2 of the flange 10323 may be determined by the following equation:
$h 2 = A \times 0.005 \times B / C$

Here, A is the thickness of the electrode assembly, B is the length of the electrode tabs, and C is the number of groups of electrode tabs connected to electrodes of a same polarity, wherein electrode tabs at the same position are aligned with one another in each of the groups.

According to the present invention, a large number of electrode tabs may be welded onto the current collector 10300 while forming a plurality of groups, and as the number of same-polarity electrode-tab groups increases, the height h2 of the flange 10323 may decrease.

In the two current collecting plates 10300 disposed on the electrode portion 1210, the flanges 10323 may have the same height.

The flange 10323 may have the shape of a square, rectangular, or other polygonal plate, or a disc. The upper surface of the flange 10323 is formed as a flat surface for supporting an assembled component and may have a predetermined area. The cross-sectional area of the flange 10323 may be 3 to 6% of the upper surface area of the current collecting unit 10310.

When the support portion 10322 and the flange 10323 are cylindrical, the diameter of the flange 10323 may be 1.2 to 1.4 times the diameter of the support portion 10322. When the support portion 10322 and the flange 10323 are rectangular columns, the length of one side of the flange 10323 may be 1.2 to 1.4 times the length of one side of the support portion 10322. By securing the length and area of the flange 10323, the pole unit 10320 may be stably fixed on the connection portion 10313 and may stably support a component coupled to the current collecting protrusion 10321.

The area of the horizontal cross-section of the flange 10323 may be 5 to 15 times, preferably 10 times, the area of the horizontal cross-section of the current collecting protrusion 10321. In addition, when the flange 10323 is cylindrical, the diameter of the current collecting protrusion 10321 may be 20 to 50%, preferably 30%, of the diameter of the flange 10323. Since the cross-sectional area of the flange 10323 is greater than that of the current collecting protrusion 10321, or the diameter of the flange 10323 is greater than that of the current collecting protrusion 10321, a connecting component may be stably supported.

The flange 10323 protrudes upward from the upper surface of the connection portion 10313, and its height may be equal to or greater than the thickness of the current collecting unit 10310. Specifically, the height of the flange 10323 may be 100 to 120% of the height of the end portion of the current collecting unit 10310, that is, the height of the end portion of the first or second current collecting portion 10311, 10312. If the height of the flange 10323 exceeds 120% of the thickness of the connection portion 10313, the distance between the component coupled to the current collecting protrusion 10321 and the connection portion 10313 may become large, making stable support difficult and weakening airtightness.

A stepped structure of the current collector 10300 may be formed by the flange 10323.

In order to facilitate coupling between the current collecting protrusion 10321 and a component, the height of the flange 10323 may be formed smaller than the height hc of the current collecting protrusion 10321 within a predetermined range. Specifically, the height of the flange 10323 may be 30 to 50%, preferably 40%, of the height hc of the current collecting protrusion 10321. If the height of the flange 10323 is greater than 50% of the height of the current collecting protrusion 10321, the height difference between the upper surface of the flange 10323 and the upper surfaces of the first and second current collecting portions 10311 and 4312 becomes large, making it difficult to stably support a component.

The current collecting protrusion 10321, the support portion 10322, and the flange 10323 may be integrally formed.

In the case of a negative current collector, the upper end of the copper current collecting protrusion 10321 may be nickel-plated. The height of the nickel plating layer 10326 may be 1.5 to 2.5 mm from the upper end of the current collecting protrusion 10321. The height of the nickel plating layer 10326 may be 30 to 50% of the height of the current collecting protrusion 10321. The thickness of the nickel plating layer 10326 may be 2 to 4 µm. By nickel-plating the upper end of the current collecting protrusion 10321, welding strength during welding to the electrode terminal may be further secured, and corrosion at the contact portion between the current collecting protrusion 10321 and the terminal may be prevented.

After the support portion 10322 is fitted into the opening 10315 of the current collecting unit 10310, the support portion 10322 and the current collecting unit 10310 are joined by welding. Welding may be performed around the lower-surface periphery of the support portion 10322. By welding, a welding region A may be formed on the lower surface of the support portion 10322.

As shown in FIG. 67, in one example, the welding region is formed at the outer edge of the lower surface of the support portion 10322 (region A). Since the inner lower surface of the opening 10315 is chamfered, the lower surface of the connection portion 10313 and the lower surface of the support portion 10322 are spaced apart by a predetermined gap. Welding may be performed across the spaced gap, and accordingly, even if welding burrs are generated, they do not protrude below the lower surface of the current collecting unit 10310.

In this example, a sufficient welding area is secured by the disc-shaped or polygonal support portion 10322, so that the current collecting protrusion 10321 may be stably connected to the current collecting unit 10310. In addition, when the support portion 10322 is formed as a polygon such as a square plate and accommodated in the opening 10315, rotation of the current collecting protrusion 10321 may be prevented.

The width of the current collector 10300 may be 0.3 to 0.8 times the thickness of the electrode assembly 1200. The current collector 10300 may have a thickness of 0.5 to 3.0 mm. An insulating member may be disposed below the current collector 10300.

The coupling structure between the connection portion and the pole unit according to the present invention may be applied to various types of current collectors.

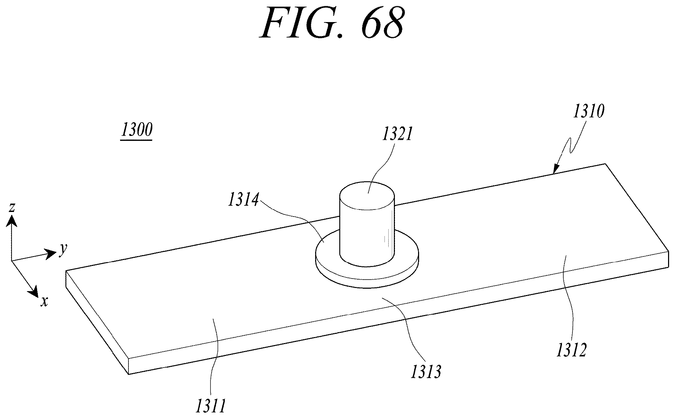

FIG. 68 is a view illustrating a current collector according to an example.

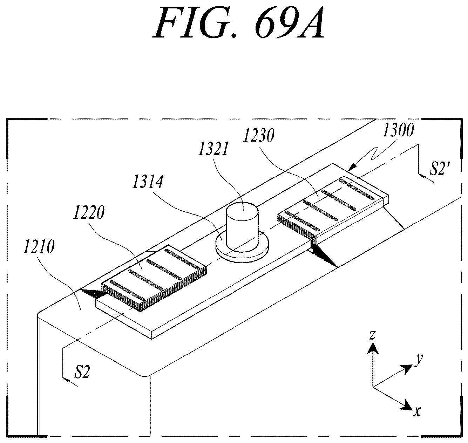

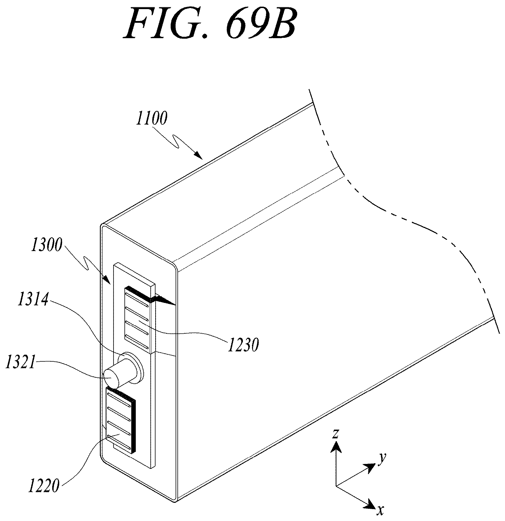

FIG. 69A and 69B are views illustrating the first and second electrode tabs 1220, 1230 welded to the current collector 1300 according to embodiments. In these examples, the first and second electrode tabs 1220, 1230 are arranged on the current collector 1300 so that the the pole unit (represented in the drawings by the current collecting protrusion 1321) is located between the first electrode tabs 1220 and the second electrode tabs 1230.

Furthermore, the example of FIG. 69A shows that the current collector is formed on an upper side, that is, a side perpendicular to z direction (e.g., corresponding to a height direction of the secondary battery), of the electrode assembly (represented by electrode portion 1210 in FIG. 69A). In this example, although not explicitly shown, the current collectors for both polarities may be provided on a same side (same surface) of the electrode assembly, similar to arrangements as shown in FIG. 1 to 5B.

Accordingly, the first and second electrode tabs 1220, 1230 as shown in FIG. 69A may be connected to electrodes of a first polarity so that the current collector 1300 and the pole unit and its current collecting unit 1321 conducts electric current to and from these electrodes. There may be provided another current collector (similar to arrangements as shown in FIG. 1 to 5B; not shown in FIG. 69A) that is welded to third and fourth electrode tabs that are connected to electrodes of a second polarity that is different from (opposite to) the first polarity. The first polarity may be positive polarity, and the second polarity may be negative polarity. Alternatively, the first polarity may be negative polarity, and the second polarity may be positive polarity.

In the example of FIG. 69B, a single current collector 1300 is arranged on a front surface of the electrode assembly. Similar to the examples shown in FIG. 6 and 7 above and 74A and 74B below, the electrode tabs 1220, 1230 may be connected to electrodes of a first polarity so that the current collector 1300 and the pole unit (represented by the current collecting unit 1321) conducts electric current to and from these electrodes. There may be provided another current collector (similar to arrangements as shown in FIG. 6, 7, 74A and 74B; not shown in FIG. 69B) that is welded to third and fourth electrode tabs that are connected to electrodes of a second polarity that is different from (opposite to) the first polarity. The first polarity may be positive polarity, and the second polarity may be negative polarity. Alternatively, the first polarity may be negative polarity, and the second polarity may be positive polarity.

It is noted that any of the examples of the current collector, electrode tabs and pole unit as described herein may be applicable to either of the arrangement as shown in FIG. 69A or FIG. 69B.

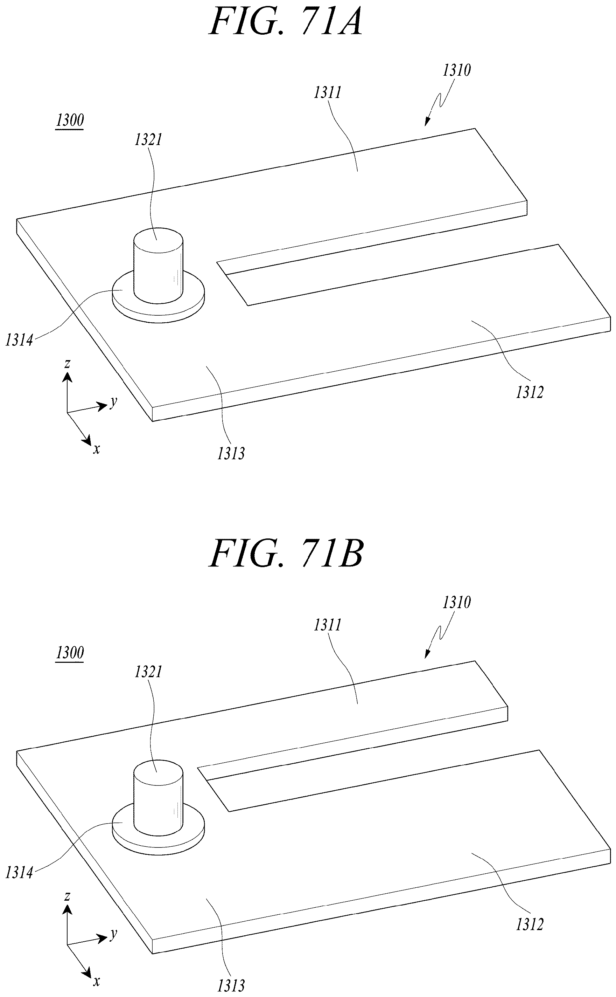

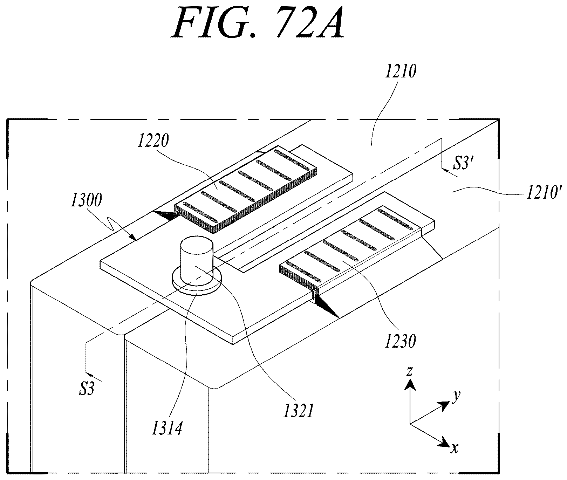

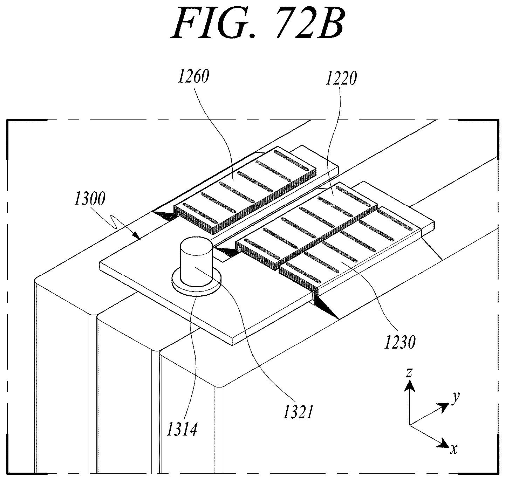

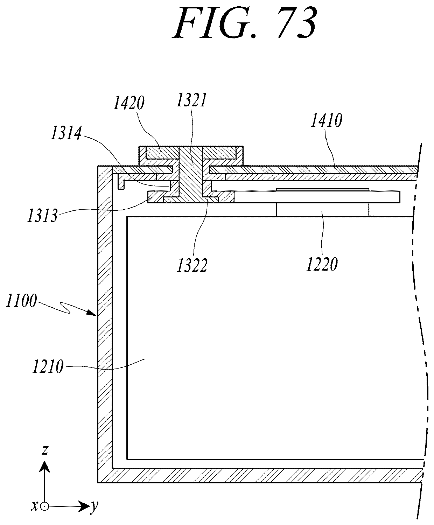

FIG. 71A and 71B are views showing a current collector in a secondary battery according to an example. FIG. 72A and 72B are views showing a state in which the current collector and the first and second electrode tabs are coupled in the secondary battery according to examples. FIG. 73 is a cross-sectional view taken along line S3-S3' of FIG. 72A.The current collector 1300 may include a current collecting unit 1310 and a pole unit 1320. The current collecting unit 1310 illustrated in FIG. 68 may have a rectangular shape extending in the longitudinal direction (y direction) of the electrode assembly 1200. The current collecting unit 1310 may be configured such that a first current collecting portion 1311, a connection portion 1313, and a second current collecting portion 1312 are successively arranged in a longitudinal direction of the rectangular shape. The first current collecting portion 1311, the connection portion 1313, and the second current collecting portion 1312 may all be formed of the same material and may be integrally formed.

The first current collecting portion 1311 may be welded to the plurality of first electrode tabs 1220. The plurality of first electrode tabs 1220 may be bent onto and welded to the first current collecting portion 1311. The second current collecting portion 1312 may be welded to the plurality of second electrode tabs 1230. The plurality of second electrode tabs 1230 may be bent onto and welded to the second current collecting portion 1312. The first current collecting portion 1311 and the second current collecting portion 1312 may have a predetermined height h1. Specifically, the height of each of the first current collecting portion 1311 and the second current collecting portion 1312 may range from 0.5 mm to 3.0 mm.

The connection portion 1313 may be disposed between the first current collecting portion 1311 and the second current collecting portion 1312. The first current collecting portion 1311 and the second current collecting portion 1312 may be respectively connected to one side and a remaining side of the connection portion 1313. As the first current collecting portion 1311 and the second current collecting portion 1312 are disposed to be spaced apart from each other by the connection portion 1313, the plurality of first electrode tabs 1220 and the plurality of second electrode tabs 1230 do not interfere with each other when welded to the first current collecting portion 1311 and the second current collecting portion 1312, respectively.

Once the electrode assembly 1200 and the current collector 1300 are connected, the electrode assembly 1200 may be inserted into the case 1100. The opening of the case 1100 accommodating the electrode assembly 1200 is sealed with the cap assembly 1400.

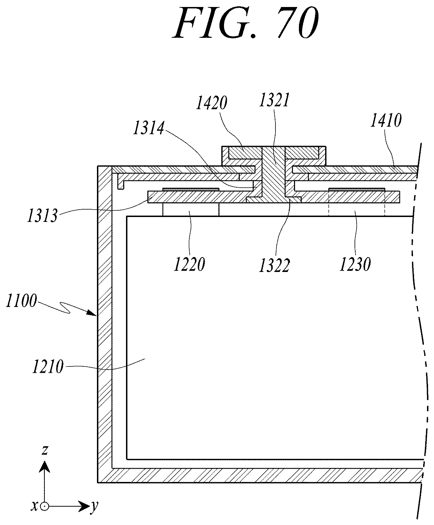

As shown in FIG. 70, when the cap assembly 1400 seals the opening of the case 1100, the current collecting protrusion 1321 of the current collector 1300 may pass through the opening of the cap plate 1410 and be inserted into the through-hole of the electrode terminal 1420. The lower structure of the cap assembly 1400 may be supported while contacting the upper surface of the stopper 1314 of the current collector 1300. Accordingly, the cap assembly 1400 may maintain a stable distance from the electrode assembly 1200.

After the current collecting protrusion 1321 is inserted into the through-hole of the electrode terminal 1420, the outer circumferential surface of the end portion of the current collecting protrusion 1321 and the inner circumferential surface of the end portion of the through-hole may be welded.

As the current collecting unit 1310 of the current collector 1300 is connected to the plurality of first and second electrode tabs 1220 and 1230, and the pole unit 1320 is connected to the electrode terminal 1420, the electrode tabs 1220 and 1230 of the electrode portion 1210 may be electrically connected to the electrode terminal 1420.

Two current collectors 1300 may be provided. The two current collectors 1300 may be disposed spaced apart from each other at one end of the electrode assembly, or may be respectively disposed at both ends of the electrode assembly.

The current collecting unit 1310 illustrated in FIGS. 71A and 71B may have a 'U' shape formed by two rectangular structures connected to each other and extending in the longitudinal direction (y direction) of the electrode assembly 1200. The first current collecting portion 1311 may be connected to an upper portion of one side of the rectangular connection portion 1313, and the second current collecting portion 1312 may be connected to a lower portion of the one side of the connection portion 1313. That is, the first current collecting portion 1311 and the second current collecting portion 1312 may be perpendicularly connected to the connection portion 1313, and the first current collecting portion 1311 and the second current collecting portion 1312 may be disposed parallel to each other.

The first current collecting portion 1311 and the second current collecting portion 1312 may be spaced apart from each other by a predetermined distance. The first current collecting portion 1311 and the second current collecting portion 1312 may have the same length and width (see FIG. 71A). However, the present disclosure is not limited thereto, and depending on an arrangement of electrode tabs and a thickness of the electrode portion, the first current collecting portion 1311 and the second current collecting portion 1312 may have different widths (see FIG. 71B). The connection portion 1313, the first current collecting portion 1311, and the second current collecting portion 1312 may all be formed of the same material and may be integrally formed.

The first current collecting portion 1311 may be welded to the plurality of first electrode tabs 1220. The plurality of first electrode tabs 1220 may be bent onto and welded to the first current collecting portion 1311. The second current collecting portion 1312 may be welded to the plurality of second electrode tabs 1230. The plurality of second electrode tabs 1230 may be bent onto and welded to the second current collecting portion 1312. The first current collecting portion 1311 and the second current collecting portion 1312 may have a predetermined height h1. Specifically, the height of each of the first current collecting portion 1311 and the second current collecting portion 1312 may range from 0.5 mm to 3.0 mm.

Since the first current collecting portion 1311 and the second current collecting portion 1312 are disposed spaced apart from each other in the thickness direction (x direction) of the electrode assembly 1200, the plurality of first electrode tabs 1220 and the plurality of second electrode tabs 1230 do not interfere with each other when they are welded to the first current collecting portion 1311 and the second current collecting portion 1312, respectively.

After the electrode assembly 1200 connected to the current collector 1300 is accommodated inside the case 1100, the opening of the case 1100 may be sealed with the cap assembly 1400.

FIG. 72A and 72B are views illustrating the first and second electrode tabs welded to the current collector according to examples. In the examples shown in FIG. 72A and 72B, a U-shaped current collector 1300 as described above with reference to FIG. 71A and 71B are employed.

In the example shown in FIG. 72A, the secondary battery comprises a first electrode portion 1210 and a second electrode portion 1210'. The two electrode portions 1210, 1210' may be provided as physically separate sets of electrodes and separators. The two electrode portions 1210, 1210' may be referred to together as the electrode assembly of the secondary battery. The current collector 1300 has a U-shape in which a first leg portion and a second leg portion extend away (in y direction) from a base. The base of the current collector may be a portion that is physically connected to the leg portions and also accommodates the pole unit (represented by the current collecting unit 1321). The leg portions may extend substantially parallel to each other as shown in FIG. 72A. The leg portions may have substantially equal size in x direction that is perpendicular to the direction in which the leg portions extend away from the base.

In FIG. 72A, the first electrode tabs 1220 are bent so as to rest on an upper surface of one leg portion of the current collector 1300. The second electrode tabs 1230 are bent so as to rest on an upper surface of another leg portion of the current collector 1300. The first and second electrode tabs 1220, 1230 are welded to the current collector 1300 as symbolized by thick solid lines in FIG. 72A. The first and second electrode tabs 1220, 1230 may be connected to the electrodes of the same polarity, i.e., to either negative electrodes or positive electrodes.

In the example shown in FIG. 72B, the secondary battery comprises three electrode portions. The three electrode portions may be provided as physically separate sets of electrodes and separators. The three electrode portions may be referred to together as the electrode assembly of the secondary battery. The current collector 1300 has a U-shape in which a first leg portion and a second leg portion extend away (in y direction) from a base. The base of the current collector may be a portion that is physically connected to the leg portions and also accommodates the pole unit (represented by the current collecting unit 1321). The leg portions may extend substantially parallel to each other as shown in FIG. 72B. The leg portions may have different sizes in x direction that is perpendicular to the direction in which the leg portions extend away from the base.

In FIG. 72B, the first and second electrode tabs 1220, 1230 are bent so as to rest on an upper surface of a first leg portion that has a larger size in x direction than a second leg portion of the current collector 1300. Further electrode tabs 1260 are bent so as to rest on an upper surface of another leg portion of the current collector 1300. The first and second electrode tabs 1220, 1230 and the further electrode tabs 1260 are welded to the current collector 1300 as symbolized by thick solid lines in FIG. 72B. The first and second electrode tabs 1220, 1230 and the further electrode tabs 1260 may be connected to the electrodes of the same polarity, i.e., to either negative electrodes or positive electrodes. The first, second and further electrode tabs 1220, 1230, 1260 may be connected to a respective one of the three electrode portions.

It is noted that any other one of the examples of the current collector, electrode tabs and pole unit as described herein may be applicable to secondar batteries having two or more electrode portions collectively used as the electrode assembly as in FIG. 72A and 72B.

Furthermore, the examples of FIG. 72A and 72B each show that the current collector is formed on an upper side, that is, a side perpendicular to z direction (e.g., corresponding to a height direction of the secondary battery), of the electrode assembly (represented by electrode portion 1210). In this example, although not explicitly shown, the current collectors for both polarities may be provided on a same side (same surface) of the electrode assembly, similar to arrangements as shown in FIG. 1 to 5B and 69A.

As shown in FIG. 73, when the cap assembly 1400 seals the opening of the case 1100, the current collecting protrusion 1321 of the current collector 1300 may pass through the opening of the cap plate 1410 and be inserted into the through-hole of the electrode terminal 1420. The lower structure of the cap assembly 1400 may be supported while contacting the upper surface of the stopper 1314 of the current collector 1300.

After the current collecting protrusion 1321 is inserted into the through-hole of the electrode terminal 1420, the outer circumferential surface of the end portion of the current collecting protrusion 1321 and the inner circumferential surface of the end portion of the through-hole may be welded.

As the current collecting unit 1310 of the current collector 1300 is connected to the plurality of first and second electrode tabs 1220 and 1230, and the pole unit 1320 is connected to the electrode terminal 1420, the electrode tabs 1220 and 1230 of the electrode portion 1210 may be electrically connected to the electrode terminal 1420.

Two current collectors 1300 may be provided. The two current collectors 1300 may be disposed spaced apart from each other at one end of the electrode assembly, or may be respectively disposed at both ends of the electrode assembly.

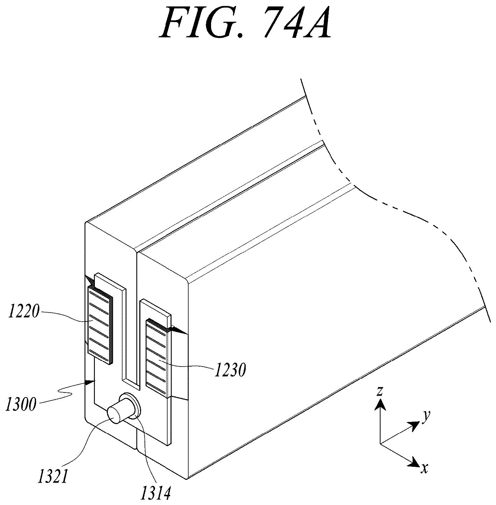

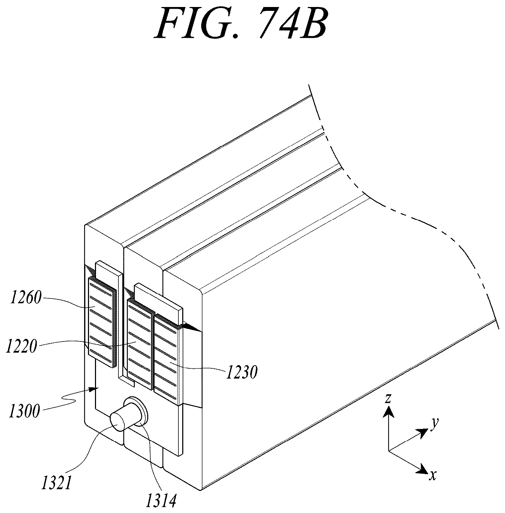

FIG. 74A and 74B are views illustrating the first and second electrode tabs welded to the current collector according to examples.

In the example shown in FIG. 74A, the secondary battery comprises a two electrode portions, which may be referred to together as the electrode assembly of the secondary battery. The two electrode portions may be provided as physically separate sets of electrodes and separators. The current collector 1300 has a U-shape in which a first leg portion and a second leg portion extend away (in z direction) from a base. The base of the current collector may be a portion that is physically connected to the leg portions and also accommodates the pole unit (represented by the current collecting unit 1321). The leg portions may extend substantially parallel to each other as shown in FIG. 74A. The leg portions may have substantially equal size in x direction that is perpendicular to the direction in which the leg portions extend away from the base.

In FIG. 74A, the first electrode tabs 1220 are bent so as to rest on an upper surface of one leg portion of the current collector 1300. The second electrode tabs 1230 are bent so as to rest on a surface of another leg portion of the current collector 1300. The first and second electrode tabs 1220, 1230 are welded to the current collector 1300 as symbolized by thick solid lines in FIG. 74A. The first and second electrode tabs 1220, 1230 may be connected to the electrodes of the same polarity, i.e., to either negative electrodes or positive electrodes.

In the example shown in FIG. 74B, the secondary battery comprises three electrode portions. The three electrode portions may be provided as physically separate sets of electrodes and separators. The three electrode portions may be referred to together as the electrode assembly of the secondary battery. The current collector 1300 has a U-shape in which a first leg portion and a second leg portion extend away (in z direction) from a base. The base of the current collector may be a portion that is physically connected to the leg portions and also accommodates the pole unit (represented by the current collecting unit 1321). The leg portions may extend substantially parallel to each other as shown in FIG. 74B. The leg portions may have different sizes in x direction that is perpendicular to the direction in which the leg portions extend away from the base.

In FIG. 74B, the first and second electrode tabs 1220, 1230 are bent so as to rest on an upper surface of a first leg portion that has a larger size in x direction than a second leg portion of the current collector 1300. Further electrode tabs 1260 are bent so as to rest on an upper surface of another leg portion of the current collector 1300. The first and second electrode tabs 1220, 1230 and the further electrode tabs 1260 are welded to the current collector 1300 as symbolized by thick solid lines in FIG. 74B. The first and second electrode tabs 1220, 1230 and the further electrode tabs 1260 may be connected to the electrodes of the same polarity, i.e., to either negative electrodes or positive electrodes. The first, second and further electrode tabs 1220, 1230, 1260 may be connected to a respective one of the three electrode portions.

It is noted that any other one of the examples of the current collector, electrode tabs and pole unit as described herein may be applicable to secondar batteries having two or more electrode portions collectively used as the electrode assembly as in FIG. 74A and 74B.

In the example of FIG. 74A and 74B, a single current collector 1300 is arranged on a front surface (that is perpendicular to y direction in FIG. 74A and 74B) of the electrode assembly. Similar to the examples shown in FIG. 6, 7 and 69B below, the electrode tabs 1220, 1230 and further electrode tabs 1260 (if applicable) may be connected to electrodes of a first polarity so that the current collector 1300 and the pole unit (represented by the current collecting unit 1321) conducts electric current to and from these electrodes. There may be provided another current collector (similar to arrangements as shown in FIG. 6, 7 and 69B; not shown in FIG. 74A and 74B) that is welded to third and fourth electrode tabs that are connected to electrodes of a second polarity that is different from (opposite to) the first polarity. The first polarity may be positive polarity, and the second polarity may be negative polarity. Alternatively, the first polarity may be negative polarity, and the second polarity may be positive polarity.

It is noted that any of the examples of the current collector, electrode tabs and pole unit as described herein may be applicable to either of the arrangement as shown in FIG. 74A or FIG. 74B.

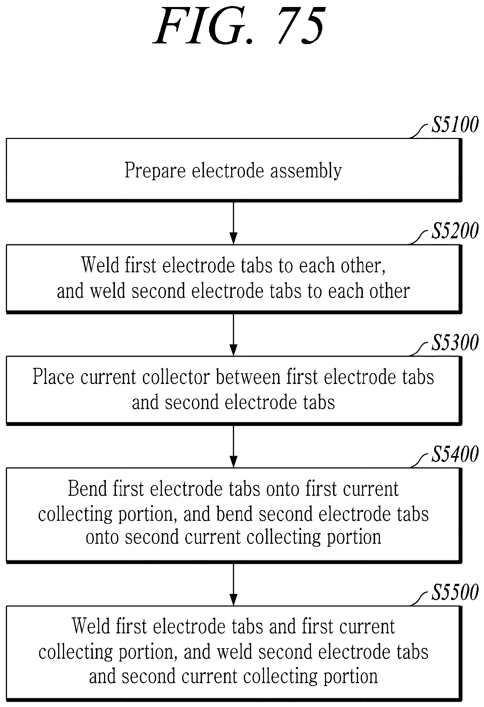

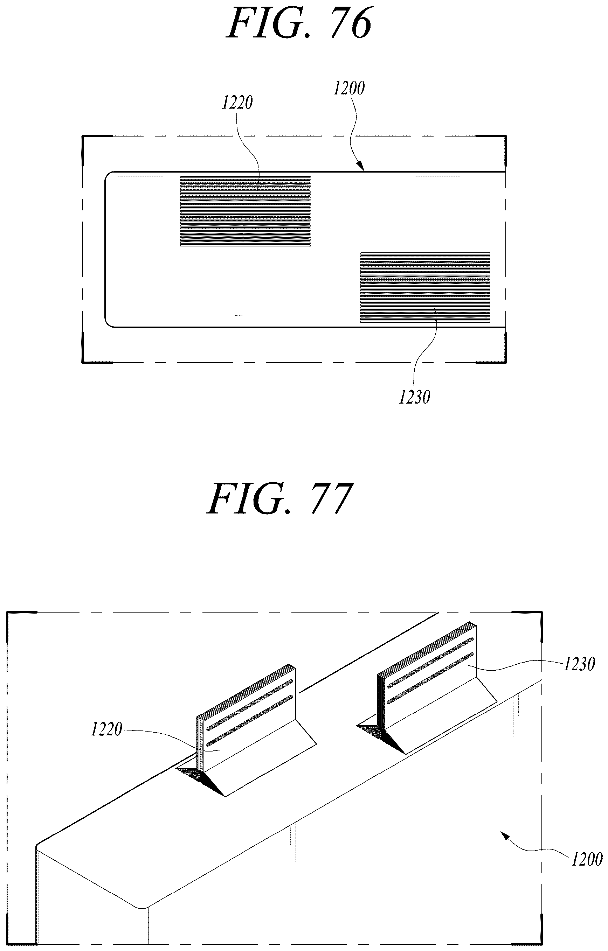

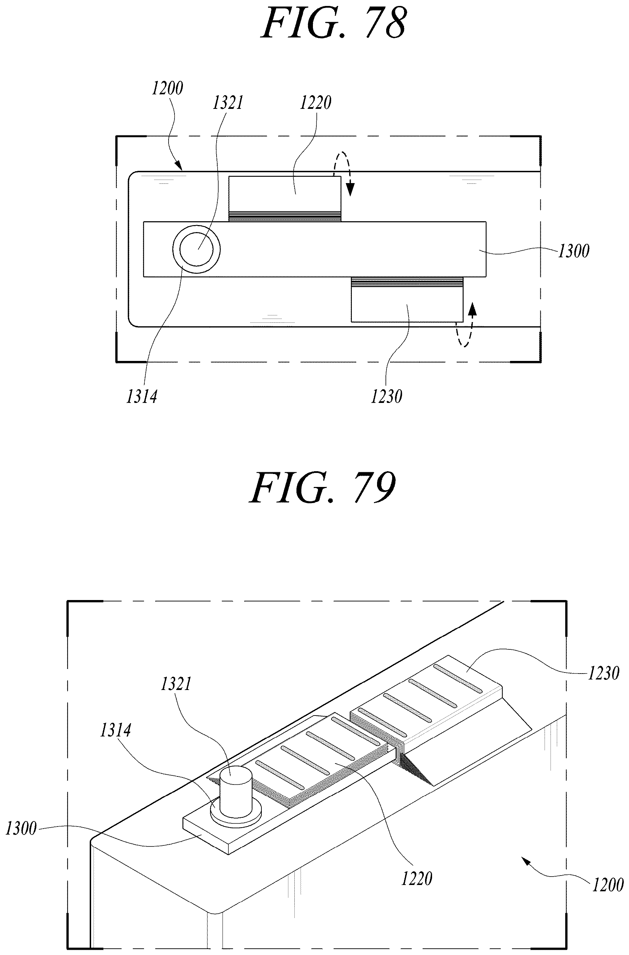

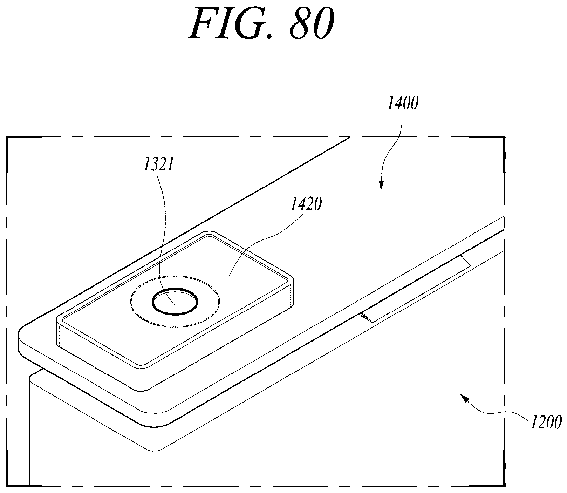

FIG. 75 is a flowchart illustrating a method of manufacturing the secondary battery according to an example. FIG. 76 is a view illustrating the plurality of first electrode tabs and the plurality of second electrode tabs that are separately grouped according to an example. FIG. 77 is a view illustrating the plurality of first electrode tabs that are primarily welded and the plurality of second electrode tabs that are primarily welded according to an example. FIG. 78 is a view illustrating the current collector disposed between the plurality of first electrode tabs and the plurality of second electrode tabs according to an example. FIG. 79 is a view illustrating the first and second electrode tabs welded to the current collector according to an example. FIG. 80 is a view illustrating the cap assembly coupled to the electrode assembly according to an example.

With reference to FIG. 75, a method, particularly a secondary battery manufacturing method, may be provided. The method comprises preparing (S5100) an electrode assembly. The electrode assembly may comprise any one, some or all of the features of an electrode assembly as described herein, unless indicated otherwise or technically inappropriate. The method may comprise welding (S5200) first electrode tabs to each other and/or welding second electrode tabs to each other. This method step may apply to an example where the first and second electrode tabs are each provided in a plurality. This method step may be thus optional, as the first electrode tab and the second electrode tab may be provided as single tabs as described above. In particular, any one of the first and second electrode tabs may comprise any one, some or all of the respective features described herein, unless indicated otherwise or technically inappropriate. The method may comprise welding (S5300) arranging a current collector between the first electrode tab(s) and the second electrode tab(s). This arrangement of the current collector may be as described herein with respect to drawings, e.g., FIG. 2, 6, 8, 9, 69A, 69B, 72A, 72B, 74A, 74B, 76, 78 and 79. The method may comprise bending (S5400) the first and second electrode tabs toward the upper surface of the current collector. The bending may be as illustrated in FIG. 78. The result of the bending may be as shown in FIG. 2, 6, 8, 9, 69A, 69B, 72A, 72B, 74A, 74B, 76 and 79. The method may comprise welding (5500) the current collector to the first and second electrode tabs (or welding the first and second electrode tabs to the current collector).

As illustrated in FIG. 75, in order to manufacture a secondary battery, the electrode assembly is prepared (S5100). The electrode assembly 1200 includes the electrode portion 1210, and the plurality of first electrode tabs 1220 and the plurality of second electrode tabs 1230 that are formed at one end of the electrode portion.

The plurality of first electrode tabs 1220 and the plurality of second electrode tabs 1230 are disposed at one end of the electrode portion 1210. When the plurality of electrode elements that form the electrode portion are stacked, the plurality of first electrode tabs 1220 overlap each other at the first position, and the plurality of second electrode tabs 1230 overlap each other at the second position. That is, the plurality of first electrode tabs 1220 are grouped at the first position, and the plurality of second electrode tabs 1230 are grouped at the second position. The first position and the second position are spaced apart from each other on the electrode elements, and the plurality of first electrode tabs 1220 that are grouped and the plurality of second electrode tabs 1230 that are grouped may be spaced apart from each other in the width direction and the longitudinal direction of the electrode assembly 1200. As illustrated in FIG. 76, the plurality of first electrode tabs 1220 that are grouped may be disposed at one end of the electrode assembly 1200 in the width direction, and the plurality of second electrode tabs 1230 that are grouped may be disposed at a remaining end of the electrode assembly 1200 in the width direction.

Next, the plurality of first electrode tabs 1220 are welded to each other, and the plurality of second electrode tabs 1230 are welded to each other (S5200). The plurality of first electrode tabs 1220 and the plurality of second electrode tabs 1230 are aligned to be spaced apart from each other in the longitudinal direction of the electrode assembly 1200. The plurality of electrode tabs that are grouped and aligned are primarily welded such that the first electrode tabs 1220 are welded to each other and the second electrode tabs 1230 are welded to each other (see FIG. 77).

The current collector 1300 is disposed between the plurality of first electrode tabs 1220 and the plurality of second electrode tabs 1230 that are (primarily, first) welded (S5300). In order to connect the plurality of electrode tabs 1220 and 1230 to the current collector 1300, in this example, the electrode tabs 1220 and 1230 having the same polarity are divided into two groups and welded to the current collector 1300.

At the one end of the electrode portion 1210, a space is formed between the plurality of first electrode tabs 1220 and the plurality of second electrode tabs 1230 that are primarily welded. In order to facilitate placement of the current collector 1300, the plurality of first electrode tabs 1220 that are welded and the plurality of second electrode tabs 1230 that are welded may be respectively bent toward outer sides of the electrode assembly 1200. The current collector 1300 is placed between the first electrode tabs 1220 and the second electrode tabs 1230.

The first electrode tabs 1220 and the second electrode tabs 1230 are each bent toward the upper surface of the current collector 1300 (S5400). The plurality of first electrode tabs 1220 are bent toward an upper surface of the first current collecting portion 1311 of the current collector 1300. The plurality of second electrode tabs 1230 are bent toward an upper surface of the second current collecting portion 1312 of the current collector 1300. The plurality of first electrode tabs 1220 and the plurality of second electrode tabs 1230 are bent in opposite directions.

The current collector 1300 is welded to the first and second electrode tabs 1220 and 1230 placed on the current collector 1300 (S5500). The plurality of first electrode tabs 1220 are welded to the first current collecting portion 1311, and the plurality of second electrode tabs 1230 are welded to the second current collecting portion 1312. The welding may be performed from above the plurality of first electrode tabs 1220 and the plurality of second electrode tabs 1230. The welding may be performed using ultrasonic welding, laser welding, or the like.

During welding, in the first current collecting portion 1311 of the current collector 1300, the welding may be performed toward the first current collecting portion 1311 from the plurality of first electrode tabs 1220. In the second current collecting portion 1312 of the current collector 1300, the welding may be performed toward the second current collecting portion 1312 from the plurality of second electrode tabs 1230.

In this example, after the plurality of electrode tabs are primarily welded such that the first electrode tabs 1220 are welded to each other and the second electrode tabs 1230 are welded to each other, the electrode tabs are welded to the current collector 1300. However, in other examples, the plurality of electrode tabs 1220 and 1230 may be bent onto and directly welded to the current collector 1300 without performing the primary welding.

The electrode assembly 1200 to which the current collector 1300 is welded is accommodated in the case 1100. The cap assembly 1400 seals the opening of the case 1100. As illustrated in FIG. 80, after the current collecting protrusion 1321 is inserted into the through hole of the terminal 1420 of the cap assembly 1400, the outer circumferential surface of the end of the current collecting protrusion 1321 may be welded to the inner circumferential surface of the end of the through hole.

In the case where the current collector is welded to upper portions of the electrode tabs, the current collector is required to be relatively thin to transmit heat to the electrode tabs located under the current collector, thus leading to deterioration in durability. However, according to the present disclosure, since the plurality of electrode tabs are bent onto and welded to the current collector, a sufficient thickness of the current collector may be secured, and the electrode tabs may be more efficiently welded to the current collector.

Furthermore, in the present disclosure, since the plurality of electrode tabs having the same polarity are divided into two groups and welded, the electrode tabs may be stably welded without any unwelded portions.

According to the present disclosure, because electrode tabs are positioned on the current collector 1300 and welding is performed from above the electrode tabs, the current collector 1300 may have a relatively large thickness, and a risk of damage to the separators provided in the electrode portion may be reduced. Accordingly, durability of the secondary battery may also be improved.

A battery module may be configured by including a plurality of secondary batteries as disclosed herein. The plurality of secondary batteries may be connected to each other by a bus bar or the like to configure the battery module. In addition, a battery pack may be configured by including a plurality of battery modules. The battery pack may be configured by disposing the plurality of battery modules in an upper pack housing and a lower pack housing constituting a pack housing. In addition, the battery pack may be provided in a vehicle that transports or moves loads or people, or that moves while performing operations. Such a vehicle may include bicycles, heavy equipment, agricultural and fishery equipment, automobiles, buses, and airplanes. Here, the automobile may be an electric vehicle, a hybrid vehicle, or a plug-in hybrid vehicle. The automobile may include a four-wheel automobile or a two-wheel automobile. The vehicle may operate by receiving power from the battery pack.

A secondary battery according to an example may be configured such that welding of electrode tabs to a current collector does not affect an electrode assembly.

In addition, the secondary battery according to an example may be configured such that a large number of electrode tabs may be stably welded to the current collector when the electrode tabs and the current collector are welded.

Furthermore, the secondary battery according to an example may be configured such that a current collecting protrusion may be stably coupled to the current collector.

In addition, the secondary battery according to an example may be configured such that an assembly process may be simplified.

While the present disclosure has been described with respect to the specific examples, it will be apparent to those skilled in the art that various changes or modifications of the present disclosure are possible by adding, changing, or deleting components without departing from the spirit of the present disclosure as defined in the following claims. It should be noted that these changes or modifications also fall within the scope of the present disclosure.

In view of the above disclosure, the present invention may be implemented according to the following itemized examples.

According to item 1, a secondary battery is provided, comprising: an electrode assembly comprising an electrode portion, and a plurality of electrode tabs formed on one end of the electrode portion; and a current collector disposed on an upper end of the electrode portion and welded to the electrode tabs, wherein the current collector comprises: a current collecting unit comprising a first current collecting portion welded to a plurality of first electrode tabs, a second current collecting portion welded to a plurality of second electrode tabs, and a connection portion connected to the first current collecting portion and formed with an opening, the current collecting unit including a recessed region formed in a lower surface thereof; and a pole unit coupled to the current collecting unit, and comprising a current collecting protrusion and a support portion coupled to a lower end of the current collecting protrusion.

According to item 2, the secondary battery according to item 1 is provided, wherein the opening of the connection portion and the recessed region are integrated with each other.

According to item 3, the secondary battery according to item 1 or 2 is provided, wherein a stopper formed with an opening is disposed on the connection portion.

According to item 4, the secondary battery according to any one of the preceding items and particularly according to item 3 is provided, wherein the support portion is received in the recessed region.

According to item 5, the secondary battery according to any one of the preceding items and particularly according to item 4 is provided, wherein the lower surface of the current collecting unit is flush with a lower surface of the support portion.

According to item 6, the secondary battery according to any one of the preceding items and particularly according to item 4 is provided, wherein an upper surface of the stopper is flush with an upper surface of the support portion.

According to item 7, the secondary battery according to any one of the preceding items and particularly according to item 3 is provided, wherein the stopper has a square plate shape, a rectangular plate shape, or a disc shape.

According to item 8, the secondary battery according to any one of the preceding items and particularly according to item 3 is provided, wherein the stopper is integrally formed with the connection portion.

According to item 9, the secondary battery according to any one of the preceding items and particularly according to item 3 is provided, wherein a height of the stopper ranges from 30% to 50% of a height of an end of the current collecting unit.

According to item 10, the secondary battery according to any one of the preceding items and particularly according to item 3 is provided, wherein a height of the stopper ranges from 1% to 5% of a thickness of the electrode assembly.

According to item 11, the secondary battery according to any one of the preceding items and particularly according to item 4 is provided, wherein a depth of the recessed region ranges from 30% to 50% of a height of an end of the current collecting unit.

According to item 12, the secondary battery according to any one of the preceding items and particularly according to item 4 is provided, wherein the recessed region is formed under the stopper, and wherein a cross-sectional area of the recessed region is smaller than a cross-sectional area of the stopper.

According to item 13, the secondary battery according to any one of the preceding items and particularly according to item 12 is provided, wherein a depth of the recessed region is equal to a height of an end of the current collecting unit.

According to item 14, the secondary battery according to any one of the preceding items and particularly according to item 12 is provided, wherein an outer circumferential surface of the current collecting protrusion and an inner circumferential surface of the opening of the stopper are spaced apart from each other by a predetermined distance.

According to item 15, the secondary battery according to any one of the preceding items and particularly according to item 12 is provided, wherein an outer circumferential surface of the support portion and an inner circumferential surface of the recessed region are spaced apart from each other by a predetermined distance.

According to item 16, the secondary battery according to any one of the preceding items and particularly according to item 1 is provided, wherein the pole unit further comprises a flange formed between the current collecting protrusion and the support portion.

According to item 17, the secondary battery according to any one of the preceding items and particularly according to item 16 is provided, wherein the support portion is inserted into the opening.

According to item 18, the secondary battery according to any one of the preceding items and particularly according to item 12 or 17 is provided, wherein a lower surface of the support portion is positioned above the lower surface of the current collecting unit.

According to item 19, the secondary battery according to any one of the preceding items and particularly according to item 16 is provided, wherein the flange has a square plate shape, a rectangular plate shape, or a disc shape.

According to item 20, the secondary battery according to any one of the preceding items and particularly according to item 16 is provided, wherein the current collecting protrusion, the support portion, and the flange are integrally formed.

According to item 21, the secondary battery according to any one of the preceding items and particularly according to item 16 is provided, wherein a height of the flange ranges from 30% to 50% of a height of an end of the current collecting unit.

According to item 22, the secondary battery according to any one of the preceding items and particularly according to item 16 is provided, wherein a height of the flange ranges from 1% to 5% of a thickness of the electrode assembly.

According to item 23, the secondary battery according to any one of the preceding items and particularly according to item 5 is provided, wherein a welding region is formed on a periphery of the lower surface of the support portion.

According to item 24, the secondary battery according to any one of the preceding items and particularly according to item 18 is provided, wherein a welding region is formed on a periphery of the lower surface of the support portion.

According to item 25, the secondary battery according to any one of the preceding items and particularly according to item 1 or 16 is provided, wherein a material of the current collecting unit is identical to a material of the pole unit.

According to item 26, the secondary battery according to any one of the preceding items and particularly according to item 1 or 16 is provided, wherein a material of the current collecting unit is different from a material of the pole unit.

According to item 27, the secondary battery according to any one of the preceding items and particularly according to item 1 or 16 is provided, wherein a nickel plating layer is formed on an upper end of the current collecting protrusion.

According to item 28, a secondary battery is provided, comprising: an electrode assembly comprising an electrode portion and a plurality of electrode tabs formed on one end of the electrode portion; and a current collector disposed on an upper end of the electrode portion and welded to the electrode tabs, wherein the current collector comprises: a current collecting unit comprising a first current collecting portion welded to a plurality of first electrode tabs, a second current collecting portion welded to a plurality of second electrode tabs, and a connection portion connected to the first current collecting portion and including a seating region formed in an upper surface thereof; and a pole unit coupled to the current collecting unit and comprising a current collecting protrusion.

According to item 29, the secondary battery according to item 28 is provided, wherein the seating region is recessed downward from an upper surface of the connection portion, and a depth of the seating region ranges from 30% to 50% of a height of an end of the current collecting unit.

According to item 30, the secondary battery according to item 28 or 29 is provided, wherein the pole unit further comprises a support portion coupled to a lower end of the current collecting protrusion and seated in the seating region.

According to item 31, the secondary battery according to any one of items 28 to 30 is provided, wherein a height by which the support portion protrudes from an upper surface of the current collecting unit ranges from 1% to 5% of a thickness of the electrode assembly.

According to item 32, the secondary battery according to any one of items 28 to item 31 is provided, wherein the support portion has a square plate shape, a rectangular plate shape, or a disc shape.

According to item 33, the secondary battery according to any one of items 28 to 32 is provided, wherein the connection portion protrudes from and is connected to one side of the first current collecting portion.

According to item 34, the secondary battery according to any one of items 28 to 33 is provided, wherein an upper surface of the seating region is flush with an upper surface of the connection portion and is coupled to a lower surface of the current collecting protrusion.

According to item 35, the secondary battery according to any one of items 28 to 34 is provided, wherein a height by which the connection portion protrudes from the first current collecting portion ranges from 1% to 5% of a thickness of the electrode assembly.

According to item 36, the secondary battery according to any one of items 28 to 35 is provided, wherein a surface to which the connection portion and the first current collecting portion are connected is inclined.

According to item 37, the secondary battery according to any one of items 28 to 36 is provided, wherein a thickness of the connection portion is equal to a thickness of each of the first current collecting portion and the second current collecting portion.

According to item 38, the secondary battery according to any one of items 28 to 37 is provided, wherein a welding region is formed in a lower surface of the seating region.

According to item 39, the secondary battery according to any one of items 28 to 38 is provided, wherein a material of the current collecting unit is identical to a material of the pole unit.

According to item 40, the secondary battery according to any one of items 28 to 39 is provided, wherein a material of the current collecting unit is different from a material of the pole unit.

According to item 41, the secondary battery according to any one of items 28 to 40 is provided, wherein a nickel plating layer is formed on an upper end of the current collecting protrusion.

According to item 42, the secondary battery according to any one of the preceding items is provided, wherein, in the current collecting unit, the connection portion is connected to one side of the first current collecting portion, and the second current collecting portion is connected to a remaining side of the first current collecting portion.

According to item 43, the secondary battery according to any one of the preceding items is provided, wherein in the current collecting unit, the connection portion is disposed between the first current collecting portion and the second current collecting portion.

According to item 44, the secondary battery according to any one of the preceding items is provided, wherein in the current collecting unit, the first current collecting portion is connected to an upper end of one side of the connection portion, and the second current collecting portion is connected to a lower end of the one side of the connection portion.

Further embodiment examples of the present invention may be given as follows:

According to an aspect, a secondary battery is provided, comprising an electrode assembly and a current collector. The electrode assembly includes an electrode portion and a plurality of electrode tabs formed at one end of the electrode portion. The current collector is disposed on an upper end of the electrode portion and welded to the electrode tabs. The current collector includes a current collecting unit including a first current collecting portion welded to a plurality of first electrode tabs, a second current collecting portion welded to a plurality of second electrode tabs, and a connection portion connected to the first current collecting portion and having an opening formed therein; and pole unit coupled to the current collecting unit and having a current collecting protrusion and a support portion coupled to a lower end of the current collecting protrusion.

According to an example, a recessed region is formed on a lower surface of the current collecting unit.

According to an example, the support portion is received in the recessed region.

According to an example, the support portion is inserted into the opening of the connection portion.

According to an example, a stopper is disposed on the connection portion.

According to an example, a lower surface of the current collecting unit and a lower surface of the support portion form the same plane.

According to an example, a lower surface of the support portion is positioned above a lower surface of the current collecting unit.

According to an example, an upper surface of the stopper and an upper surface of the support portion form the same plane.

According to an example, the stopper has a shape of a square plate, a rectangular plate, or a disc.

According to an example, the stopper is integrally formed with the connection portion.

According to an example, a height of the stopper is 30 to 50% of a height of an end portion of the current collecting unit.

According to an example, a height of the stopper is 1 to 5% of a thickness of the electrode assembly.

According to an example, a height of the stopper is determined by the following Equation:
$h 2 = A \times 0.005 \times B / C ,$
where h2 is the height of the stopper, A is the thickness of the electrode assembly, B is the length of the electrode tabs, and C is the number of groups of electrode tabs connected to electrodes of a same polarity, wherein electrode tabs at the same position are aligned with one another in each of the groups.

According to an example, a depth of the recessed region is 30 to 50% of a height of an end portion of the current collecting unit.

According to an example, the recessed region is formed below the stopper, and a cross-sectional area of the recessed region is smaller than a cross-sectional area of the stopper.

According to an example, a depth of the recessed region is the same as a height of an end portion of the current collecting unit.

According to an example, an outer circumferential surface of the current collecting protrusion and an inner circumferential surface of an opening of the stopper are spaced apart from each other by a predetermined distance.

According to an example, an outer circumferential surface of the support portion and an outer circumferential surface of the recessed region are spaced apart from each other by a predetermined distance.

According to an example, the pole unit further includes a flange between the current collecting protrusion and the support portion.

According to an example, a lower surface of the current collecting unit and a lower surface of the support portion form the same plane.

According to an example, a lower surface of the support portion is positioned above a lower surface of the current collecting unit.

According to an example, the flange has a shape of a square plate, a rectangular plate, or a disc.

According to an example, a cross-sectional area of the flange is greater than a cross-sectional area of the support portion.

According to an example, the current collecting protrusion, the support portion, and the flange are integrally formed.

According to an example, a height of the flange is 100 to 120% of a height of an end portion of the current collecting unit.

According to an example, a height of the flange is 1 to 5% of a thickness of the electrode assembly.

According to an example, a height of the flange is determined by the following equation:
$h 2 = A \times 0.005 \times B / C ,$
where h2 is the height of the flange, A is the thickness of the electrode assembly, B is the length of the electrode tabs, and C is the number of groups of electrode tabs connected to electrodes of a same polarity, wherein electrode tabs at the same position are aligned with one another in each of the groups.

According to an example, a depth of the recessed region is 5 to 15% of a height of an end portion of the current collecting unit.

According to an example, a diameter of the recessed region is greater than a diameter of the opening.

According to an example, a diameter of the recessed region is smaller than a diameter of the opening.

According to an example, the pole unit further includes an extension portion protruding from a lower surface of the support portion.

According to an example, a cross-sectional area of the extension portion is smaller than a cross-sectional area of the support portion.

According to an example, a lower surface of the extension portion is located on the same plane as a lower surface of the current collecting unit.

According to an example, a lower surface of the extension portion is positioned above a lower surface of the current collecting unit.

According to an example, the current collecting protrusion, the support portion, the flange, and the extension portion are integrally formed.

According to an example, a stepped surface is formed at an edge of the lower surface of the support portion.

According to an example, the stepped surface of the support portion is positioned above a lower surface of the current collecting unit.

According to an example, the stepped surface forms the same plane as an upper surface of the recessed region.

According to an example, the stepped surface at the edge of the lower surface of the support portion is supported by the current collecting unit.

According to an example, a welding region is formed at an outer side of the stepped surface.

According to an example, a height of the support portion is greater than a height of the current collecting unit.

According to an example, a height by which the support portion protrudes from an upper surface of the current collecting unit is 1 to 5% of a thickness of the electrode assembly.

According to an example, a height by which the support portion protrudes from an upper surface of the current collecting unit is determined by the following equation:
$h 2 = A \times 0.005 \times B / C ,$
where h2 is the height by which the support portion protrudes from the upper surface of the current collecting unit, A is the thickness of the electrode assembly, B is the length of the electrode tabs, and C is the number of groups of electrode tabs connected to electrodes of a same polarity, wherein electrode tabs at the same position are aligned with one another in each of the groups.

According to an example, the support portion has a shape of a square plate, a rectangular plate, or a disc.

According to an example, an inner lower surface of the opening is chamfered.

According to an example, the current collecting protrusion has a form in which two concentric cylinders having different diameters are integrally formed.

According to an example, an upper portion of the current collecting protrusion has a diameter smaller than a diameter of a lower portion thereof.

According to a further aspect, a secondary battery is provided, comprising an electrode assembly and a current collector. The electrode assembly includes an electrode portion and a plurality of electrode tabs formed at one end of the electrode portion. The current collector is disposed on an upper end of the electrode portion and welded to the electrode tabs. The current collector includes a current collecting unit including a first current collecting portion welded to a plurality of first electrode tabs, a second current collecting portion welded to a plurality of second electrode tabs, and a connection portion connected to the first current collecting portion and having a seating region formed on an upper surface thereof; and a pole unit coupled to the current collecting unit and having a current collecting protrusion.

According to an example, the seating region is recessed downward from the upper surface of the connection portion, and a depth of the seating region is 30 to 50% of a height of an end portion of the current collecting unit.

According to an example, the pole unit further includes a support portion coupled to a lower end of the current collecting protrusion and seated in the seating region.

According to an example, a height by which the support portion protrudes from an upper surface of the current collecting unit is 1 to 5% of a thickness of the electrode assembly.

According to an example, a height by which the support portion protrudes from an upper surface of the current collecting unit is determined by the following equation:
$h 2 = A \times 0.005 \times B / C ,$
where h2 is the height of the stopper, A is the thickness of the electrode assembly, B is the length of the electrode tabs, and C is the number of groups of electrode tabs connected to electrodes of a same polarity, wherein electrode tabs at the same position are aligned with one another in each of the groups.

According to an example, the connection portion protrudes and is connected from the other side of the first current collecting portion.

According to an example, the seating region forms the same plane as an upper surface of the connection portion and is coupled to a lower surface of the current collecting protrusion.

According to an example, a height by which the connection portion protrudes from the first current collecting portion is 1 to 5% of a thickness of the electrode assembly.

According to an example, a height by which the connection portion protrudes from the first current collecting portion is determined by the following equation:
$h 2 = A \times 0.005 \times B / C$
where h2 is the height of the stopper, A is the thickness of the electrode assembly, B is the length of the electrode tabs, and C is the number of groups of electrode tabs connected to electrodes of a same polarity, wherein electrode tabs at the same position are aligned with one another in each of the groups.

According to an example, a surface at which the connection portion and the first current collecting portion are connected is inclined.

According to an example, a thickness of the connection portion is the same as a thickness of the first current collecting portion and the second current collecting portion.

According to an example, a welding region is formed on a lower surface of the seating region.

According to an example, a material of the current collecting unit and a material of the pole unit are the same.

According to an example, a material of the current collecting unit and a material of the pole unit are different.

According to an example, a nickel plating layer is formed on an upper end of the current collecting protrusion.

According to an example, the plurality of first electrode tabs are bent toward an upper surface of the first current collecting portion, and the plurality of second electrode tabs are bent toward an upper surface of the second current collecting portion in a direction opposite to a direction in which the plurality of first electrode tabs are bent.

According to an example, a separation distance between the first electrode tabs and the second electrode tabs is 5 to 15% of a length of the current collector.

According to an example, the plurality of first electrode tabs are welded to the first current collecting portion, and the plurality of second electrode tabs are welded to the second current collecting portion.

According to an example, the secondary battery further comprises a case in which the electrode assembly is accommodated and having an opening formed at one end thereof.

According to an example, the secondary battery further comprises a cap assembly sealing the opening of the case and including a cap plate and a terminal, wherein the current collecting protrusion is inserted into a through-hole of the terminal.

According to an example, the current collecting protrusion and the through-hole are welded to each other at an end of the current collecting protrusion.

According to an example, in the current collecting unit, the connection portion is connected to one side of the first current collecting portion, and the second current collecting portion is connected to the other side of the first current collecting portion.

According to an example, in the current collecting unit, the connection portion is disposed between the first current collecting portion and the second current collecting portion.

According to an example, in the current collecting unit, the first current collecting portion is connected to an upper end of one side of the connection portion, and the second current collecting portion is connected to a lower end of the one side of the connection portion.

## Claims

1. A secondary battery comprising:
an electrode assembly comprising electrode tabs protruding outwardly; and
a current collector disposed on the electrode assembly,
wherein a first electrode tab and a second electrode tab of the electrode tabs are coupled to the current collector and spaced apart from each other on the current collector,
a pole unit in physical contact with the current collector, the pole unit extending so as to conduct electric current in a direction that is different from a direction of electric current flowing along a path between the electrode tabs and the pole unit.

2. The secondary battery of claim 1, wherein the current collector comprises:
a first current collecting portion onto which the first electrode tab is welded;
a second current collecting portion onto which the second electrode tab is welded, wherein the first and second current collecting portions are spaced apart from each other, and
an opening through which the pole unit extends,
wherein a distance from the first current collecting portion to the pole unit is different from a distance from the second current collecting portion to the pole unit.

3. The secondary battery of claim 2,
wherein the pole unit comprises a current collecting protrusion that extends in a direction away from the current collector and a support portion that extends outwardly,
wherein the current collector comprises a recessed region formed in a lower surface thereof around the opening, the recessed region being configured to receive the support portion of the pole unit.

4. The secondary battery of claim 3,
wherein the support portion has a polygonal, oval or circular outline, when viewed in a direction parallel to said direction in which the pole unit extends through the opening.

5. The secondary battery of claim 3 or 4,
wherein the current collector further comprises a stopper provided around the opening so as to surround the pole unit protruding from the opening.

6. The secondary battery according to claim 5, wherein an upper surface of the stopper is flush with an upper surface of the support portion.

7. The secondary battery according to claim 5 or 6, wherein the stopper is integrally formed with the current collector.

8. The secondary battery according to any one of claims 5 to 7,
wherein a height of the stopper ranges from 30% to 50% of a thickness of the current collector; and/or
wherein a height of the stopper ranges from 1% to 5% of a thickness of the electrode assembly; and/or
wherein a height of the stopper ranges from 15% to 35% of a height of the pole unit; and/or
wherein a height (h2) of the stopper satisfies the following equation: $h 2 = A \times 0.005 \times B / C ,$
where A is a thickness of the electrode assembly, B is a length of the electrode tabs, and C is the number of groups of electrode tabs connected to electrodes of a same polarity, wherein electrode tabs at the same position are aligned with one another in each of the groups.

9. The secondary battery according to any one of claims 5 to 8,
wherein a cross-sectional area of the recessed region is smaller than a cross-sectional area of the stopper.

10. The secondary battery according to any one of claims 3 to 9, wherein an outer circumferential surface of the support portion of the pole unit and an inner circumferential surface of the recessed region are spaced apart from each other by a predetermined distance.

11. The secondary battery according to any one of claims 3 to 10, wherein the pole unit further comprises a flange formed between the current collecting protrusion and the support portion and extending further outward than the support portion.

12. The secondary battery according to claim 11, wherein the flange has a square plate shape, a rectangular plate shape, or a disc shape.

13. The secondary battery according to claim 11 or 12, wherein the current collecting protrusion, the support portion, and the flange are made of the same material or integrally formed.

14. The secondary battery according to any one of claims 11 to 13,
wherein a height of the flange ranges from 30% to 50% of a thickness of the current collector; and/or
wherein a height of the flange ranges from 1% to 5% of a thickness of the electrode assembly.

15. The secondary battery according to any one of claims 3 to 14, wherein the support portion is arranged in the opening.

16. The secondary battery according to any one of claims 3 to 15, wherein the support portion is arranged so that its lower surface is positioned above the lower surface of the current collector with respect to a thickness direction of the current collector.

17. The secondary battery according to any one of claims 3 to 16, wherein a welding region is formed on a periphery of the lower surface of the support portion.

18. The secondary battery according to any one of claims 3 to 17, wherein a nickel plating layer is formed on an upper end of the current collecting protrusion.

19. The secondary battery according to any one of the claims,
wherein a depth of the recessed region ranges from 30% to 50% of a thickness of the current collector, or
wherein a depth of the recessed region is equal to a height of an end of the current collector.

20. The secondary battery of any one of the preceding claims,
wherein the current collector is provided as a plate having a first surface and a second surface that are opposite each other, wherein the current collector is arranged so that the second surface faces the electrode assembly,
wherein the first electrode tab and/or the second electrode tab is/are coupled to the first surface of the current collector.

21. The secondary battery of any one of the preceding claims,
wherein the first electrode tab and the second electrode tab are attached to the current collector on the same side with respect to the pole unit.

22. The secondary battery of any one of the preceding claims,
wherein a surface of the current collector facing the electrode assembly is flush with a surface of the pole unit facing the electrode assembly.

23. The secondary battery according to any one of claims 2 to 22, wherein an outer circumferential surface of the pole unit and an inner circumferential surface of the opening of the current collector are spaced apart from each other by a predetermined distance.

24. The secondary battery according to any one of the preceding claims, wherein the current collector and the pole unit are made of the same material, or made of different materials.

25. The secondary battery of any one of the preceding claims,
wherein the current collector comprises a seating region formed on an upper surface thereof,
wherein the pole unit is arranged in and/or on the seating region.

26. The secondary battery according to claim 25,
wherein the seating region is recessed downward from a surface of the current collector which is opposite to the surface facing the electrode assembly,

27. The secondary battery of claim 26,
wherein a depth of the seating region ranges from 30% to 50% of a thickness of the current collector.

28. The secondary battery according to claim 27,
wherein the pole unit comprises a current collecting protrusion that extends in a direction away from the current collector and a support portion that extends perpendicular to said direction in which the current collecting protrusion extends,
wherein the support portion is seated in the seating region.

29. The secondary battery according to claim 28, wherein a height by which the support portion protrudes from said surface of the current collector ranges from 1% to 5% of a thickness of the electrode assembly.

30. The secondary battery according to any one of the preceding claims,
wherein the current collector comprises a body portion extending along a first plane and a connection portion extending along a second plane that is offset, optionally by 1% to 5% of a thickness of the electrode assembly, from the first plane in a direction away from the electrode assembly,
wherein the pole unit is attached to the connection portion.

31. The secondary battery according to claim 30,
wherein the pole unit is directly attached to the connection portion.

32. The secondary battery according to claim 30 or 31,
wherein at least one part of the current collector extending between the first plane and the second plane extends inclined with respect to the first plane.

33. The secondary battery according to any one of the preceding claims, wherein a thickness of the current collector is uniform.

34. The secondary battery according to any one of the preceding claims, wherein the pole unit is welded to the current collector from a side of the current collector facing the electrode assembly.

35. The secondary battery according to any one of the claims 2 to 34,
wherein the pole unit is attached to a portion of the current collector that is provided on a first side of the first current collecting portion, and the second current collecting portion is provided on a second side of the first current collecting portion opposite to the first side.

36. The secondary battery according to any one of the claims 2 to 34, wherein the pole unit is attached to a portion of the current collector disposed between the first current collecting portion and the second current collecting portion.

37. The secondary battery according to any one of the preceding claims,
wherein the current collector has a substantially U-shape having two generally parallel leg portions connected by a base portion, wherein the first electrode tab is attached to one of the two leg portions and the second electrode tab is attached to the other one of the two leg portions, and the pole unit is attached to a base portion.

38. The secondary battery according to any one of the preceding claims, further comprising:
a case in which the electrode assembly is accommodated, the case being open at one end or at two opposite ends; and
a cap assembly closing the one open end or one of the open ends of the case,
wherein the cap assembly includes a terminal exposed to the outside,
wherein a through-hole extends through the terminal, and the pole unit is inserted into the through-hole.

39. The secondary battery according to any one of the preceding claims,
wherein the pole unit and the terminal are welded together from outside along a periphery of the through-hole.
